# EUROPÄISCHE PATENTANMELDUNG

(11) **EP 3 482 964 A1**
(43) Veröffentlichungstag der Anmeldung: **15.05.2019**
(21) Anmeldenummer: 18202525.4
(22) Anmeldetag: 25.10.2018
(51) Int. Cl.: B41M 5/333, C08G 63/08, C09D 167/04, C08L 67/04, C08G 63/91

(54) **WÄRMEEMPFINDLICHES AUFZEICHNUNGSMATERIAL AUF BASIS VON PLA**

(30) Priorität: 13.11.2017 EP 17201458; 03.07.2018 EP 18181555
(71) Anmelder: Mitsubishi HiTec Paper Europe GmbH, 33699 Bielefeld (DE)
(72) Erfinder: Becerra Siabato, Diana Valentina, 33602 Bielefeld (DE); Wilke, Nora, 24943 Flensburg (DE); Schreer, Martin, 49326 Melle (DE); Michel, Armin Johannes, 3825 JL AMERSFOORT (NL); Neukirch, Neukirch, 24943 Flensburg (DE); Straßburg, Arne, 33613 Bielefeld (DE)
(74) Vertreter: Eisenführ Speiser

(57) **Zusammenfassung**

Die vorliegende Erfindung betrifft eine Beschichtungszusammensetzung zur Herstellung eines wärmeempfindlichen Aufzeichnungsmaterials oder wärmeempfindliche Aufzeichnungsschicht, umfassend einen oder mehrere Farbstoffvorläufer und einen oder mehrere Farbentwickler auf Basis von Milchsäure-Einheiten, sowie eine Streichfarbe zur Herstellung einer Beschichtungszusammensetzung oder einer wärmeempfindlichen Aufzeichnungsschicht, umfassend einen oder mehrere Farbstoffvorläufer und einen oder mehrere Farbentwickler auf Basis von Milchsäure-Einheiten, und weiterhin ein wärmeempfindliches Aufzeichnungsmaterial, umfassend ein Trägersubstrat und eine erfindungsgemäße wärmeempfindliche Aufzeichnungsschicht, sowie ein Verfahren zur Herstellung dieses wärmeempfindlichen Aufzeichnungsmaterials und die Verwendung dieses wärmeempfindlichen Aufzeichnungsmaterials. Die vorliegende Erfindung betrifft hierbei auch eine solche Beschichtungszusammensetzung oder wärmeempfindliche Aufzeichnungsschicht, die ferner mindestens einen weiteren, nicht auf Milchsäure-Einheiten basierten Farbentwickler enthält. Schließlich betrifft die Erfindung auch eine Verbindung auf Basis von Milchsäure-Einheiten, vorzugsweise zur Verwendung als Farbentwickler im vorstehenden Zusammenhang, eine solche Verwendung selbst, und ein Verfahren zur Herstellung dieser Verbindung auf Basis von Milchsäure-Einheiten.

## Beschreibung

Die vorliegende Erfindung betrifft eine Beschichtungszusammensetzung zur Herstellung eines wärmeempfindlichen Aufzeichnungsmaterials oder wärmeempfindliche Aufzeichnungsschicht, umfassend einen oder mehrere Farbstoffvorläufer und einen oder mehrere Farbentwickler auf Basis von Milchsäure-Einheiten, sowie eine Streichfarbe zur Herstellung einer Beschichtungszusammensetzung oder einer wärmeempfindlichen Aufzeichnungsschicht, umfassend einen oder mehrere Farbstoffvorläufer und einen oder mehrere Farbentwickler auf Basis von Milchsäure-Einheiten, und weiterhin ein wärmeempfindliches Aufzeichnungsmaterial, umfassend ein Trägersubstrat und eine erfindungsgemäße wärmeempfindliche Aufzeichnungsschicht, sowie ein Verfahren zur Herstellung dieses wärmeempfindlichen Aufzeichnungsmaterials und die Verwendung dieses wärmeempfindlichen Aufzeichnungsmaterials. Die vorliegende Erfindung betrifft hierbei auch eine solche Beschichtungszusammensetzung oder wärmeempfindliche Aufzeichnungsschicht, die ferner mindestens einen weiteren, nicht auf Milchsäure-Einheiten basierten Farbentwickler enthält. Schließlich betrifft die Erfindung auch eine Verbindung auf Basis von Milchsäure-Einheiten, vorzugsweise zur Verwendung als Farbentwickler im vorstehenden Zusammenhang, eine solche Verwendung selbst, und ein Verfahren zur Herstellung dieser Verbindung auf Basis von Milchsäure-Einheiten.

Wärmeempfindliche Aufzeichnungsmaterialien sind seit vielen Jahren bekannt und erfreuen sich einer hohen Beliebtheit. Diese Beliebtheit ist unter anderem darauf zurückzuführen, dass ihre Verwendung mit dem Vorteil verbunden ist, dass die farbbildenden Komponenten in dem Aufzeichnungsmaterial selbst enthalten sind und daher toner- und farbkartuschenfreie Drucker verwendet werden können. Es ist daher nicht mehr nötig, Toner- oder Farbkartuschen zu erwerben bzw. aufzufüllen. So hat sich diese innovative Technologie insbesondere im öffentlichen Personenverkehr, bei öffentlichen bzw. kulturellen Veranstaltungen, im Transport- und Versandgewerbe, im Glücksspielgewerbe, bei Medizintechnik sowie im Einzelhandel weitgehend flächendeckend durchgesetzt.

In der näheren Vergangenheit sind jedoch vermehrt Bedenken im Hinblick auf die Umweltverträglichkeit insbesondere von bestimmten (Farb-)Entwicklern, auch als Farbakzeptoren bezeichnet, teilweise auch von Farbstoffvorläufern, mit denen die (Farb-)Entwickler bei Wärmezufuhr unter Ausbildung einer visuell erkennbaren Farbe reagieren, aufgekommen, die von der Industrie und insbesondere vom Handel nicht außer Acht gelassen werden können. So stehen in letzter Zeit bei den (Farb-)Entwicklern beispielsweise die gut bekannten und naturwissenschaftlich hervorragend untersuchten Komponenten, bekannt als Bisphenol-A (BPA) (2,2 bis (4-hydroxyphenyl)-Propan, 4,4'-(Propan-2,2-diyl)-diphenol, Dian, 4,4'-Isopropylidendi-phenol, 4-[2-(4-Hydroxy-phenyl)propan-2-yl]phenol; CAS® RN 80-05-7) und Bisphenol-S (BPS) (4,4'-Dihydroxydiphenylsulfon, Bis(4-hydroxyphenyl)sulfon, 4,4'-Sulfonyldiphenol; CAS® RN 80-09-1) verstärkt im Zentrum öffentlicher Kritik und werden deshalb mitunter ersetzt durch Pergafast® 201 (*N*-(4-Methylphenylsulfonyl)-*N*'*-*(3-(4-methylphenylsulfonyloxy)phenyl)harnstoff, der Firma BASF SE), D8, das ist 4-Hydroxy-4'-isopropoxydiphenylsulfon, *N*-[2-(3-Phenylureido)phenyl]benzolsulfonamid und *N*-{2-[(Phenylcarbamoyl)amino]phenyl}benzolsulfonamid.

Mit dem Ziel, wärmeempfindliche Aufzeichnungsmaterialien insbesondere in ihrer Verwendung als Tickets oder Lottoscheine hinsichtlich ihrer Resistenz gegenüber Umwelteinflüssen wie Wärme, Feuchtigkeit und Chemikalien zu verbessern, wurde die zugrunde liegende Chemie und die Herstellungstechnik zur Erzeugung solcher Aufzeichnungsmaterialien immer weiterentwickelt.

Um den Bedenken hinsichtlich der Umweltverträglichkeit insbesondere von bestimmten (Farb-)Entwicklern bzw. Farbakzeptoren Rechnung zu tragen gab es in jüngerer Zeit nun Bestrebungen, (Farb-)Entwicklern bzw. Farbakzeptoren auf Basis von natürlichen bzw. bioabbaubaren Verbindungen, z.B. auf Basis von Milchsäure oder Lactid oder Polymeren derselben wie Polymilchsäure oder Polylactid zu entwickeln.

So schlägt die EP 2574645 A1 einen neuartigen Farbakzeptor zur chemischen Reaktion mit einem Farbstoffvorläufer unter Ausbildung einer visuell erkennbaren Farbe vor, bei dem der Farbakzeptor durch Milchsäuremonomere aufgebaut ist, wobei darauf verwiesen wird, dass Polymilchsäure vollständig biologisch abbaubar sei. Da Polymilchsäure jeweils eine nicht nutzbare Hydroxylgruppe und auch nur eine mit den Farbvorstoffvorläufern als reaktiv anzusehende Carboxylgruppe an den beiden Enden der langen Polymermoleküle enthält, wird weiterhin vorgeschlagen, die Anzahl der nutzbaren Carboxylgruppen zu erhöhen, indem die Oligomere der Polymilchsäure n-fach um eine n-wertige Säure, bevorzugte zweiwertige Säure, gruppiert werden. Als Beispiele für eine solche bevorzugte zweiwertige Säure werden Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure, und Hexadecandisäure genannt.

Neben der Herausforderung, wärmeempfindliche Aufzeichnungsmaterialien zur Verfügung zu stellen, deren Farbentwickler zumindest weitgehend biologisch abbaubar und damit weitestgehend ökologisch unbedenklich sind, besteht hinsichtlich eines weiteren Aspekts die ständige Herausforderung, diese Aufzeichnungsmaterialien hinsichtlich ihrer Druckdichte zu optimieren. Hierunter ist insbesondere zu verstehen, ein wärmeempfindliches Aufzeichnungsmaterial durch Zusatz verstärkend wirkender Verbindungen so einzustellen, dass die Druckdichte (d.h. die erwünschte Schwärzung bzw. der Schwärzegrad) des Thermoausdrucks erhöht wird, verglichen mit einem nicht solche verstärkend wirkenden Verbindungen umfassenden wärmeempfindlichen Aufzeichnungsmaterial. Typischerweise bestimmt der Fachmann die Druckdichte eines Thermoausdrucks unter Verwendung eines Densitometers. Hierzu schlägt die EP 2784133 A1 eine Zusammensetzung zur Ausbildung einer visuell erkennbaren Farbe vor, umfassend oder bestehend aus den Komponenten
a) einen, zwei, drei oder mehr Farbentwickler(-Verbindungen), jeweils umfassend eine, zwei, drei oder mehr als drei strukturelle Einheiten der Formel (I) 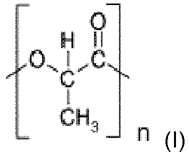 wobei n in jeder der strukturellen Einheiten der Formel (I) eine ganze Zahl größer 1 bedeutet, wobei die jeweilige Bedeutung unabhängig ist von der Bedeutung in gegebenenfalls vorhandenen weiteren strukturellen Einheiten der Formel (I),
b) einen, zwei, drei oder mehr Farbstoffvorläufer(-Verbindungen) zur Ausbildung der visuell erkennbaren Farbe durch Reaktion mit dem bzw. den Farbentwicklern,
   und
c) eine, zwei oder mehr Verbindungen, ausgewählt aus der Gruppe bestehend aus Zinksalzen, Ammoniumsalzen und Zinkoxid, vorzugsweise ausgewählt aus der Gruppe bestehend aus Zinkcarbonat, Zinkoxid, Ammoniumhydrogensulfat, Ammoniumnitrat, Ammoniumhydrogenphosphat und Zinkacetat.

Trotz der vorstehend beschriebenen, im Stand der Technik bisher erreichten Ergebnisse, besteht jedoch weiterhin ein ständiger Bedarf nach weiteren wärmeempfindlichen Aufzeichnungsmaterialien für die verschiedensten Verwendungen, wobei diese aufgrund hoher Absatzmengen in einem heftig umkämpften Markt zu geringen Produktionskosten herstellbar sein und deshalb über einen einfachen Aufbau verfügen müssen und - zumindest teilweise, vorzugsweise weitestgehend, besonders bevorzugt aber möglichst vollständig - biologisch abbaubar sein sollten. Eine weitere Herausforderung besteht darin - insbesondere wenn teilweise, vorzugsweise weitestgehend, besonders bevorzugt aber möglichst vollständig biologisch Abbaubarkeit gefordert ist, dass ein bedrucktes wärmeempfindliches Aufzeichnungsmaterial bei seinen typischen Verwendungen als Ticket, Eintrittskarte, Fahrschein, Parkschein u.ä. einer Vielzahl an unterschiedlichen Umgebungseinflüssen, wie Feuchtigkeit, Wärme oder Chemikalien, ausgesetzt werden. Zusätzlich soll die Zusammensetzung bzw. das wärmeempfindliche Aufzeichnungsmaterial unter wirtschaftlich vertretbarem Aufwand herstellbar sein.

So können wärmeempfindliche Aufzeichnungsmaterialien während der normalen Verwendung mit einer Vielzahl unterschiedlicher Substanzen in Kontakt gelangen, die die Beständigkeit des Thermoausdrucks beeinflussen können. Diese umfassen neben Wasser und organischen Lösungsmitteln auch Fette und Öle, die beispielsweise in Handpflegeprodukten enthalten sind und beim Berühren des wärmeempfindlichen Aufzeichnungsmaterials auf dieses übertragen werden können. Insbesondere die Beständigkeit gegenüber Fetten und Ölen ist daher sehr relevant.

Neben der Beständigkeit gegenüber Chemikalien, die mit den wärmeempfindlichen Aufzeichnungsmaterialien in Kontakt geraten können, müssen wärmeempfindliche Aufzeichnungsmaterialien auch eine hohe Beständigkeit gegenüber thermischen Einflüssen aufweisen. Auf der einen Seite sollte das wärmeempfindliche Aufzeichnungsmaterial energieschonend und leicht bedruckt werden können, um beispielsweise bei mobilen Anwendungen wenig Energie zu verbrauchen. Auf der anderen Seite sollte das bedruckte Bild nach dem Druck erhalten bleiben und bei der Einwirkung von Hitze sollte weder das bedruckte Bild ausbleichen, noch sollte sich der ungedruckte Hintergrund verfärben, was dazu führen würde, dass der Druck nicht mehr leserlich ist. Beispielsweise bei Parktickets, die nach dem Drucken hinter der Windschutzscheibe aufbewahrt werden und hierdurch im Sommer hohen Temperaturen und direkter Sonneneinstrahlung ausgesetzt werden, ist die thermische Beständigkeit äußerst relevant.

Auch bei Tickets wie Konzerttickets oder Flugtickets, die häufig eine lange Zeit im Voraus erstellt werden, oder bei Quittungen bzw. Kaufbelegen, die als Kaufnachweis über eine lange Garantiezeit benötigt werden, ist die Beständigkeit des wärmeempfindlichen Aufzeichnungsmaterials sehr wichtig. Insbesondere wenn davon ausgegangen werden muss, dass die wärmeempfindlichen Aufzeichnungsmaterialien in Kontakt mit Feuchtigkeit gelangen können, beispielsweise indem die als Konzertticket, Flugticket oder Kaufbeleg verwendeten Aufzeichnungsmaterialien nah am Körper aufbewahrt werden (z.B. in der Hosentasche) und hierdurch mit Schweiß in Kontakt kommen können, muss sichergestellt werden, dass die Aufzeichnungsmaterialien auch nach einem Kontakt mit Feuchtigkeit gut lesbar bleiben.

Neben den unbedruckten wärmeempfindlichen Aufzeichnungsmaterialien werden auch bedruckte wärmeempfindliche Aufzeichnungsmaterialien - beispielsweise als Flugtickets und Eintrittskarten - eingesetzt, die insbesondere im Offsetdruckverfahren bedruckt werden. Hierbei wird zunächst das wärmeempfindliche Aufzeichnungsmaterial mit allen unveränderlichen Informationen in hoher Stückzahl bedruckt, wie beispielsweise mit Unternehmenskennzeichen, Bildern und Text, sodass ein wärmeempfindlicher Rohling resultiert (z. B. ein Ticketrohling). Die erstellten wärmeempfindlichen Rohlinge werden am Verkaufspunkt in einen Thermodrucker eingelegt und können dann individuell mit Informationen thermisch bedruckt werden, bevor das individualisierte Aufzeichnungsmaterial an den Endkunden übergeben wird. Diese Informationen können bei jedem Druckvor-gang variieren - wie beispielsweise Datum, Veranstaltungsname, Platznummer, Karten-nummer, Masse, Preis usw.

Im Rahmen des vorliegenden Textes wird zwischen dem Bedrucken von wärmeempfindlichen Aufzeichnungsmaterialien (bzw. Schichtverbunden) durch den Auftrag von Druck-farben auf die Oberfläche des wärmeempfindlichen Aufzeichnungsmaterials, beispiels-weise durch Offsetdruck, und dem thermischen Bedrucken von wärmeempfindlichen Aufzeichnungsmaterialien durch das Einwirken von Hitze unterschieden. Beim Einwirken von Hitze, beispielsweise unter Verwendung eines Thermodruckkopfes als Bestandteil eines Thermodruckers, wird eine Farbbildung durch eine chemische Umsetzung des Farbstoffvorläufers induziert.

Es hat sich gezeigt, dass Aufzeichnungsmaterialien mit als (Farb-)Entwicklern, wie diese z.B. in der EP 2574645 A1 bzw. in der EP 2784133 A1 beschrieben sind, zwar bereits brauchbare Thermodruckergebnisse liefern können, allerdings in der Praxis hinsichtlich der dort gestellten hohen Anforderungen an die Qualität des Thermoausdrucks und die Beständigkeit gegenüber Umwelteinflüssen oft nicht oder nicht vollends zufriedenstellend.

Es besteht daher ein großer Bedarf nach einer Verbesserung des Thermoausdrucks von Aufzeichnungsmaterialien mit auf Milchsäure-Einheiten basierten (Farb-)Entwicklern, insbesondere hinsichtlich der Qualität des Thermoausdrucks und/oder gegenüber verschiedenen Umgebungseinflüssen. Die Aufgabe der vorliegenden Erfindung besteht somit darin, ein wärmeempfindliches Aufzeichnungsmaterial bereitzustellen, das zumindest einen auf Milchsäure-Einheiten basierten (Farb-)Entwickler umfasst und insbesondere hinsichtlich der Qualität des Thermoausdrucks und/oder gegenüber verschiedenen Umgebungseinflüssen verbesserte Eigenschaften aufweist.

Insbesondere soll in einer vorzugsweisen Ausführungsform der Erfindung ein wärmeempfindliches Aufzeichnungsmaterial bereitgestellt werden, das im bedruckten Zustand auch eine gute Beständigkeit gegenüber Fetten und Ölen hat.

Gelöst wird diese Aufgabe durch eine Beschichtungszusammensetzung zur Herstellung eines wärmeempfindlichen Aufzeichnungsmaterials oder wärmeempfindliche Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, die im Farbentwickler
   a) mindestens eine (lineare) strukturelle Einheit der Formel (I) (im Folgenden auch als Milchsäure-Einheit verstanden und bezeichnet) 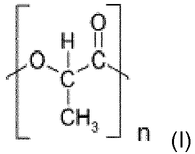 enthält, wobei n eine ganze Zahl von 1 bis 20, vorzugsweise von 1 bis 10, weiter bevorzugt von 1 bis 6, ist; und
   b) unabhängig voneinander, eine, zwei oder mehr endständige Elektronenakzeptorgruppen enthält, wobei mindestens eine der Elektronenakzeptorgruppen keine Carboxylgruppe (-COOH) ist, die aus Milchsäure und/oder einer Polymilchsäure mit der strukturellen Einheit der Formel (I) stammt;
   mit der Maßgabe, dass der eine oder der zumindest eine der mehreren Farbentwickler keine Verbindung der Formel (A) ist, 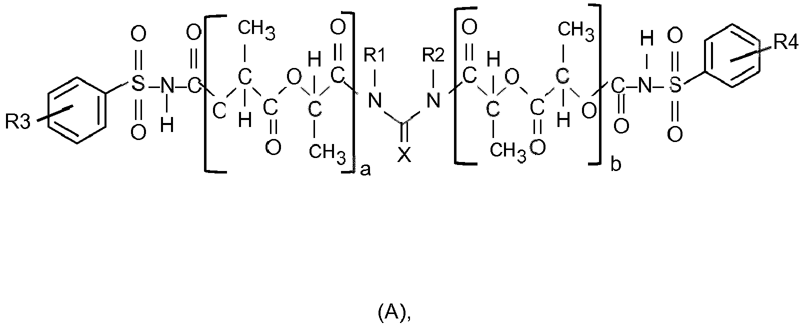 wobei X für O, S oder NH steht; R1 und R2 unabhängig voneinander für ein Wasserstoffatom, eine C1-C6-Alkylgruppe, eine C3-C6-Cycloalkylgruppe oder eine C2-C6-Alkenylgruppe stehen; R3 und R4 unabhängig voneinander für ein Wasserstoffatom, eine C1-C6-Alkylgruppe, eine C1-C6-Alkoxygruppe oder eine Halogengruppe stehen; und a und b jeweils für eine ganze Zahl stehen und die Bedingungen a ≥ 0, b ≥ 0 und (a+b) ≥ 1 erfüllen.

In manchen Fällen kann es bevorzugt sein, dass der Farbentwickler zumindest eine der endständigen Elektronenakzeptorgruppen mit einer der strukturellen Einheiten der Formel (XIa) und/oder der Formel (XIb) 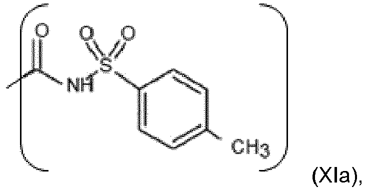 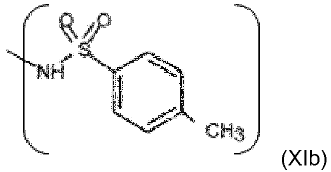 enthält.

Milchsäure und davon abgeleitete Verbindungen (z.B. u.a. Lactate, Lactoylmilchsäure, Lactid) und Polymere bzw. Oligomere (z.B. Polymilchsäuren, auch Polylactide (PLA) genannt) sind im Stand der Technik bereits gut bekannt.

Milchsäure ist eine Hydroxycarbonsäure die sowohl eine Carboxygruppe als auch eine Hydroxygruppe besitzt und deswegen unter anderem als 2-Hydroxypropionsäure und nach der IUPAC-Nomenklatur als 2-Hydroxypropansäure bezeichnet wird. Die Salze und Ester der Milchsäure heißen Lactate. Als Namen für Milchsäure sind im Stand der Technik gebräuchlich: 2-Hydroxypropansäure, 2-Hydroxypropionsäure, (R)-Milchsäure, (S)-Milchsäure, (RS)-Milchsäure, DL-Milchsäure, (±)-Milchsäure, und E 270. Aufgrund ihrer unterschiedlichen optischen Aktivität wird die D-(-)-Milchsäure (Synonym: (R)-Milchsäure) auch als linksdrehende Milchsäure und die L-(+)-Milchsäure (Synonym: (S)-Milchsäure) auch als rechtsdrehende Milchsäure bezeichnet. Racemische Milchsäure ist ein 1:1-Gemisch aus (R)- und (S)-Milchsäure (D-/L-Milchsäure). Milchsäure wird unter den folgenden Chemical Abstracts Service Registriernummer geführt: CAS® RN 50-21-5 (Milchsäure, allgemein), CAS® RN 598-82-3 (dl-Form), CAS® RN 10326-41-7 (d-Form) und CAS® RN 79-33-4 (I-Form). Die Chemical Abstracts Service Registry Number, CAS® RN ist eine Bezeichnung für eine Registriernummer (RN), die vom Chemical Abstracts Service (CAS) seit 1965 zur eindeutigen Kennzeichnung von chemischen Stoffen verwendet wird.

Milchsäure bildet intermolekular Ester. Unter Abspaltung von Wasser entsteht z.B. als Dimer Lactoylmilchsäure, die beim längeren Stehen oder beim Erhitzen zu Polymilchsäure weiterverestert. Milchsäure wird industriell produziert, die vor allem in der Lebensmittelindustrie sowie zur Herstellung von Polylactiden (PLA; auch: Polymilchsäuren) genutzt werden. Die Herstellung von Milchsäure erfolgt vorzugsweise biotechnologisch über eine Fermentation von Kohlenhydraten (Zucker, Stärke). Etwa 70 bis 90 % der Weltproduktion an Milchsäure wird derzeit fermentativ hergestellt. Daneben kann die Herstellung von Milchsäure auch synthetisch auf der Basis petrochemischer Rohstoffe (Acetaldehyd) erfolgen. Großtechnisch spielt dabei nur die Synthese von Milchsäure aus Acetaldehyd mit Cyanwasserstoff über Lactonitril eine gewisse Rolle. Letzteres wird über den Einsatz von Salzsäure hydrolysiert, wobei neben der Milchsäure Ammoniumchlorid entsteht. Milchsäure ist das Monomer der Polylactide bzw. Polymilchsäuren (PLA), die als biologisch abbaubare Biokunststoffe vielfältige Verwendung finden. PLA weist aufgrund der Molekülstruktur eine biologische Abbaubarkeit auf, wobei hierfür bestimmte Umweltbedingungen nötig sind, die in der Regel in industriellen Kompostieranlagen zu finden sind.

Lactid ist der cyclische Diester der Milchsäure und findet als Ausgangsstoff bei der technischen Herstellung von Polylactiden (Polymilchsäuren) Verwendung. Lactid kann durch säurekatalytische Kondensation von Milchsäure hergestellt werden. Technisch wird es heutzutage aber meist biotechnologisch aus Glucose und Melasse gewonnen. Da Lactid zwei durch jeweils analoge Reste substituierte Stereozentren enthält, gibt es drei isomere Lactide: (S,S)-Lactid, (R,R)-Lactid und (meso)-Lactid. Das Lactid der natürlichen L-Milchsäure [Synonym: (S)-Milchsäure] besitzt (S,S)-Konfiguration. (R,R)-Lactid und (meso)-Lactid besitzen im Vergleich zu (S,S)-Lactid nur geringe Bedeutung. Lactid ist ein farbloses, geruchloses Pulver, das bei Berührung mit Wasser sofort zu Milchsäure hydrolysiert. Aus dem Lactid [genauer: dem (S,S)-Lactid] der L-Milchsäure wird durch ionische Polymerisation Polylactid hergestellt.

Polylactide, auch Polymilchsäuren (kurz PLA, Englisch: "polylactic acid") genannt, sind synthetische Polymere, die zu den Polyestern zählen. Sie sind aus chemisch aneinander gebundenen Milchsäuremolekülen aufgebaut. Daher ist die zwar gebräuchliche Bezeichnung "Polymilchsäure" an sich irreführend, da es sich nicht um ein Polymer mit mehreren sauren Gruppen handelt. Polylactide sind aufgrund des asymmetrischen Kohlenstoffatoms optisch aktive Polymere und treten in der Form von D- oder als L-Lactide auf, je nachdem, ob sich diese von L-(+)-Milchsäure [Synonym: (S)-(+)-Milchsäure] oder von D-(-)-Milchsäure [Synonym: (R)-(-)-Milchsäure] ableiten.

Die Eigenschaften der Polylactide hängen vor allem von der Molekülmasse, dem Kristallinitätsgrad und gegebenenfalls dem Anteil von Copolymeren ab. Eine höhere Molekülmasse steigert die Glasübergangs- sowie die Schmelztemperatur, die Zugfestigkeit sowie den Elastizitätsmodul (E-Modul) und senkt die Bruchdehnung. Aufgrund der Methylgruppe verhält sich das Material wasserabweisend (hydrophob), wodurch die Wasseraufnahme und somit auch die Hydrolyserate der Hauptbindung gesenkt wird. Weiterhin sind Polylactide in vielen organischen Lösungsmitteln löslich (z. B. Dichlormethan, Trichlormethan; durch Zugabe eines Lösungsmittels wie Ethanol, in dem das Polylactid schlechter löslich ist, kann es wieder ausgefällt werden). PLA weist zahlreiche Eigenschaften auf, die für vielerlei Einsatzgebiete von Vorteil sind: Eine geringe Feuchtigkeitsaufnahme mit hoher Kapillarwirkung, dadurch geeignet für Sport- und Funktionsbekleidung. Eine geringe Flammbarkeit, hohe UV-Beständigkeit und Farbechtheit. Zudem ist die Dichte von PLA relativ gering. Die Biegefestigkeit liegt bei 0,89-1,03 MPa. Unter UV-Beständigkeit wird verstanden, dass die PLA-basiert hergestellten Produkte dem Sonnenlicht und anderen Quellen für Ultraviolettstrahlung (UV-Strahlung) ausgesetzt werden können, ohne dabei Schaden durch die Einstrahlung zu nehmen. Als UV-Strahlung wird derjenige Teil der elektromagnetischen Strahlung bezeichnet, welcher zwischen dem sichtbaren Licht und der Röntgenstrahlung liegt.

Polylactide und Polymilchsäuren können durch unterschiedliche Synthese-Verfahren erzeugt werden. Polylactide sind vor allem durch die ionische Polymerisation von Lactid, einem ringförmigen Zusammenschluss von zwei Milchsäuremolekülen, zugänglich. Während Polylactide durch Ringöffnungspolymerisation erzeugt werden, entstehen Polymilchsäuren durch direkte Kondensationsreaktionen. Umwandlung von Lactid (links) zum Polylactid (rechts) durch thermische und katalytische Ringöffnungspolymerisation. Die Herstellung von Polylactiden bzw. Polymilchsäuren ist im Stand der Technik beschrieben; siehe beispielsweise D. Garlotta, "A Literature Review of Poly(Lactic Acid)", Journal of Polymers and the Environment, Vol. 9, No. 2, April 2001, 63-84 (© 2002). Die Bedingungen, insbesondere die Temperaturen, bei der Herstellung von Polylactiden bzw. Polymilchsäuren (d.h. bei der "Lactide-Polymerisierung") sind abhängig von den zur Polymerisierung eingesetzten Katalysatoren. Beispielsweise bei Temperaturen zwischen 120 und 150 °C sowie der Einwirkung katalytischer Zinnverbindungen (z. B. Zinnoxid) findet eine Ringöffnungspolymerisation statt. Bei kationischer Polymerisierung können die Temperaturen z.B. T < 100 °C und bei anionischer Polymerisierung können die Temperaturen z.B. T ≈ 120 °C betragen. So werden Kunststoffe mit einer hohen Molekülmasse und Festigkeit erzeugt. Lactid selbst lässt sich durch Vergärung von Melasse oder durch Fermentation von Glukose mit Hilfe verschiedener Bakterien herstellen. Darüber hinaus können hochmolekulare und reine Polylactide mit Hilfe der so genannten Polykondensation direkt aus Milchsäure erzeugt werden. In der industriellen Produktion ist allerdings die Entsorgung des Lösungsmittels problematisch.

Nach der Erfindung kann eine Beschichtungszusammensetzung zur Herstellung eines wärmeempfindlichen Aufzeichnungsmaterials oder wärmeempfindliche Aufzeichnungsschicht wie vorstehend definiert bevorzugt sein, wobei der eine oder der zumindest eine der mehreren Farbentwickler eine Verbindung der Formel (II) ist, 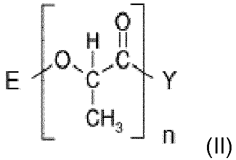 wobei n eine ganze Zahl von 1 bis 20, vorzugsweise von 1 bis 10, weiter bevorzugt von 1 bis 6, ist; wobei der Rest E eine Elektronenakzeptorgruppe darstellt; und wobei der Rest Y
(i) für -OH, -OR, -NH₂, -NHR, -NRR',-SH, -SR, einen jeweils substituierten oder unsubstituierten Iminoharnstoff-, Harnstoff-, Thioarnstoff-, Sulfonylharnstoff-, Sulfonylthioharnstoff-, Sulfonamid-Rest, Sulfonyloxy-C2-C6-Alkylamid-Rest, Sulfonyloxy-C2-C6-Alkylharnstoff-Rest oder Sulfonyloxy-C2-C6-Alkylthioharnstoff-Rest steht, wobei R und R' unabhängig voneinander für eine lineare oder verzweigte C1-C22-Alkylgruppe, eine lineare oder verzweigte C1-C22-Alkylengruppe stehen, oder R und R' gemeinsam eine C4-C7-Cycloalkylengruppe bilden,
   oder wobei der Rest Y
(ii) für eine Gruppe der Formel (III) steht, 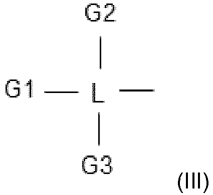 wobei L eine ein-, zwei- oder drei-wertige Linker-Gruppe darstellt und die Gruppen G1, G2 und G3 unabhängig voneinander anwesend oder abwesend sein können, wobei die Gruppen G1, G2 und G3 unabhängig voneinander für eine Gruppe der der Formel (IV) (IV-G1, IV-G2, IV-G3) stehen, 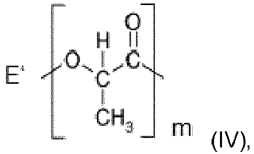
wobei m eine ganze Zahl von 1 bis 20, vorzugsweise von 1 bis 10, weiter bevorzugt von 1 bis 6, ist; und
wobei E'jeweils unabhängig voneinander in G1, G2 und G3 anwesend oder abwesend sein kann und jeweils unabhängig eine Elektronenakzeptorgruppe (IV-E', E'-G2, E'-G3) darstellt;
und wobei die oben angegebene Maßgabe gilt, dass der eine oder der zumindest eine der mehreren Farbentwickler keine Verbindung der Formel (A) ist, wie diese oben definiert ist.

Erfindungsgemäß bevorzugt können hierbei folgende Reste in den erfindungsgemäßen Verbindung vorliegen:
- Iminoharnstoff-Rest (N(R5)(R6)-C(=NH)-N(R7)-), Harnstoff-Rest (N(R5)(R6)-C(=O)-N(R7)-) oder Thioharnstoff-Rest (-N(R5)(R6)-C(=S)-N(R7)-), wobei R5 unabhängig für ein Wasserstoffatom, eine C1-C6-Alkylgruppe, eine C5-C7-Cycloalkylgruppe, eine C2-C6-Alkylengruppe, einen substituierten oder unsubstituierten Alkylaryl- oder Aryl-Rest, vorzugsweise einen substituierten oder unsubstituierten Benzyl- oder Phenyl-Rest, steht, R5 vorzugsweise ein Wasserstoffatom oder Phenyl-Rest ist, und R6 und R7 unabhängig voneinander für ein Wasserstoffatom oder eine Methylgruppe, vorzugsweise für ein Wasserstoffatom, stehen.
   Gewünschtenfalls kann eine Substitution im Alkylaryl- oder Aryl-Rest bzw. Benzyl- oder Phenyl-Rest vorliegen, vorzugsweise mit einer C1-C6-Alkylgruppe, einer C1-C6-Alkoxygruppe oder einer Halogengruppe.
- Sulfonylharnstoff-Rest R8-Ar1-SO₂-N(R6)-C(=O)-N(R7)-, Sulfonylthioharnstoff-Rest R8-Ar1-SO₂-N(R6)-C(=S)-N(R7)-, Sulfonyloxy-C2-C6-Alkylharnstoff-Rest R8-Ar1-SO₂-C2-C6-Alkyl-N(R6)-C(=O)-N(R7)-, Sulfonyloxy-C2-C6-Alkylthio-harnstoff-Rest R8-Ar1-SO₂-C2-C6-Alkyl-N(R6)-C(=S)-N(R7)-, Sulfonamid-Rest R9-Ar2-SO₂-NR10- oder Sulfonyloxy-C2-C6-Alkylamid-Rest R9-Ar2-O-SO₂-NR10-, wobei Ar1 und Ar2 unabhängig voneinander für einen jeweils substituierten oder unsubstituierten Aryl-Rest, vorzugsweise einen jeweils substituierten oder unsubstituierten Phenyl-Rest, stehen, wobei R8 und R9 unabhängig voneinander für ein Wasserstoffatom, eine C1-C6-Alkylgruppe, eine C1-C6-Alkoxygruppe oder eine Halogengruppe stehen, und wobei R6, R7 und R10 unabhängig voneinander für ein Wasserstoffatom oder eine Methylgruppe, vorzugsweise für ein Wasserstoffatom, stehen.

Nach der Erfindung kann eine Beschichtungszusammensetzung zur Herstellung eines wärmeempfindlichen Aufzeichnungsmaterials oder wärmeempfindliche Aufzeichnungsschicht wie vorstehend definiert bevorzugt sein, wobei E und E' jeweils unabhängig voneinander für eine Elektronenakzeptorgruppe ausgewählt aus der Gruppe bestehend aus einem jeweils substituierten oder unsubstituierten Sulfonat-, Sulfonamidcarbonyl- oder Arylcarbonyl-Rest, stehen.

Erfindungsgemäß bevorzugt können hierbei folgende Reste in den erfindungsgemäßen Verbindungen vorliegen:
- Sulfonat-Rest R11-Ar3-SO₂- oder Sulfonamidcarbonyl-Rest R12-Ar4-SO₂-N(R13)-C(=O)-, wobei Ar3 und Ar4 unabhängig voneinander für einen jeweils substituierten oder unsubstituierten Aryl-Rest, vorzugsweise einen jeweils substituierten oder unsubstituierten Phenyl-Rest, stehen, wobei R11 und R12 unabhängig voneinander für ein Wasserstoffatom, eine C1-C6-Alkylgruppe, eine C1-C6-Alkoxygruppe oder eine Halogengruppe stehen, und wobei R13 für ein Wasserstoffatom oder eine Methylgruppe, vorzugsweise für ein Wasserstoffatom, steht.
- Arylcarbonyl-Rest (HOOC-)ₚ(R14)_{q}-Ar5-C(=O)-, wobei unabhängig voneinander p für eine ganze Zahl von 0 - 2 und q für eine ganze Zahl von 0 - 3 stehen und die Bedingung (p+q) ≤ 3 erfüllen, wobei (HOOC-) für eine Carboxylgruppe (-COOH) steht, und R15 für eine Hydroxygruppe (-OH) oder eine Methylgruppe (-CH₃) steht, wobei R15 bevorzugt für eine Hydroxygruppe (-OH) steht, und Ar5 unabhängig für einen Aryl-Rest, vorzugsweise einen Phenyl-Rest, steht.

In manchen Fällen kann es erfindungsgemäß bevorzugt sein: R14 ist abwesend, d.h. q ist 0. Bevorzugt ist p ist 2, d.h. ein Benzoltricarbonsäure-Rest. Die Benzoltricarbonsäuren bilden eine Stoffgruppe, die aus einem Benzolring mit drei angefügten Carboxygruppen (-COOH) bestehen. Durch deren unterschiedliche Anordnung (*vicinal, asymetrisch* oder *symetrisch*) ergeben sich drei Stellungsisomere mit der Summenformel C₉H₆O₆. Trimellitsäure (andere Bezeichnungen: 1,2,4-Tricarboxybenzol, 1,2,4-Benzoltricarbonsäure, 1,2,4-Tricarboxybenzen, 4-Carboxyphthalsäure; CAS® RN 528-44-9), auch Trimellithsäure ist neben der Hemimellitsäure (andere Bezeichnungen: 1,2,3-Benzoltricarbonsäure, 1,2,3-Tricarboxybenzol, CAS® RN 732304-21-1) und der Trimesinsäure (andere Bezeichnungen: 1,3,5-Benzoltricarbonsäure, 1,3,5-Tricarboxybenzol, 1,3,5-Tricarboxybenzen, CAS® RN 554-95-0) eines der drei möglichen Stellungsisomere der Benzoltricarbonsäuren. Neben der Trimellitsäure selbst ist als Rohstoff im Handel insbesondere das leicht aus ihr zu bildende 1,2-Anhydrid, (andere Bezeichnungen: Trimellitsäureanhydrid, TMA, IUPAC: 1,3-Dioxo-2-benzofuran-5-carbonsäure, 1,2,4-Tricarboxybenzol-1,2-anhydrid, 1,2,4-Benzoltricarbonsäure-1,2-anhydrid, CAS® RN 552-30-7) verfügbar, welches üblicherweise an Stelle der Trimellitsäure verwendet werden kann. Erfindungsgemäß bevorzugte Beispiele für Benzoltricarbonsäuren sind bspw. Trimellitsäure, auch Trimellithsäure genannt, Hemimellitsäure (andere Bezeichnungen: 1,2,3-Benzoltricarbonsäure, 1,2,3-Tricarboxybenzol, CAS® RN 732304-21-1) und Trimesinsäure (andere Bezeichnungen: 1,3,5-Benzoltricarbonsäure, 1,3,5-Tricarboxybenzol, 1,3,5-Tricarboxybenzen, CAS® RN 554-95-0). Weiter bevorzugt ist Trimellitsäure (andere Bezeichnungen: 1,2,4-Tricarboxybenzol, 1,2,4-Benzoltricarbonsäure, 1,2,4-Tricarboxybenzol, 4-Carboxyphthalsäure).

In manchen Fällen kann es erfindungsgemäß bevorzugt sein: R14 ist abwesend, d.h. q ist 0. Bevorzugt ist p ist 1, d.h. ein Benzoldicarbonsäure-Rest. Die Benzoldicarbonsäuren bilden eine Stoffgruppe, die aus einem Benzolring mit zwei angefügten Carboxygruppen (-COOH) bestehen. Durch deren unterschiedliche Anordnung (ortho, meta oder para) ergeben sich drei Stellungsisomere mit der Summenformel C₈H₆O₄. Erfindungsgemäß bevorzugte Beispiele für Benzoldicarbonsäuren sind bspw. 1,2-Benzoldicarbonsäure (andere Bezeichnungen: o-Benzoldicarbonsäure, Phthalsäure, Benzol-1,2-dicarbonsäure, CAS® RN 88-99-3), 1,3-Benzoldicarbonsäure (andere Bezeichnungen: m-Benzoldicarbonsäure, Isophthalsäure, Benzol-1,3-dicarbonsäure, m-Phthalsäure, CAS® RN 121-91-5), 1,4-Benzoldicarbonsäure (*p*-Benzoldicarbonsäure, Terephthalsäure, Benzol-1,4-dicarbonsäure, CAS® RN 100-21-0; Abkürzungen TPS, TPA). Weiter bevorzugt sind Isophthalsäure (andere Bezeichnungen: 1,3-Benzoldicarbonsäure (m-Benzoldicarbonsäure) und Terephthalsäure (andere Bezeichnungen: 1,4-Benzoldicarbonsäure, p-Benzoldicarbonsäure).

In manchen Fällen kann es erfindungsgemäß bevorzugt sein: R14 ist anwesend und die Carboxylgruppe (-COOH) abwesend, d.h. p ist 0. Bevorzugt ist q 1 - 3, vorzugsweise q ist 3, d.h. ein Trihydroxybenzoesäure-Rest. Die Trihydroxybenzoesäuren bilden in der Chemie eine Stoffgruppe von aromatischen Verbindungen, die sich sowohl von der Benzoesäure als auch von den Trihydroxybenzolen ableitet. Die Struktur besteht aus einem Benzolring mit einer angefügten Carboxygruppe (-COOH) und drei Hydroxygruppen (-OH) als Substituenten. Durch deren unterschiedliche Anordnung ergeben sich sechs Konstitutionsisomere mit der Summenformel C₇H₆O₅. Erfindungsgemäß bevorzugte Beispiele für Trihydroxybenzoesäuren sind bspw. 2,3,4-Trihydroxybenzoesäure (Pyrogallocarbonsäure), 2,3,5-Trihydroxybenzoesäure, 2,3,6-Trihydroxybenzoesäure, 2,4,5-Trihydroxybenzoesäure, 2,4,6-Trihydroxybenzoesäure (Phloroglucincarbonsäure), 3,4,5-Trihydroxybenzoesäure (Gallussäure), wobei 3,4,5-Trihydroxybenzoesäure (Gallussäure) bevorzugt ist. Die Gallussäure (3,4,5-Trihydroxybenzoesäure) ist eine aromatische Verbindung, die sich sowohl von der Benzoesäure als auch vom Pyrogallol (1,2,3-Trihydroxybenzol) ableitet. Die Struktur besteht aus einem Benzolring mit einer angefügten Carboxygruppe (-COOH) und drei Hydroxygruppen (-OH) als Substituenten. Sie gehört zur Gruppe der Trihydroxybenzoesäuren.

In manchen Fällen kann es erfindungsgemäß bevorzugt sein: R14 ist anwesend und die Carboxylgruppe (-COOH) ist abwesend, d.h. p ist 0. Bevorzugt ist q 2, d.h. ein Dihydroxybenzoesäure-Rest. Die Dihydroxybenzoesäuren bilden in der Chemie eine Stoffgruppe von aromatischen Verbindungen, die sich sowohl von der Benzoesäure als auch von den Dihydroxybenzolen ableitet. Die Struktur besteht aus einem Benzolring mit einer angefügten Carboxygruppe (-COOH) und zwei Hydroxygruppen (-OH) als Substituenten. Durch deren unterschiedliche Anordnung ergeben sich sechs Konstitutionsisomere mit der Summenformel C₇H₆O₄. Erfindungsgemäß bevorzugte Beispiele für Dihydroxybenzoesäuren sind bspw. 2,3-Dihydroxybenzoesäure (Brenz- oder Pyrocatechinsäure, CAS® RN 303-38-8, Schmelzpunkt 206 °C), 2,4-Dihydroxybenzoesäure (β-Resorcylsäure, CAS® RN 89-86-1, Schmelzpunkt 216 bis 221 °C), 2,5-Dihydroxybenzoesäure (2,5-DHBA, DHB, Gentisinsäure, Hydrochinoncarbonsäure, CAS® RN 490-79-9, Schmelzpunkt 205 °C), 2,6-Dihydroxybenzoesäure (γ-Resorcylsäure, CAS® RN 303-07-1, Schmelzpunkt 150 bis 170 °C), 2-Hydroxy-6-methoxybenzoesäure (C₈H₈O₄, Schmelzpunkt 135 °C), 3,4-Dihydroxybenzoesäure (Protacatechusäure, Protokatechusäure, CAS® RN 99-50-3, Schmelzpunkt 199 °C), 3,5-Dihydroxybenzoesäure (α-Resorcylsäure, CAS® RN 99-10-5), wobei 3,5-Dihydroxybenzoesäure (a-Resorcylsäure) oder 3,4-Dihydroxybenzoesäure (Protacatechusäure, Schmelzpunkt 199 °C) bevorzugt ist. Dihydroxybenzoesäuren sind in Naturstoffen oft in Form von Glycosiden und/oder Methylethern enthalten.

Erfindungsgemäß bevorzugt ist eine Beschichtungszusammensetzung zur Herstellung eines wärmeempfindlichen Aufzeichnungsmaterials oder wärmeempfindliche Aufzeichnungsschicht, wie oben jeweils definiert, wobei die Linkergruppe L eine strukturelle Einheit mit einer der Formeln (V), (VI), VII) oder (VIII) ist:
- eine Di-, Tri-, Tetra-Amin-Linkergruppe der Formel (V) oder eine Di-, Tri-, Tetra-Alkohol-Linkergruppe der Formel (VI):

   (-NH-)₂₋₄R15 (V),

   (-O-)₂₋₄R15 (VI),

   wobei R15 jeweils unabhängig für eine lineare oder verzweigte C2-C12-Alkylgruppe, eine lineare oder verzweigte C2-C12-Alkylengruppe, eine C5-C7-Cycloalkylgruppe, eine Arylengruppe, vorzugsweise eine Naphthylen-oder Phenylengruppe, eine Biarylengruppe, vorzugsweise eine Biphenylengruppe; beispielsweise ein Biphenylen (Methylendiphenyl), resultierend aus Edukten wie z.B. Diaminodiphenylmethan, Dihydroxydiphenylmethan, oder eine Sulfonyldiphenylgruppe (-Ph-SO₂-Ph-) steht.

Als Biaryle (nicht: Diaryle) werden Verbindungen bezeichnet, bei denen *zwei* Arylgruppen über eine Einfachbindung miteinander verknüpft sind. Das einfachste Biaryl ist Biphenyl.
- eine (gemischte) Amino-Alkohol- Linkergruppe der Formel (VII)

   -(NH-)ₛR16(-O-)ₜ (VII),

   wobei R16 jeweils unabhängig für eine lineare oder verzweigte C2-C12-Alkylgruppe, eine lineare oder verzweigte C2-C12-Alkylengruppe, eine C5-C7-Cycloalkylgruppe, eine Arylengruppe, vorzugsweise eine Naphthylen-, oder Phenylengruppe, eine Biarylengruppe, vorzugsweise eine Biphenylengruppe;beispielsweise ein Biphenylen (Methylendiphenyl), resultierend aus Edukten wie z.B. Diaminodiphenylmethan, Dihydroxydiphenylmethan, oder eine Sulfonyldiphenylgruppe (-Ph-SO₂-Ph-) steht, und wobei s und t jeweils unabhängig voneinander für eine ganze Zahl von 1 - 4 stehen und die Bedingung 2 ≥ (s+t) ≤ 4 erfüllt;
- eine Iminoharnstoff-, Harnstoff-, Thioarnstoff-Linkergruppe (VIII) der Formel ist: 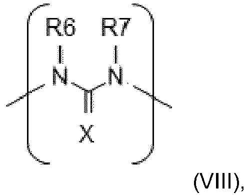 wobei R6 und R7 unabhängig voneinander für ein Wasserstoffatom oder eine Methylgruppe, vorzugsweise für ein Wasserstoffatom, stehen. Erfindungsgemäß bevorzugt können hierbei folgende Reste vorliegen: Iminoharnstoff-Rest (N(R6)-C(=NH)-N(R7)-) (VIII-1), Harnstoff-Rest (N(R6)-C(=O)-N(R7)-) (VIII-2) oder Thioharnstoff-Rest (-N(R6)-C(=S)-N(R7)-) (VIII-3)].
   - eine Zuckeralkoholgruppe mit der Formel (IX) ist,

      (-O-)₂₋₄R17 (IX),

      wobei R17 von einem, gegebenenfalls substituierten, Zuckeralkohol der Formel (X) abgeleitet ist, 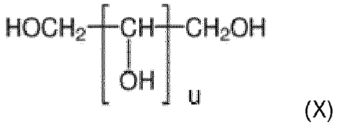 wobei u für eine für eine ganze Zahl von 1 - 4 steht,

Erfindungsgemäß bevorzugt können hierbei folgende Zuckeralkohole vorliegen:_Alditole (früher: Aldite) sind nichtcyclische Polyole, die sich strukturell als Reduktionsprodukte von Kohlenhydraten (Zuckern) ableiten. Sie werden auch als Zuckeralkohole bezeichnet. Zu den Alditolen zählen beispielsweise Mannit (Mannitol, C6), Isomalt (6-O-α-D-Glucopyranosyl-D-glucit (GPS)), Lactit (Lactobiosit; 4-O-β-D-Galactopyranosyl-D-glucitol (CAS, WHO)), Sorbit (Sorbitol oder Glucitol; Hexanhexol, C6) und Xylit (Xylitol, xylo-1,2,3,4,5-Pentanpentol, C5), Threit (1,2,3,4-Butantetrol, C4), Erythrit (meso-1,2,3,4-Tetrahydroxybutan, C4) und Arabit (Arabitol, (2R,4R)-Pentane-1,2,3,4,5-pentol, C5). Erfindungsgemäß ist als_Zuckeralkohol vorzugsweise Sorbitol ausgewählt.

Erfindungsgemäß bevorzugt ist eine Beschichtungszusammensetzung, wie hierzuvor beschrieben und definiert, zur Herstellung eines wärmeempfindlichen Aufzeichnungsmaterials oder wärmeempfindliche Aufzeichnungsschicht nach Anspruch 1 oder 2, wobei der eine oder der zumindest eine der mehreren Farbentwickler eine Verbindung ist, die ferner
c) eine oder mehrere strukturelle Einheiten der Formel (VIII) enthält, 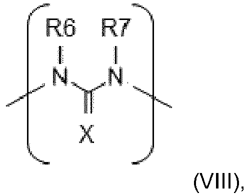 wobei X für O, S oder NH steht und R6 und R7 unabhängig voneinander für ein Wasserstoffatom, eine Methylgruppe, vorzugsweise für ein Wasserstoffatom, stehen; und
   wobei eine strukturelle Einheit der Formel (VIII) gegebenenfalls auch endständig sein kann und in diesem Fall der endständige Stickstoff (N) ferner mit einem Rest R5 substituiert ist, und wobei R5 unabhängig für ein Wasserstoffatom, eine C1-C6-Alkylgruppe, eine C5-C7-Cycloalkylgruppe, eine C2-C6-Alkylengruppe, einen substituierten oder unsubstituierten Alkylaryl- oder Aryl-Rest.

Erfindungsgemäß bevorzugt ist der Alkylaryl- oder Aryl-Rest vorzugsweise ein substituierter oder unsubstituierter Benzyl- oder Phenyl-Rest und R5 steht vorzugsweise für ein Wasserstoffatom oder einen Phenyl-Rest.

Erfindungsgemäß bevorzugt ist eine Beschichtungszusammensetzung oder wärmeempfindliche Aufzeichnungsschicht, umfassend als Farbentwickler a) mindestens eine (lineare) strukturelle Einheit der Formel (I) oder der Formel (II), wie oben bzw. jeweils in Anspruch 1 oder 2 definiert, und die b) eine oder zwei endständige strukturelle Einheiten der Formel (XIa), 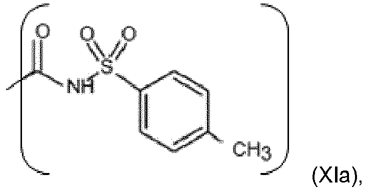 enthält und wobei keine strukturellen Einheiten der Formel (VIII) im Farbentwickler vorliegen. Es liegen somit Harnstoff-freie Farbentwickler-Strukturen vor.

Erfindungsgemäß bevorzugt kann auch eine Beschichtungszusammensetzung oder wärmeempfindliche Aufzeichnungsschicht sein, umfassend als Farbentwickler a) mindestens eine (lineare) strukturelle Einheit der Formel (I) oder der Formel (II), wie oben bzw. jeweils in Anspruch 1 oder 2 definiert, und die b) eine oder zwei endständige strukturelle Einheiten der Formel (XIa), 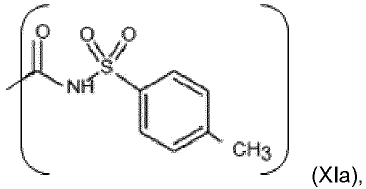 enthält und wobei keine strukturellen Einheiten der Formel (VIII) im Farbentwickler vorliegen. Es liegen somit Harnstoff-freie Farbentwickler-Strukturen vor.

Erfindungsgemäß bevorzugt kann eine Beschichtungszusammensetzung oder wärmeempfindliche Aufzeichnungsschicht sein, umfassend mindestens einen Farbentwickler, der eine Verbindung ist, wobei in a) die mindestens eine (lineare) strukturelle Einheit der Formel (I) (Milchsäure-Einheit) die Formel (Xlla) 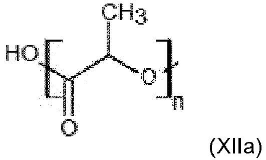 aufweist, wobei n eine ganze Zahl von 1 bis 20, vorzugsweise von 1 bis 10, weiter bevorzugt von 1 bis 6, ist.

Erfindungsgemäß bevorzugt kann eine Beschichtungszusammensetzung oder wärmeempfindliche Aufzeichnungsschicht sein, die mindestens einen Farbentwickler umfasst, der eine Verbindung ist, wobei in b) die eine oder zwei endständigen strukturellen Einheiten die Formel (XIa) aufweisen:

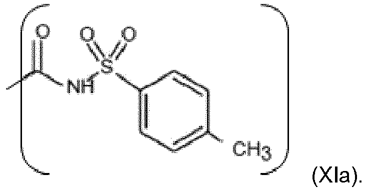

Erfindungsgemäß weiter bevorzugt kann eine Beschichtungszusammensetzung oder wärmeempfindliche Aufzeichnungsschicht, wie hierzuvor definiert, sein, die mindestens einen Farbentwickler umfasst, der eine Verbindung ist, die in a) als die mindestens eine (lineare) strukturelle Einheit der Formel (I) (Milchsäure-Einheit) die strukturelle Einheit der Formel (Xlla) aufweist, und in b) eine endständige strukturelle Einheit der Formel (XIa) vorliegt, so dass der mindestens eine Farbentwickler die Formel (XIIIa). 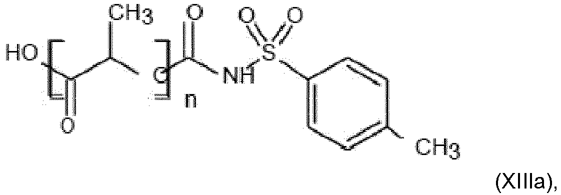 aufweist, wobei n eine ganze Zahl von 1 bis 20, vorzugsweise von 1 bis 10, weiter bevorzugt von 1 bis 6, ist.

Erfindungsgemäß besonders bevorzugt kann eine Beschichtungszusammensetzung oder wärmeempfindliche Aufzeichnungsschicht, wie hierzuvor definiert, sein, die mindestens einen Farbentwickler umfasst, der eine Verbindung ist, die in a) als die mindestens eine (lineare) strukturelle Einheit der Formel (I) (Milchsäure-Einheit) die strukturelle Einheit der Formel (Xlla) aufweist, und in b) eine endständige strukturelle Einheit der Formel (XIb) vorliegt, so dass der mindestens eine Farbentwickler die Formel (XIIIb), 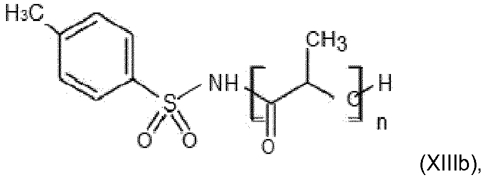 aufweist, wobei n eine ganze Zahl von 1 bis 20, vorzugsweise von 1 bis 10, weiter bevorzugt von 1 bis 6, ist.

Erfindungsgemäß bevorzugt kann weiterhin eine Beschichtungszusammensetzung oder wärmeempfindliche Aufzeichnungsschicht, wie hierzuvor definiert, sein, die ferner mindestens eine weitere Verbindung der Formel (XIV) 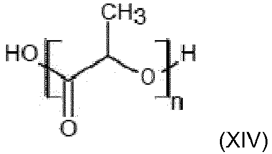 enthält, wobei n eine ganze Zahl von 3 bis 15, vorzugsweise von 5 bis 9, ist.

Erfindungsgemäß bevorzugt ist in manchen Fällen eine Beschichtungszusammensetzung oder wärmeempfindliche Aufzeichnungsschicht, wie hierzuvor definiert, wobei die Partikelgrößen, gemessen durch Laserbeugung, des einen oder zumindest eines der mehreren Farbentwickler, jeweils unabhängig voneinander, im Bereich von 0,5 bis 10 µm, vorzugsweise im Bereich von 0,8 bis 8 µm, weiter bevorzugt im Bereich von 0,8 bis 4 µm, liegen.

Erfindungsgemäß bevorzugt ist in manchen Fällen eine Beschichtungszusammensetzung oder wärmeempfindliche Aufzeichnungsschicht, wie hierzuvor definiert, wobei die Partikelgrößen, gemessen als X₅₀-Wert durch Laserbeugung, des einen oder zumindest eines der mehreren Farbentwickler, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen.

Die Bestimmung der Partikelgrößen kann unter Verwendung von Laserbeugung (HELOS-Partikelgrößenanalyse) gemessen werden. Im Rahmen der Erfindung wurde ein Gerät der Sympatec GmbH, Helos (H1453) & Quixel, R1, eingesetzt (Auswertung WINDOX 4).

Die mittlere Teilchengröße kann durch Partikelgrößenanalyse im Laserbeugungsverfahren nach DIN/ISO 13320-1 [1999] bestimmt werden.

Ein Laser-Streulichtspektrometer arbeitet auf Grundlage der statistischen Laserlichtstreuung gemäß DIN/ISO 13320-1 [1999] im Messbereich von 0,01 µm bis 3000 µm. Eine Umstellung am Gerät ist dafür nicht erforderlich. Für die automatisierte Messung wird die Partikelprobe in eine Zirkulationseinheit zur Nassmessung gegeben. Eine integrierte Ultraschallsonde verhindert das Vernetzen der Partikel und macht eine externe Proben-vorbereitung überflüssig. Bei der Wechselwirkung von Laserlicht mit Partikeln werden durch Beugung, Brechung, Reflexion und Absorption für die Partikelgröße charakteristi-sche Streulichtmuster erzeugt. Mit der Mie-Theorie kann von diesen Streulichtmustern auf die Partikelgrößenverteilung geschlossen werden.

Bei der Laserbeugung werden Partikelgrößenverteilungen durch Messung der Winkelabhängigkeit der Intensität von gestreutem Licht eines Laserstrahls, der eine dispergierte Kieselsäure-Partikelprobe durchdringt, ermittelt. Hierbei streuen große Partikel Licht mit kleinen Winkeln relativ zum Laserstrahl, während kleine Partikel zu großen Streuwinkeln führen. Die Daten der winkelabhängigen Streulichtintensität werden analysiert und sind die Basis zur Berechnung der Größe der Partikel, die für das Beugungsmuster verant-wortlich sind. Dabei wird die Mie-Theorie genutzt. Die Partikelgröße wird als Durchmesser der volumengleichen Kugel angegeben. Die von Mie 1908 entwickelte Streulichttheorie basiert auf der Aussage, dass das von einem Partikel erzeugte Streulichtmuster charakteristische Merkmale aufweist, die bei Kenntnis der optischen Parameter eine eindeutige Größenzuordnung ermöglichen. Für Partikel, die deutlich größer als 10 bis 20 µm sind, wird als Vereinfachung die sogenannte Fraunhofer-Auswertung angeboten, die nur die Lichtbeugung auswertet und damit ohne die korrekten optischen Parameter auskommt.

Es kann erfindungsgemäß bevorzugt sein, dass die erfindungsgemäße Beschichtungszusammensetzung oder wärmeempfindliche Aufzeichnungsschicht, wie hierzuvor definiert, mindestens einen weiteren Farbentwickler aus dem Stand der Technik enthalten kann.

Erfindungsgemäß bevorzugt ist eine Beschichtungszusammensetzung oder wärmeempfindliche Aufzeichnungsschicht, wie hierzuvor definiert, umfassend mindestens einen Farbentwickler, der eine Verbindung ist, die eine phenolfreie Verbindung. Der mindestens eine Farbentwickler ist dann ein sogenannter phenolfreier Farbentwickler. Der Begriff "phenolfreie Verbindung" umfasst hierbei auch Gemische phenolfreier Verbindungen bzw. der Begriff "phenolfreier Farbentwickler" umfasst hierbei auch Gemische phenolfreier Farbentwickler. Als "phenolfreie Verbindung" bzw. "phenolfreier Farbentwickler" werden solche Verbindungen verstanden, die als Abbauprodukte vorzugsweise keine, zumindest aber nicht in Wesentlichen, d.h. die Umwelt beeinträchtigenden und/oder allenfalls unterhalb gesetzlicher Grenzwerte liegende, Mengen an Phenolen in die Umwelt freisetzen. Dies ist wünschenswert, da die biologische Abbaubarkeit vieler Phenole sehr schlecht ist und Phenole stark gewässerschädigend sind und schon in geringen Konzentrationen den Geschmack von Wasser und Fischen beeinträchtigen. Phenole müssen deshalb aus dem Abwasser sehr weitgehend entfernt werden.

Die Erfindung betrifft daher in manchen Fällen bevorzugt eine Beschichtungszusammensetzung oder wärmeempfindliche Aufzeichnungsschicht, wie hierzuvor definiert, umfassend mindestens einen phenolfreien Farbentwickler oder ein Gemisch von phenolfreien Farbentwicklern. Beispielsweise kann sich eine in manchen Fällen bevorzugte Beschichtungszusammensetzung oder wärmeempfindliche Aufzeichnungsschicht, enthaltend mindestens einen phenolfreien Farbentwickler, dadurch auszeichnen, dass neben der Verbindung der Formel (I) oder der Formel (II) ein oder mehrere weitere nicht-phenolische Farbentwickler, vorzugsweise ausgewählt aus der Gruppe der Sulfonyl-Harnstoffe, besonders bevorzugt N'-(p-Toluolsulfonyl)-N'-phenyl-harnstoff, N-(p-Toluolsulfonyl)-N'-3-(p-toluolsulphonyl-oxy-phenyl)-harnstoff (*N*-(4-Methylphenylsulfonyl)-*N*'-(3-(4-methylphenylsulfonyloxy)phenyl)harnstoff, Pergafast 201), und/oder 4,4'-Bis-(p-toluylsulfonylureido)-diphenylmethan, und/oder beispielsweise 4-Methyl-N-(2-(3-phenylureido)phenyl)benzolsulfonamid und/oder N-(2-(3-Phenylureido)phenyl)benzolsulfonamid (NKK) vorliegen. NKK kann in einer Alpha- und einer Beta-Modifikation vorliegen, wobei die Alpha-Modifikation einen Schmelzpunkt von 158 °C und die Beta-Modifikation einen Schmelzpunkt von 175 °C aufweist. Weiterhin liegt NKK-Alpha in einer kristallinen Form vor, welche im IR-Spektrum eine Absorptionsbande bei 3322 und 3229 cm⁻¹ aufweist und NKK-Beta liegt in einer kristallinen Form vor, welche im IR-Spektrum eine Absorptionsbande bei 3401±20 cm⁻¹ aufweist.

So kann erfindungsgemäß bevorzugt eine Beschichtungszusammensetzung oder wärmeempfindliche Aufzeichnungsschicht, wie hierzuvor definiert, sein, die ferner mindestens einen weiteren Farbentwickler der Formel (XV) enthält:

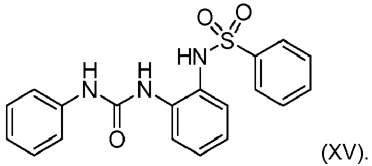

Die Verbindung mit der Formel (XV) ist ebenfalls bereits bekannt und wird beispielsweise in der EP 2923851 A1 beschrieben. Sie wird unter der Bezeichnung NKK (N-(2-(3-phenylureido)phenyl)benzolsulfonamid) vertrieben. Der Zusatz von geringen Mengen der Verbindung der Formel (XV) zu der erfindungsgemäßen Verbindung der Formel (I) oder der Formel (II) kann, sofern erforderlich oder gewünscht, eine auch bereits gute Feuchtebeständigkeit auch über längere Zeiträume stabilisieren, so dass diese Feuchtebeständigkeit beibehalten wird.

So kann erfindungsgemäß bevorzugt eine Beschichtungszusammensetzung oder wärmeempfindliche Aufzeichnungsschicht, wie hierzuvor definiert, sein, die ferner mindestens einen weiteren Farbentwickler der Formel (XVI) enthält:

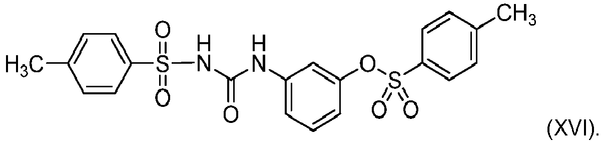

Bei der Verbindung mit der Formel (XVI) handelt es sich um die bereits bekannte Verbindung N-(4-Methylphenylsulfonyl)-N'-(3-(4-methylphenylsulfonyloxy)phenyl)harnstoff, die unter der Bezeichnung Pergafast® 201 vertrieben wird und beispielsweise in der EP 1140515 B1 beschrieben ist. Bei Pergafast® 201 handelt es sich um den am häufigsten verwendeten phenolfreien Farbentwickler. Der Zusatz von geringen Mengen der Verbindung der Formel (XVI) zu der erfindungsgemäßen Verbindung der Formel (I) oder der Formel (II) kann, sofern erforderlich oder gewünscht, die Beständigkeit gegenüber Fetten und Ölen verbessern.

Ebenfalls erfindungsgemäß bevorzugt ist in manchen Fällen eine Beschichtungszusammensetzung oder wärmeempfindliche Aufzeichnungsschicht nach einer der vorherigen beschriebenen und definierten Art, wobei der Anteil des Farbentwicklers oder eines Farbentwicklergemisches in der Beschichtungszusammensetzung oder wärmeempfindlichen Aufzeichnungsschicht beispielsweise wenigstens 10 Gew.-%, insbesondere wenigstens 15 oder 20 Gew.-%, und/oder bis zu maximal 65 Gew.-%, insbesondere bis zu maximal 60 Gew.-%, beträgt, und vorzugsweise 24 bis 60 Gew.-% beträgt, vorzugsweise 35 bis 58 Gew.-%, besonders bevorzugt 39 bis 56 Gew.-%, bezogen auf den gesamten Feststoffanteil der Beschichtungszusammensetzung oder wärmeempfindlichen Aufzeichnungsschicht.

Weiterhin erfindungsgemäß bevorzugt ist eine Beschichtungszusammensetzung oder wärmeempfindliche Aufzeichnungsschicht nach einem der vorherigen Ansprüche, zudem umfassend ein oder mehrere Bestandteile aus der Gruppe bestehend aus Sensibilisatoren, Pigmente, Dispergiermittel, Antioxidationsmittel, Trennmittel, Entschäumer, Lichtstabilisatoren, und Aufheller.

Es kann erfindungsgemäß besonders bevorzugt sein, dass Pigmente regelmäßig in der Beschichtungszusammensetzung vorgesehen werden, um günstige Werte für die üblichen Papierparameter zu erhalten und sicherzustellen.

Erfindungsgemäß bevorzugt ist eine Beschichtungszusammensetzung oder ein wärmeempfindliches Aufzeichnungsmaterial, wobei das Trägersubstrat ein Papier, synthetisches Papier oder eine Kunststofffolie ist. Als Trägersubstrat ist ein nicht oberflächenbehandeltes Streichrohpapier besonders bevorzugt, da es eine gute Recyclingfähigkeit und eine gute Umweltverträglichkeit aufweist. Unter einem nicht oberflächenbehandelten Streichrohpapier ist ein Streichrohpapier zu verstehen, das nicht in einer Leimpresse oder in einer Beschichtungsvorrichtung behandelt wurde. Als Kunststofffolien sind Folien aus Polypropylen oder anderen Polyolefinen bevorzugt. Erfindungsgemäß bevorzugt sind auch Papiere, die mit einem oder mehreren Polyolefinen (insbesondere Polypropylen) beschichtet sind.

In einer Ausführungsvariante ist das Trägersubstrat ein Papier mit einem Anteil aus recycelten Fasern von mindestens 70 Gew.-%, bezogen auf den Gesamtfaserstoffanteil in dem Papier.

Erfindungsgemäß bevorzugt ist ein wärmeempfindliches Aufzeichnungsmaterial, zusätzlich enthaltend eine zwischen dem Trägersubstrat und der wärmeempfindlichen Aufzeichnungsschicht gelegene Zwischenschicht, wobei die Zwischenschicht vorzugsweise Pigmente enthält. Bei den Pigmenten kann es sich um organische Pigmente, anorganische Pigmente oder um eine Mischung aus organischen Pigmenten und anorganischen Pigmenten handeln.

Es ist erfindungsgemäß bevorzugt, wenn die flächenbezogene Masse der Zwischenschicht im Bereich von 5 bis 20 g/m², bevorzugt im Bereich von 7 bis 12 g/m² liegt.

Für den Fall, dass die Zwischenschicht Pigmente enthält, ist es in einer Ausgestaltung der Erfindung bevorzugt, wenn es sich bei den Pigmenten um organische Pigmente, vorzugsweise um organische Hohlkörperpigmente handelt.

Eigene Untersuchungen haben gezeigt, dass die Einbindung von organischen Pigmenten in die Zwischenschicht vorteilhaft ist, da organische Pigmente ein hohes Wärmereflexionsvermögen aufweisen. Durch eine gesteigerte Wärmereflexion der mit organischen Pigmenten ausgestalteten Zwischenschicht wird das Ansprechverhalten der wärmeempfindlichen Aufzeichnungsschicht gegenüber Wärme erhöht, da die eingestrahlte Wärme zumindest teilweise in die wärmeempfindliche Aufzeichnungsschicht reflektiert wird, statt sie an das Trägersubstrat zu leiten. Dadurch wird die Empfindlichkeit und das Auflösungsvermögen des wärmeempfindlichen Aufzeichnungsmaterials deutlich erhöht und ferner die Druckgeschwindigkeit im Thermodrucker gesteigert. Zudem kann der Energieverbrauch während des Druckvorgangs gesenkt werden, was insbesondere bei mobilen Geräten vorteilhaft ist. Hohlkörperpigmente weisen in ihrem Inneren Luft auf, wodurch sie üblicherweise eine noch höhere Wärmereflexion aufweisen und die Empfindlichkeit und das Auflösungsvermögen des wärmeempfindlichen Aufzeichnungsmaterials können noch weiter erhöht werden.

Für den Fall, dass die Zwischenschicht Pigmente enthält, ist es in einer alternativen Ausgestaltung der Erfindung bevorzugt, wenn es sich bei den Pigmenten um anorganische Pigmente handelt, vorzugsweise ausgewählt aus der Liste bestehend aus kalziniertem Kaolin, Siliziumoxid, Bentonit, Kalziumcarbonat, Aluminiumoxid und Böhmit.

Werden in die zwischen der Aufzeichnungsschicht und dem Substrat gelegene Zwischenschicht anorganische Pigmente eingebunden, können diese Pigmente die durch Hitzeeinwirkung des Thermokopfes verflüssigten Bestandteile (z.B. Wachse) der wärmeempfindlichen Aufzeichnungsschicht bei der Schriftbildausbildung aufnehmen und begünstigen damit eine noch sicherere und schnellere Funktionsweise der wärmeinduzierten Aufzeichnung.

Kalziniertes Kaolin hat sich aufgrund seines großen Absorptionsreservoirs in den Hohlräumen besonders bewährt. Auch Mischungen aus mehreren verschiedenartigen anorganischen Pigmenten sind vorstellbar.

Das Mengenverhältnis zwischen organischem und anorganischem Pigment ist eine Kombination der von den beiden Pigmentarten bewirkten Effekte, der besonders vorteilhaft gelöst wird, wenn die Pigmentmischung zu 5 bis 30 Gew.-% bzw. besser zu 8 bis 20 Gew.-% aus organischem und zu 95 bis 70 Gew.-% bzw. besser zu 92 bis 80 Gew.% aus anorganischem Pigment besteht. Pigmentmischungen aus unterschiedlichen organischen Pigmenten und/oder anorganischen Pigmenten sind vorstellbar.

Erfindungsgemäß bevorzugt ist eine Beschichtungszusammensetzung oder ein wärmeempfindliches Aufzeichnungsmaterial, wobei die Zwischenschicht ggf. neben den anorganischen und/oder organischen Pigmenten, mindestens ein Bindemittel enthält, vorzugsweise auf Basis eines synthetischen Polymers, wobei Styrol-Butadien-Latex besonders gute Ergebnisse liefert. Die Verwendung eines synthetischen Bindemittels unter Beimischung mindestens eines natürlichen Polymers, wie besonders bevorzugt Stärke, stellt eine besonders geeignete Ausführungsform dar. Im Rahmen von Versuchen mit anorganischen Pigmenten wurde ferner festgestellt, dass ein Bindemittel-Pigment-Verhältnis innerhalb der Zwischenschicht zwischen 3:7 und 1:9, jeweils bezogen auf Gew.-% in der Zwischenschicht, eine besonders geeignete Ausführungsform darstellt.

Erfindungsgemäß bevorzugt ist eine Beschichtungszusammensetzung oder ein wärmeempfindliches Aufzeichnungsmaterial, wobei der Farbbildner ausgewählt ist aus Derivaten von Verbindungen aus der Gruppe bestehend aus Fluoran, Phthalid, Lactam, Triphenylmethan, Phenothiazin und Spiropyran.

Eigene Untersuchungen haben gezeigt, dass diese Farbbildner besonders gute Eigenschaften in Kombination mit dem erfindungsgemäß verwendeten Farbentwicklergemisch aufweisen.

Eine bevorzugte erfindungsgemäße Beschichtungszusammensetzung oder wärmeempfindliches Aufzeichnungsmaterial weist als Farbbildner vorzugsweise Verbindungen des Fluorantyps auf, ausgewählt aus der Gruppe bestehend aus 3-Diethylamino-6-methyl-7-anilinofluoran, 3-Diethylamino-6-methyl-7-(3'-methylphenylamino)fluoran (6'-(Diethylamino)-3'-methyl-2'-(m-toluylamino)-3H-spiro[isobenzofuran-1,9'-xanthen]-3-one; ODB-7), 3-Di-n-pentyl-amino-6-methyl-7-anilinofluoran, 3-(Diethylamino)-6-Methyl-7-(3-Methylphenylamino)fluoran, 3-Di-n-butylamino-7-(2-chloranilino)fluoran, 3-Diethylamino-7-(2-chloranilino)fluoran, 3-Diethylamino-6-methyl-7-xylidinofluoran, 3-Diethylamino-7-(2-carbomethoxyphenylamino)fluoran, 3-Pyrrolidino-6-methyl-7-anilinofluoran, 3-Pyrrolidino-6-methyl-7-(4-n-butyl-phenylamino)fluoran, 3-Piperidino-6-methyl-7-anilinofluoran, 3-N-n-Dibutylamin-6-methyl-7-anilinofluoran (ODB-2), 3-(N-Methyl-N-cyclohexyl)amino-6-methyl-7-anilinofluoran, 3-(N-Methyl-N-propyl)amino-6-methyl-7-anilinofluoran, 3-(N-Methyl-N-tetrahydrofurfuryl)amino-6-methyl-7-anilinofluoran), 3-(N-Ethyl-N-isoamyl)amino-6-methyl-7-anilinofluoran, 3-(N-Ethyl-N-toluyl)amino-6-methyl-7-anilinofluoran, 3-(N-Ethyl-N-tetrahydrofuryl)amino-6-methyl-7-anilinofluoran, 3-(N-Ethyl-N-isopentylamino)-6-methyl-7-anilinofluoran, 3-(N-Ethyl-4-toluidino)6-methyl-7-(4-toluidino)fluoran und 3-(N-Cyclopentyl-N-ethyl)amino-6-methyl-7-anilinofluoran.

Ebenfalls bevorzugt sind erfindungsgemäße Beschichtungszusammensetzungen oder wärmeempfindliche Aufzeichnungsmaterialien, die als Farbbildner die in den Absätzen [0049] bis [0052] der EP 2923851 A1 genannten Verbindungen enthalten.

Erfindungsgemäß besonders bevorzugt ist eine Beschichtungszusammensetzung oder ein wärmeempfindliches Aufzeichnungsmaterial, wobei der Farbbildner ausgewählt ist aus der Gruppe bestehend aus 3-N-Di-n-butylamin-6-methyl-7-anilinofluoran (ODB-2) und 3-(N-Ethyl-N-isopentylamino)-6-methyl-7-anilinofluoran.

Erfindungsgemäß bevorzugt ist eine Beschichtungszusammensetzung oder ein wärmeempfindliches Aufzeichnungsmaterial, wobei die Beschichtungszusammensetzung oder wärmeempfindliche Aufzeichnungsschicht einen Sensibilisator enthält.

Bei Verwendung eines Sensibilisators wird der Sensibilisator während der Zuführung von Wärme während des Druckvorgangs zuerst geschmolzen und der geschmolzene Sensibilisator löst die in der Beschichtungszusammensetzung oder wärmeempfindlichen Aufzeichnungsschicht nebeneinander vorliegenden Farbbildner und Farbentwickler und/oder senkt die Schmelztemperatur der Farbbildner und Farbentwickler, um eine Farbentwicklungsreaktion herbeizuführen. Der Sensibilisator nimmt an der Farbenwicklungsreaktion selbst nicht teil.

Unter einem Sensibilisator werden daher Substanzen verstanden, die zur Einstellung der Schmelztemperatur der Beschichtungszusammensetzung oder wärmeempfindlichen Aufzeichnungsschicht dienen und mit denen vorzugsweise eine Schmelztemperatur von ca. 70 bis 80 °C eingestellt werden kann, ohne dass die Sensibilisatoren selbst an der Farbenwicklungsreaktion beteiligt sind.

Erfindungsgemäß können als Sensibilisatoren beispielsweise Fettsäuresalze, Fettsäureester und Fettsäureamide (z.B. Zinkstearat, Stearinsäureamid, Palmitinsäureamid, Oleinsäureamid, Laurinsäureamid, Ethylen- und Methylenbisstearinsäureamid, Methylolstearinsäureamid), Naphthalinderivate, Biphenylderivate, Phtalate und Terephtalate eingesetzt werden.

Erfindungsgemäß besonders bevorzugt ist eine Beschichtungszusammensetzung oder ein wärmeempfindliches Aufzeichnungsmaterial, wobei der Sensibilisator ausgewählt ist aus der Gruppe bestehend aus 1,2-Bis(3-methylphenoxy)ethan (andere Bezeichnungen: 3,3'-(Ethylenebisoxy)bistoluol, 1,2-Bis(3-methylphenyloxy)ethan (DMPE), Ethylenglycol-m-toluylether (EGTE) [1,2-Di(m-methylphenoxy)ethan (DMPE, CAS® RN laut DB "Chemical Book" eine andere Bezeichnung für EGTE)], 1,1'-[1,2-Ethanediylbis(oxy)]bis[3-methyl-benzol, CAS® RN 54914-85-1), 1,2-Diphenoxyethan (DPE, gegebenenfalls auch unter Kurzbezeichnung "EGPE", Ethylenglycolphenoxyethan, CAS® RN 104-66-5), 2-(2H-Benzotriazol-2-yl)-p-cresol, 2,2'-Bis(4-methoxyphenoxy)diethylether, 4,4'-Diallyloxydiphenylsulfon, 4-Acetylacetophenon, 4-Benzybiphenyl, Acetoessigsäureanilide, Benzylnaphthylether (BNE, Benzyl-2-naphthylether), Benzyl-4-(benzyloxy)benzoat, Benzylparaben, Bis(4-chlorbenzyl)oxalatester, Bis(4-methoxyphenyl)ether, Dibenzyloxalat, Dibenzylterephthtalat, Dimethylterephtalat (DMT), Dimethylsulfon, Diphenyladipat, Diphenylsulfon, Ethylenglycol-m-toluylether (EGTE), Ethylenbisstearinsäureamind, Fettsäureanilide, m-Terpenyl, Stearamid (Stearinsäureamid; CAS® RN 124-26-5; z.B. Hymicron L-271), N-(Hydroxmethyl)stearamid (CAS® RN 3370-35-2; z.B. D757; N-Hydroxymethylstearinsäureamid), N-Methylolstearamid), N-Stearylharnstoff, N-Stearylstearinsäureamid, p-Benzylbiphenyl, Phenylbenzolsulfonatester, Salicylsäureanilid, Stearamid und α,α'-Diphenoxyxylen, wobei Benzylnaphthylether (BNE), Diphenylsulfon (DPS), Ethylenglycol-m-toluylether (EGTE), Ethylenglycolphenoxyethan (EGPE), 1,2-Di(m-methylphenoxy)ethan (DMPE), 1,2-Diphenoxyethan (DPE), Stearamid (Stearinsäureamid; CAS® RN 124-26-5; z.B. Hymicron L-271) und N-(Hydroxmethyl)stearamid (CAS® RN 3370-35-2; z.B. D757; N-Hydroxymethylstearinsäureamid) besonders bevorzugt sind.

Ebenfalls bevorzugt sind erfindungsgemäße Beschichtungszusammensetzungen oder wärmeempfindliche Aufzeichnungsmaterialien, die als Sensibilisator die in den Absätzen [0059] bis [0061] der EP 2923851 A1 genannten Verbindungen enthalten.

Entsprechend einer ersten bevorzugten Ausführung werden diese Sensibilisatoren jeweils allein, das bedeutet, nicht in Kombination mit den anderen genannten Sensibilisatoren aus der vorstehenden Liste, eingesetzt. Entsprechend einer zweiten, gleichsam bevorzugten Ausführung werden mindestens zwei Sensibilisatoren, ausgesucht aus der vorstehenden Liste, in die Beschichtungszusammensetzung oder wärmeempfindliche Aufzeichnungsschicht eingebunden.

Erfindungsgemäß bevorzugt ist eine Beschichtungszusammensetzung oder ein wärmeempfindliches Aufzeichnungsmaterial, wobei der Sensibilisator einen Schmelzpunkt von 60 °C bis 180 °C, bevorzugt einem Schmelzpunkt von 80 °C bis 140 °C aufweist.

Gewünschtenfalls bevorzugt sind Beschichtungszusammensetzungen oder wärmeempfindliche Aufzeichnungsmaterialien, wobei die wärmeempfindliche Aufzeichnungsschicht ein Bindemittel enthält, vorzugsweise ein vernetztes oder unvernetztes Bindemittel ausgewählt aus der Gruppe bestehend aus Polyvinylalkohol, carboxylgruppen-modifiziertem Polyvinylalkohol, Ethylen-Vinylalkohol-Copolymer, einer Kombination aus Polyvinylalkohol und Ethylen-Vinylalkohol-Copolymer, silanolgruppen-modifiziertem Polyvinylalkohol, diacetonmodifiziertem Polyvinylalkohol, Acrylat-Copolymer und filmbildenden Acrylcopolymeren.

Bevorzugt enthält die Beschichtungsmasse zur Ausbildung der wärmeempfindlichen Aufzeichnungsschicht des erfindungsgemäßen wärmeempfindlichen Aufzeichnungsmaterials, bzw. das erfindungsgemäße wärmeempfindliche Aufzeichnungsmaterial, neben einem oder mehreren Bindemitteln ein oder mehrere Vernetzungsmittel für das oder die Bindemittel. Bevorzugt ist das Vernetzungsmittel ausgewählt aus der Gruppe bestehend aus Zirconiumcarbonat, Polyamidaminepichlorhydrinharzen, Borsäure, Glyoxal, Dihydroxy bis(ammonium lactato)titanium(IV) (CAS® RN 65104-06-5; Tyzor LA) und Glyoxalderivaten.

Eine erfindungsgemäße Beschichtungszusammensetzung oder erfindungsgemäßes wärmeempfindliches Aufzeichnungsmaterial, dessen wärmeempfindliche Aufzeichnungsschicht aus einer solchen Beschichtungsmasse, enthaltend ein oder mehrere Bindemittel und ein oder mehrere Vernetzungsmittel für das oder die Bindemittel, gebildet ist, enthält in der wärmeempfindlichen Aufzeichnungsschicht ein oder mehrere durch Umsetzung mit einem oder mehreren Vernetzungsmitteln vernetzte Bindemittel, wobei das oder die Vernetzungsmittel ausgewählt sind aus der Gruppe bestehend aus Zirconiumcarbonat, Polyamidaminepichlorhydrinharzen, Borsäure, Glyoxal, Dihydroxy-bis(ammonium lactato)titanium(IV) (CAS® RN 65104-06-5; Tyzor LA) und Glyoxalderivaten. Unter "vernetztes Bindemittel" wird dabei das durch Umsetzung eines Bindemittels mit einem oder mehreren Vernetzungsmitteln gebildete Reaktionsprodukt verstanden.

Erfindungsgemäß bevorzugt ist eine Beschichtungszusammensetzung oder ein wärmeempfindliches Aufzeichnungsmaterial, wobei die flächenbezogene Masse der wärmeempfindlichen Aufzeichnungsschicht im Bereich von 1,5 bis 8 g/m² liegt, vorzugsweise im Bereich von 1,5 bis 6 g/m², weiter bevorzugt im Bereich von 2 bis 6 g/m², besonders bevorzugt im Bereich von 2,0 bis 5,5 g/m².

Ebenfalls erfindungsgemäß bevorzugt ist in manchen Fällen eine Beschichtungszusammensetzung oder wärmeempfindliche Aufzeichnungsschicht nach einer der vorherigen beschriebenen und definierten Art, wobei der Anteil des Farbentwicklers oder eines Farbentwicklergemisches in der Beschichtungszusammensetzung oder wärmeempfindlichen Aufzeichnungsschicht beispielsweise wenigstens 10 Gew.-%, insbesondere wenigstens 15 oder 20 Gew.-%, und/oder bis zu maximal 65 Gew.-%, insbesondere bis zu maximal 60 Gew.-%, beträgt, und vorzugsweise 24 bis 60 Gew.-% beträgt, vorzugsweise 35 bis 58 Gew.-%, besonders bevorzugt 39 bis 56 Gew.-%, bezogen auf den gesamten Feststoffanteil der Beschichtungszusammensetzung oder wärmeempfindlichen Aufzeichnungsschicht.

In erfindungsgemäßen Aufzeichnungsmaterialien können zusätzlich noch Bildstabilisatoren, Dispergiermittel, Antioxidationsmittel, Trennmittel, Entschäumer, Lichtstabilisatoren, Aufheller, wie sie im Stand der Technik bekannt sind, eingesetzt werden. Jede der Komponenten wird üblicherweise in einer Menge von 0,01 bis 15 Gew.-%, insbesondere - mit Ausnahme von Entschäumer - 0,1 bis 15 Gew.-%, vorzugsweise 1 bis 10 Gew.-% eingesetzt, bezogen auf den gesamten Feststoffanteil der wärmeempfindlichen Aufzeichnungsschicht. Bei Einsatz von Entschäumer in den diesbezüglichen Rezepturen kann in den erfindungsgemäßen Aufzeichnungsmaterialien der Entschäumer in Mengen von 0,03 bis 0,05 Gew.-% vorhanden sein, bezogen auf den gesamten Feststoffanteil der wärme-empfindlichen Aufzeichnungsschicht.

In einer Ausführungsform betrifft die Erfindung auch eine Streichfarbe zur Herstellung einer Beschichtungszusammensetzung oder einer wärmeempfindlichen Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, wie erfindungsgemäß hierin definiert.

Der Begriff "Streichfarbe" bezeichnet hierbei einen in der Papierindustrie geläufigen Fachbegriff bei der Herstellung sogenannter "gestrichener" Papiere. Der Begriff "Streichfarbe" (auch Streichmasse) ist in der Papierindustrie geläufig und bezeichnet Anstrichmittel, enthaltend oder bestehend aus Pigmenten, Bindemittel und Additiven, die auf die Papieroberfläche mit speziellen Streichmaschinen zur Oberflächenveredelung des Papiers aufgetragen (gestrichen) werden. Diese Papiere werden als "gestrichene Papiere" bezeichnet und zeichnen sich durch eine bessere Bedruckbarkeit und Haptik aus.

Der Begriff "Streichfarbe" ist somit der Oberbegriff für alle streichfähigen Beschichtungsmassen, Zubereitungen und/oder Lösungen in der Papierindustrie. Daher ist der Vorstrich bzw. Zwischenstrich eine besondere Ausgestaltung einer Streichfarbe und zwar diejenige, welche zuerst auf das Papiersubstrat aufgebracht wird. Als nächste Schicht wird häufig eine Streichfarbe als Funktionsbeschichtung aufgebracht, beispielsweise um eine Thermofunktionalität oder eine Barrierefunktionalität zur Verfügung zu stellen. Als nächste Schicht kann optional eine Streichfarbe zur Ausbildung einer Schutzfunktion aufgebracht werden, beispielsweise eine Schutzschicht ("Topcoat"). Alternativ kann beispielsweise auf eine Thermoschicht eine silikonhaltige Streichfarbe zur Ausbildung einer Releaseschicht aufgebracht werde. Eine silikonhaltige Streichfarbe kann alternativ auch auf eine Schutzschicht aufgebracht werden. Auf die der silikonhaltigen Schicht gegenüberliegende Seite des Papiersubstrats wird häufig eine Klebstoff-haltige Streichfarbe aufgebracht. Vor der Klebstoffhaltigen Streichfarbe kann ebenfalls eine Streichfarbe als Vorstrich auf das Papiersubstrat aufgebracht werden.

Im Rahmen der vorliegenden Erfindung wird als eine erfindungsgemäße Streichfarbe eine solche verstanden, die als Funktionsbeschichtung auf ein Substrat, das gewünschtenfalls bereits einen oder mehrere Vorstriche aufweisen kann, aufgebracht werden kann, um auf dem Substrat eine Thermofunktionalität bereitzustellen, d.h. eine solche erfindungsgemäße Streichfarbe umfasst einen oder mehrere Farbstoffvorläufer; und einen oder mehrere Farbentwickler, wobei der eine oder zumindest einer der mehreren Farbentwickler eine Verbindung ist, wie erfindungsgemäß hierin definiert.

Zum Auftragen der Streichfarbe auf einem Trägersubstrat kennt der Fachmann verschiedene Techniken des Streichens, beispielsweise: Bladestreichen, Streichen mit Filmpresse, Gussstreichen, Vorhangstreichen (Curtain Coating), Sprühstreichen.

In einer weiteren Ausführungsform betrifft die Erfindung ein wärmeempfindliches Aufzeichnungsmaterial, umfassend
- ein Trägersubstrat,
   und
- eine wärmeempfindliche Aufzeichnungsschicht, wie erfindungsgemäß
   hierin definiert.

Erfindungsgemäß bevorzugt ist ein vorstehendes wärmeempfindliches Aufzeichnungsmaterial, zusätzlich enthaltend eine zwischen dem Trägersubstrat und der wärmeempfindlichen Aufzeichnungsschicht gelegene Zwischenschicht, wobei die Zwischenschicht vorzugsweise Pigmente enthält. Weiter bevorzugt ist hierbei ein erfindungsgemäßes wärmeempfindliches Aufzeichnungsmaterial, wobei es sich bei den Pigmenten um
a) organische Pigmente, vorzugsweise um organische Hohlkörperpigmente handelt und/oder
b) anorganische Pigmente handelt, vorzugsweise ausgewählt aus der Liste be-stehend aus kalziniertem Kaolin, Siliziumoxid, Bentonit, Kalziumkarbonat, Alu-miniumoxid und Böhmit.

In einer Ausgestaltung der erfindungsgemäßen wärmeempfindlichen Aufzeichnungsmaterialien ist die wärmeempfindliche Aufzeichnungsschicht vollständig oder teilweise mit einer Schutzschicht bedeckt. Durch die Anordnung einer die wärmeempfindliche Aufzeichnungsschicht abdeckenden Schutzschicht ist die wärmeempfindliche Aufzeichnungsschicht auch nach außen bzw. zum Trägersubstrat der nächsten Lage innerhalb einer Rolle abgeschirmt, sodass sie ein Schutz vor äußeren Einflüssen erfolgt.

Eine derartige Schutzschicht hat in solchen Fällen neben dem Schutz der unter der Schutzschicht angeordneten wärmeempfindlichen Aufzeichnungsschicht vor Umwelteinflüssen häufig den zusätzlichen positiven Effekt, die Bedruckbarkeit des erfindungsgemäßen wärmeempfindlichen Aufzeichnungsmaterials insbesondere im Indigo-. Offset- und Flexodruck zu verbessern. Aus diesem Grund kann es für bestimmte Anwendungsfälle erwünscht sein, dass das erfindungsgemäße wärmeempfindliche Aufzeichnungsmaterial eine Schutzschicht aufweist, obwohl durch die Präsenz eines Farbentwicklergemisches wie oben definiert in der wärmeempfindlichen Aufzeichnungsschicht des erfindungsgemäßen wärmeempfindlichen Aufzeichnungsmaterials die Beständigkeit eines auf einem erfindungsgemäßen wärmeempfindlichen Aufzeichnungsmaterial erhältlichen Thermoausdrucks gegenüber Stoffen ausgewählt aus der Gruppe bestehend aus Wasser, Alkoholen, Fetten, Ölen und deren Mischungen auch ohne Schutzschicht bereits ausreichend ist.

Bevorzugt enthält die Schutzschicht des erfindungsgemäßen wärmeempfindlichen Aufzeichnungsmaterials ein oder mehrere vernetzte oder unvernetzte Bindemittel ausgewählt aus der Gruppe bestehend aus mit Carboxylgruppen modifizierten Polyvinylalkoholen, mit Silanolgruppen modifizierten Polyvinylalkoholen, Diacetonmodifizierten Polyvinylalkoholen, acetoacetyl-modifizierten Polyvinylalkohol, teil- und vollverseiften Polyvinylalkoholen und filmbildenden Acrylcopolymeren.

Bevorzugt, sofern vorhanden, enthält die Beschichtungsmasse zur Ausbildung der Schutzschicht des erfindungsgemäßen wärmeempfindlichen Aufzeichnungsmaterials neben einem oder mehreren Bindemitteln ein oder mehrere Vernetzungsmittel für das oder die Bindemittel. Bevorzugt ist das Vernetzungsmittel dann ausgewählt aus der Gruppe bestehend aus Borsäure, Polyaminen, Epoxyharzen, Dialdehyden, Formaldehydoligomeren, Epichlorhydrinharzen, Adipinsäuredihydrazid, Melaminformaldehyd, Harnstoff, Methylolharnstoff, Ammoniumzirconiumcarbonat, Natrium/Calciumglyoxylat, Polyamidepichlorhydrinharzen und Tyzor LA.

Ein erfindungsgemäßes wärmeempfindliches Aufzeichnungsmaterial, dessen Schutzschicht aus einer solchen Beschichtungsmasse enthaltend ein oder mehrere Bindemittel und ein oder mehrere Vernetzungsmittel für das oder die Bindemittel gebildet ist, enthält in der Schutzschicht ein oder mehrere durch Umsetzung mit einem oder mehreren Vernetzungsmitteln vernetzte Bindemittel, wobei das oder die Vernetzungsmittel ausgewählt sind aus der Gruppe bestehend aus Borsäure, Polyaminen, Epoxyharzen, Dialdehyden, Formaldehydoligomeren, Epichlorhydrinharzen, Adipinsäuredihydrazid Melaminformaldehyd, Harnstoff, Methylolharnstoff, Ammoniumzirconiumcarbonat und Polyamidepichlorhydrinharzen. Unter "vernetztes Bindemittel" wird dabei das durch Umsetzung eines Bindemittels mit einem oder mehreren Vernetzungsmitteln gebildete Reaktionsprodukt verstanden.

In einer ersten Ausführungsvariante ist die die wärmeempfindliche Aufzeichnungsschicht ganz oder teilweise abdeckende Schutzschicht erhältlich aus einer Beschichtungsmasse umfassend einen oder mehrere Polyvinylalkohole und ein oder mehrere Vemetzungsmittel. Es ist bevorzugt, dass der Polyvinylalkohol der Schutzschicht mit Carboxyl- oder insbesondere Silanolgruppen modifiziert ist. Auch Mischungen verschiedener Carboxylgruppen- oder Silanol-modifizierter Polyvinylalkohole sind bevorzugt einsetzbar. Eine solche Schutzschicht besitzt eine hohe Affinität gegenüber der im Offset-Druckprozess eingesetzten, bevorzugt UV-vernetzenden Druckfarbe (UV steht für: Ultraviolettstrahlung). Dies unterstützt entscheidend dabei, die Forderung nach einer hervorragenden Bedruckbarkeit innerhalb des Offset-Drucks zu erfüllen.

Das oder die Vernetzungsmittel für die Schutzschicht gemäß dieser Ausführungsvariante sind vorzugsweise ausgewählt aus der Gruppe bestehend aus Borsäure, Polyaminen, Epoxyharzen, Dialdehyden, Formaldehydoligomeren, Polyaminepichlorhydrinharz, Adipinsäuredihydrazid, Melaminformaldehyd und Tyzor LA. Auch Mischungen verschiedener Vernetzungsmittel sind möglich.

Bevorzugt liegt in der Beschichtungsmasse zur Ausbildung der Schutzschicht gemäß dieser Ausführungsvariante das Gewichtsverhältnis des modifizierten Polyvinylalkohols zu dem Vernetzungsmittel in einem Bereich von 20 : 1 bis 5 : 1 und besonders bevorzugt in einem Bereich von 12 : 1 bis 7 : 1. Besonders bevorzugt ist ein Verhältnis des modifizierten Polyvinylalkohols zum Vernetzungsmittel im Bereich von 100 Gewichtsteilen zu 8 bis 11 Gewichtsteilen.

Besonders gute Ergebnisse wurden erzielt, wenn die Schutzschicht gemäß dieser Ausführungsvariante zusätzlich ein anorganisches Pigment enthält. Dabei ist das anorganische Pigment vorzugsweise ausgewählt aus der Gruppe bestehend aus Siliziumdioxid, Bentonit, Aluminiumhydroxid, Kalziumcarbonat, Kaolin und Mischungen aus den genannten anorganischen Pigmenten.

Es ist bevorzugt, die Schutzschicht gemäß dieser Ausführungsvariante mit einer flächenbezogenen Masse in einem Bereich von 1,0 g/m² bis 6 g/m² und besonders bevorzugt von 1,2 g/m² bis 3,8 g/m² aufzutragen. Dabei wird die Schutzschicht bevorzugt einlagig ausgebildet.

In einer zweiten Ausführungsvariante umfasst die Beschichtungsmasse zur Ausbildung der Schutzschicht ein wasserunlösliches, selbstvernetzendes Acrylpolymer als Bindemittel, ein Vernetzungsmittel und einen Pigmentbestandteil, wobei der Pigmentbestandteil der Schutzschicht aus einem oder mehreren anorganischen Pigmenten besteht und mindestens 80 Gew.-% aus einem hoch gereinigten alkalisch aufbereiteten Bentonit gebildet sind, das Bindemittel der Schutzschicht aus einem oder aus mehreren wasserunlöslichen, selbstvernetzenden Acrylpolymeren besteht und das Bindemittel-/Pigmentverhältnis in einem Bereich von 7 : 1 bis 9 : 1 liegt.

Ein selbstvernetzendes Acrylpolymer innerhalb der Schutzschicht gemäß der hier beschriebenen zweiten Ausführungsvariante ist vorzugsweise ausgewählt aus der Gruppe bestehend aus Styrol-Acrylsäureester-Copolymerisaten, Acrylamidgruppen enthaltenden Copolymerisaten aus Styrol und Acrylsäureester sowie Copolymeren auf Basis von Acrylnitril, Methacrylamid und Acrylester. Letztere sind bevorzugt. Als Pigment kann alkalisch aufbereiteter Bentonit, natürliches oder gefälltes Kalziumkarbonat, Kaolin, Kieselsäure oder Aluminiumhydroxid in die Schutzschicht eingebunden sein. Bevorzugte Vernetzungsmittel sind ausgewählt aus der Gruppe bestehend aus zyklischem Harnstoff, Methylolharnstoff, Ammoniumzirconiumcarbonat und Polyamidepichlorhydrinharzen.

Durch die Wahl eines wasserunlöslichen, selbstvernetzenden Acrylpolymers als Bindemittel und dessen Gewichtsverhältnis (i) zum Pigment in einem Bereich von 7 : 1 bis 9: 1 sowie (ii) zum Vernetzungsmittel größer als 5 : 1 ist schon bei einer Schutzschicht mit relativ geringer flächenbezogener Masse eine hohe Umweltresistenz des erfindungsgemäßen wärmeempfindlichen Aufzeichnungsmaterials gegeben. Solche Gewichtsverhältnisse sind somit bevorzugt.

Die Schutzschicht selbst kann unter Einsatz üblicher Streichwerke aufgetragen werden, wofür unter anderem eine Streichfarbe nutzbar ist, bevorzugt mit einer flächenbezogene Masse in einem Bereich von 1,0 bis 4,5 g/m². In einer alternativen Variante ist die Schutzschicht aufgedruckt. Verarbeitungstechnisch und hinsichtlich ihrer technologischen Eigenschaften besonders geeignet, sind solche Schutzschichten, die durch Einwirkung aktinischer Strahlung härtbar sind. Unter dem Begriff "aktinische Strahlung" sind UV- oder ionisierende Strahlungen, wie Elektronenstrahlen, zu verstehen.

Das Erscheinungsbild der Schutzschicht wird maßgeblich durch die Art der Glättung und der die Friktion im Glättwerk und Kalander beeinflussenden Walzenoberflächen und deren Materialien bestimmt. Insbesondere wegen bestehender Marktanforderungen wird eine Rauhigkeit (Parker Print Surf Rauhigkeit) der Schutzschicht von kleiner als 2 µm (bestimmt entsprechend der DIN ISO 8791-4:2008-05 Papier, Pappe und Karton - Bestimmung der Rauheit/Glätte (Luftstromverfahren) - Teil 4: Print-Surf-Verfahren (ISO 8791-4:2007)) als bevorzugt angesehen. Besonders bewährt hat sich im Rahmen der dieser Erfindung vorausgegangenen Versuchsarbeiten die Verwendung von Glättwerken, bei denen NipcoFlex™- oder zonengeregelte Nipco-P™-Walzen zum Einsatz kommen; die Erfindung ist jedoch hierauf nicht beschränkt.

Ein weiterer Aspekt der vorliegenden Erfindung betrifft eine Verwendung eines erfindungsgemäßen wärmeempfindlichen Aufzeichnungsmaterials als Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten.

Ticket-in, Ticket-out (TITO) ist eine Technologie, welche beispielsweise in moderneren Spielautomaten eingesetzt wird. Ein TITO-Automat druckt ein TITO-Ticket (Barcode-Ticket) aus, welches entweder gegen Bargeld eingetauscht oder in andere TITO-Automaten eingeführt werden kann. TITO-Automaten verfügen über eine Netzwerkschnittstelle zur Kommunikation mit einem zentralen System, welches die Guthaben der TITO-Tickets Barcode-Tickets nachverfolgt. Diese Technologie ist überall dort einsetzbar, wo veränderbare Guthaben erforderlich sind, jedoch kein Bargeld eingesetzt werden soll, beispielsweise in Kantinen, Mensen, Freizeitparks, Schwimmbädern und/oder Saunen.

Ein weiter Aspekt der vorliegenden Erfindung betrifft Produkte, vorzugsweise Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten, umfassend ein erfindungsgemäßes wärmeempfindliches Aufzeichnungsmaterial.

Ein weiterer Aspekt der vorliegenden Erfindung betrifft ein Verfahren zur Herstellung eines wärmeempfindlichen Aufzeichnungsmaterials, mindestens umfassend folgende Verfahrensschritte:
i. Bereitstellen oder Herstellen eines Trägersubstrates; sowie Bereitstellen oder Herstellen einer Beschichtungszusammensetzung, wie diese hierin erfindungsgemäß beschrieben und definiert ist, oder einer Streichfarbe, wie diese hierin erfindungsgemäß beschrieben und definiert ist, umfassend eine Verbindung der Formel (I) wie in einem erfindungsgemäßen wärmeempfindlichen Aufzeichnungsmaterial eingesetzt und/oder eine Verbindung der Formel (II) wie in einem erfindungsgemäßen wärmeempfindlichen Aufzeichnungsmaterial oder Streichfarbe eingesetzt;
ii. Aufbringen der bereitgestellten oder hergestellten Beschichtungszusammensetzung auf das bereitgestellte oder hergestellte Trägersubstrat, oder auf eine darauf angeordnete Zwischenschicht;
iv. Trocknen der aufgebrachten Beschichtungszusammensetzung, so dass eine wärmeempfindliche Aufzeichnungsschicht resultiert, die gemeinsam mit dem Trägersubstrat in einem wärmeempfindlichen Aufzeichnungsmaterial vorliegt.

Erfindungsgemäß bevorzugt ist ein Verfahren zusätzlich umfassend die Verfahrensschritte
a) Bereitstellen oder Herstellen einer Beschichtungszusammensetzung oder Streichfarbe umfassend Pigmente;
b) Aufbringen der bereitgestellten oder hergestellten Beschichtungszusammensetzung oder Streichfarbe auf dem Trägersubstrat;
c) Trocknen der aufgebrachten Beschichtungszusammensetzung oder Streichfarbe unter Ausbildung einer Zwischenschicht;
wobei die Verfahrensschritte a) bis c) vor dem Verfahrensschritt ii. durchgeführt werden und die Zwischenschicht zwischen dem Trägersubstrat und der wärmeempfindlichen Aufzeichnungsschicht angeordnet ist. Sofern eine Zwischenschicht ausgebildet wird, erfolgt das Aufbringen der bereitgestellten oder hergestellten Beschichtungszusammensetzung in Schritt iii. des erfindungsgemäßen Verfahrens auf die ausgebildete Zwischenschicht und nicht direkt auf das bereitgestellte oder hergestellte Trägersubstrat.

Erfindungsgemäß ebenfalls bevorzugt ist ein Verfahren zusätzlich umfassend die Verfahrensschritte
A) Bereitstellen oder Herstellen einer Beschichtungszusammensetzung;
B) Aufbringen der bereitgestellten oder hergestellten Beschichtungszusammensetzung auf der wärmeempfindlichen Aufzeichnungsschicht;
C) Trocknen der aufgebrachten Beschichtungszusammensetzung unter Ausbildung einer Schutzschicht;
wobei die Verfahrensschritte A) bis C) nach dem Verfahrensschritt iv. durchgeführt werden und die Schutzschicht auf der wärmeempfindlichen Aufzeichnungsschicht angeordnet ist.

Erfindungsgemäß bevorzugt kann ein Verfahren sein, zur Herstellung eines erfindungsgemäßen wärmeempfindlichen Aufzeichnungsmaterials oder einer erfindungsgemäßen wärmeempfindlichen Aufzeichnungsschicht, das ferner den Verfahrensschritt des Aufbringens einer die wärmeempfindliche Aufzeichnungsschicht vollständig oder teilweise bedeckenden Schutzschicht und Trocknen der Schutzschicht umfasst, so dass eine wärmeempfindliche Aufzeichnungsschicht resultiert, die gemeinsam mit dem Trägersubstrat in einem wärmeempfindlichen Aufzeichnungsmaterial vorliegt und vollständig oder teilweise mit der Schutzschicht bedeckt ist.

Die Erfindung betrifft weiterhin eine Verbindung, vorzugsweise zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei
(1) die Verbindung umfasst:
   a) mindestens eine (lineare) strukturelle Einheit der Formel (I) (Milchsäure-Einheit) wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie in Anspruch 1 angegeben und definiert, und
   b) unabhängig voneinander, eine oder zwei endständige Elektronenakzeptorgruppen für den Farbentwickler enthält, wobei mindestens eine der Elektronenakzeptorgruppen keine Carboxylgruppe (-COOH) ist, die aus Milchsäure und/oder einer Polymilchsäure mit der strukturellen Einheit der Formel (I) stammt;
   mit der Maßgabe, dass die Verbindung keine Verbindung der Formel (A) ist, wie diese oben bzw. in Anspruch 1 angegeben und definiert ist,
   und Mischungen davon;
   oder
(2) die Verbindung eine Verbindung der Formel (II) ist, wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie in Anspruch 2 angegeben und definiert,
   oder
(3) die Verbindung eine Verbindung der Formel (II) ist, wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie in Anspruch 2 angegeben und definiert, wobei E und E' jeweils unabhängig voneinander für eine Elektronenakzeptorgruppe ausgewählt aus der Gruppe bestehend aus einem jeweils substituierten oder unsubstituierten Sulfonat-, Sulfonamidcarbonyl- oder Arylcarbonyl-Rest, stehen;
   oder
(4) die Verbindung eine Verbindung der Formel (II) ist, wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie in Anspruch 2 oder 3 angegeben und definiert, wobei die Linkergruppe L eine strukturelle Einheit mit einer der Formeln (V), (VI), VII) oder (VIII) ist, wie diese wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht angegeben und definiert sind.

Erfindungsgemäß bevorzugt ist eine Verbindung wie vorstehend beschrieben, wobei die Verbindung eine Verbindung, wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie in Anspruch 1 oder 2 angegeben und definiert, ist, die ferner
c) eine oder mehrere strukturelle Einheiten der Formel (VIII) enthält, wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht angegeben und definiert ist.

Erfindungsgemäß bevorzugt ist weiterhin eine Verbindung wie vorstehend beschrieben, wobei die Verbindung a) mindestens eine (lineare) strukturelle Einheit der Formel (I), wie diese in Anspruch 1 angegeben und definiert ist, oder eine Verbindung der Formel (II), wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie diese in Anspruch 2 angegeben und definiert ist, und b) unabhängig voneinander eine oder zwei endständige Elektronenakzeptorgruppen mit der strukturellen Einheit der Formel (XIa), wie diese hierin angegeben und definiert ist, umfasst; und wobei in der Verbindung keine strukturellen Einheiten der Formel (VIII), wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht bzw. wie diese hierin angegeben und definiert ist, vorliegen; und Mischungen davon. Es handelt sich hierbei um erfindungsgemäße Harnstoff-freie Verbindungen bzw. Harnstoff-freie Farbentwickler-Strukturen.

Die Erfindung betrifft weiterhin eine erfindungsgemäße Verbindung wie vorstehend beschrieben, wobei die Verbindung eine Verbindung ist, die als mindestens eine (lineare) strukturelle Einheit der Formel (I) (Milchsäure-Einheit) eine (lineare) strukturelle Einheit der Formel (Xlla) 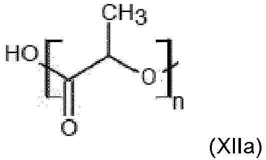 aufweist, wobei n eine ganze Zahl von 1 bis 20, vorzugsweise von 1 bis 10, weiter bevorzugt von 1 bis 6, ist; und Mischungen davon.

Die Erfindung betrifft weiterhin eine erfindungsgemäße Verbindung wie vorstehend beschrieben, wobei die Verbindung eine Verbindung ist, die eine oder zwei endständige strukturelle Einheiten der Formel (XIa), 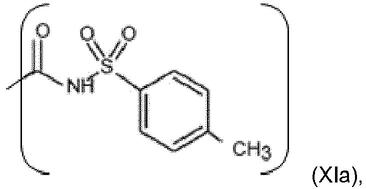 aufweist; und Mischungen davon.

Die Erfindung betrifft weiterhin eine erfindungsgemäße Verbindung wie vorstehend beschrieben Verbindung wie diese hierin im Rahmen der Erfindung angegeben und definiert ist, wobei die Verbindung eine Verbindung der Formel (Xllla), 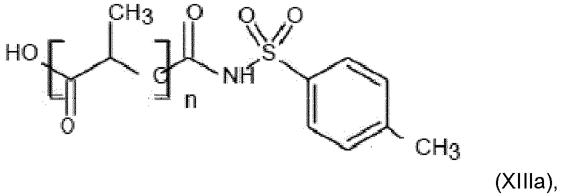 ist, wobei n eine ganze Zahl von 1 bis 20, vorzugsweise von 1 bis 10, weiter bevorzugt von 1 bis 6, ist; und Mischungen davon.

Erfindungsgemäß bevorzugt ist eine Verbindung wie vorstehend beschrieben und definiert, wobei die Verbindung eine Verbindung der Formel (XIIIb), 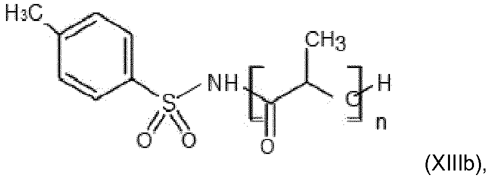 ist, wobei n eine ganze Zahl von 1 bis 20, vorzugsweise von 1 bis 10, weiter bevorzugt von 1 bis 6, ist; und Mischungen davon.

Die wie vorstehend beschriebene und definierte erfindungsgemäße Verbindung, und Mischungen davon, können als eine Mischung mit mindestens einer weiteren Verbindung der Formel (XIV) 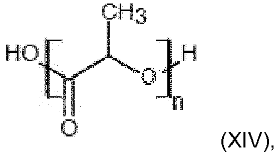 vorliegen, wobei n eine ganze Zahl von 3 bis 15, vorzugsweise von 5 bis 9, ist, vorliegt.

In der vorstehend beschriebenen und definierten erfindungsgemäßen Verbindung oder Mischungen davon oder als eine Mischung mit mindestens einer weiteren Verbindung der Formel (XIV), können die Partikelgrößen der einen oder zumindest einer der Verbindungen bei Vorliegen von mehreren Verbindungen, wie hierzuvor definiert, gemessen durch Laserbeugung, des einen oder zumindest eines der mehreren Verbindungen, jeweils unabhängig voneinander, im Bereich von 0,5 bis 10 µm liegen, vorzugsweise im Bereich von 0,8 bis 8 µm, weiter bevorzugt im Bereich von 0,8 bis 4 µm. Erfindungsgemäß bevorzugt ist in manchen Fällen eine Verbindung oder Mischungen davon oder als eine Mischung mit mindestens einer weiteren Verbindung der Formel (XIV), wie hierzuvor definiert, wobei die Partikelgrößen, gemessen als X₅₀-Wert durch Laserbeugung, des einen oder zumindest eines der mehreren Verbindungen, jeweils unabhängig voneinander, im Bereich von 0,8 bis 2 µm, vorzugsweise im Bereich von 0,85 bis 1,7 µm, und besonders bevorzugt im Bereich von 0,85 bis 1,65 µm, liegen. Die Bestimmung der Partikelgrößen kann durch Laserbeugung (HELOS-Partikelgrößenanalyse) gemessen werden. Im Rahmen der Erfindung wurde ein Gerät der Sympatec GmbH, Helos (H1453) & Quixel, R1, eingesetzt (Auswertung WINDOX 4).

Die Erfindung betrifft ferner die Verwendung einer erfindungsgemäßen Verbindung oder Mischungen davon oder einer Mischung, enthaltend eine erfindungsgemäße Verbindung wie oben definiert; als Farbentwickler für
- eine Beschichtungszusammensetzung zur Herstellung eines wärmeempfindlichen Aufzeichnungsmaterials; oder
- eine wärmeempfindliche Aufzeichnungsschicht; oder
- eine Streichfarbe zur Herstellung einer Beschichtungszusammensetzung zur Herstellung eines wärmeempfindlichen Aufzeichnungsmaterials oder wärmeempfindliche Aufzeichnungsschicht; oder
- ein wärmeempfindliches Aufzeichnungsmaterial.

Die Erfindung betrifft auch die Verwendung einer erfindungsgemäßen Verbindung oder Mischungen davon oder Mischungen, enthaltend eine erfindungsgemäße Verbindung wie oben definiert, zur Herstellung eines Farbentwicklers für
- eine Beschichtungszusammensetzung zur Herstellung eines wärmeempfindlichen Aufzeichnungsmaterials; oder
- eine wärmeempfindliche Aufzeichnungsschicht; oder
- eine Streichfarbe zur Herstellung einer Beschichtungszusammensetzung zur Herstellung eines wärmeempfindlichen Aufzeichnungsmaterials oder wärmeempfindliche Aufzeichnungsschicht; oder
- ein wärmeempfindliches Aufzeichnungsmaterial.

Weiterhin betrifft die Erfindung die Verwendung einer erfindungsgemäßen Verbindung oder Mischungen davon oder einer Mischung, enthaltend eine erfindungsgemäße Verbindung wie oben definiert; als Farbentwickler zur Herstellung
- einer Beschichtungszusammensetzung zur Herstellung eines wärmeempfindlichen Aufzeichnungsmaterials; oder
- einer wärmeempfindlichen Aufzeichnungsschicht; oder
- einer Streichfarbe zur Herstellung einer Beschichtungszusammensetzung zur Herstellung eines wärmeempfindlichen Aufzeichnungsmaterials oder wärmeempfindliche Aufzeichnungsschicht; oder
- eines wärmeempfindlichen Aufzeichnungsmaterials.

Schließlich betrifft die Erfindung auch ein Verfahren zur Herstellung einer erfindungsgemäßen Verbindung wie diese hierzuvor beschrieben und definiert ist, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei ein Lactid der Formel (XV) und wenigstens eine Vorläuferverbindung einer Elektronenakzeptorgruppe, wobei mindestens eine Vorläuferverbindung einer Elektronenakzeptorgruppe keine Carboxylgruppe (-COOH) bildet, die aus Milchsäure und/oder einer Polymilchsäure mit der strukturellen Einheit der Formel (I) stammt, vorzugsweise mindestens eine Vorläuferverbindung einer Elektronenakzeptorgruppe wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht definiert ist, weiter bevorzugt mindestens ein p-Toluolsulfonylisocyanat der Formel (XVI) als Vorläuferverbindung einer Elektronenakzeptorgruppe, 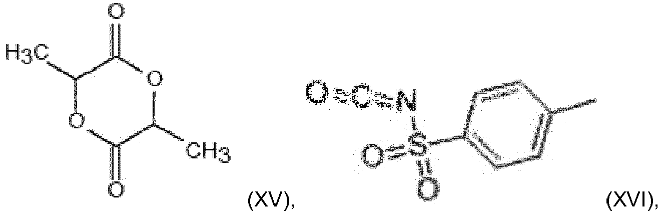 in einem Verfahren umfassend folgende Verfahrensschritte einsetzt:
- Ringöffnung des Lactids der Formel (XV), gegebenenfalls in Gegenwart eines Katalysators;
- Polymerisation der durch Ringöffnung des Lactids der Formel (XV) erhaltenen Zwischenverbindung zu einer (oligomeren) Verbindung umfassend mindestens eine (lineare) strukturelle Einheit der Formel (I) (Milchsäure-Einheit), vorzugsweise umfassend eine (lineare) strukturelle Einheit der Formel (Xlla), in denen das endständige Sauerstoffatom (O) jeweils ein Wasserstoffatom trägt und die endständige Carbonylgruppe (C=O) in Formel (I) eine OH-Gruppe trägt, 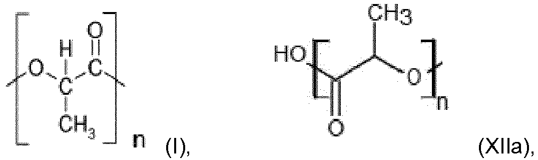 wobei n jeweils eine ganze Zahl von 1 bis 20, vorzugsweise von 1 bis 10, weiter bevorzugt von 1 bis 6, ist;
- Umsetzung der durch Polymerisation erhaltenen Verbindung, umfassend eine strukturelle Einheit der Formel (I), vorzugsweise eine strukturelle Einheit der Formel (Xlla), mit wenigstens einer Vorläuferverbindung einer Elektronenakzeptorgruppe, wobei mindestens eine Vorläuferverbindung einer Elektronenakzeptorgruppe keine Carboxylgruppe (-COOH) bildet, die aus Milchsäure und/oder einer Polymilchsäure mit der strukturellen Einheit der Formel (I) stammt, vorzugsweise mindestens eine Vorläuferverbindung einer Elektronenakzeptorgruppe wie diese oben im Rahmen der erfindungsgemäßen Beschichtungszusammensetzung zur Herstellung eines wärmeempfindlichen Aufzeichnungsmaterials oder im Rahmen der erfindungsgemäßen wärmeempfindlichen Aufzeichnungsschicht definiert ist, weiter bevorzugt mit einem p-Toluolsulfonylisocyanat der Formel (XVI) als Vorläuferverbindung einer Elektronenakzeptorgruppe, an zumindest einer endständigen OH-Gruppe der durch Polymerisation erhaltenen Verbindung;
- Gewinnen einer resultierenden Verbindung wie unter (1) oder (2) oben im Rahmen der erfindungsgemäßen Verbindungen definiert, wobei in der Verbindung unter (1) die endständige Carbonylgruppe (C=O) eine OH-Gruppe trägt und diese zusammen eine endständige Carbonsäure-Gruppe (-C(=O)OH) bilden, und wobei in der Verbindung unter (2), die erfindungsgemäß bzw. in Anspruch 2 als eine Verbindung der Formel (II) definiert ist, wobei der in der Verbindung der Formel (II) an die endständige Carbonylgruppe (C=O) gebundene Rest Y für -OH steht und diese zusammen eine endständige Carbonsäure-Gruppe (-C(=O)OH) bilden;
wobei die Maßgabe gilt, dass keine Verbindung der Formel (A), wie diese hierin oben bzw. im Anspruch 1 angegeben und definiert ist, hergestellt wird.

Erfindungsgemäß ist weiterhin ein Verfahren, wie vorstehend angegeben, zur Herstellung einer erfindungsgemäßen Verbindung, umfassend
- eine weitere Umsetzung von wenigstens einer, der nach dem vorstehenden erfindungsgemäßen Verfahren gewonnenen, resultierenden Verbindung, an der endständigen Carbonsäure-Gruppe (-C(=O)OH) mit einer Verbindung ausgewählt aus der Gruppe bestehend aus HOR, NH₃ oder einem Ammoniumsalz, NH₂R, HNRR', HSR, HSR mit nachfolgender Verseifung zu -SH, einer jeweils substituierten oder unsubstituierten Iminoharnstoff-, Harnstoff-, Thioarnstoff-, Sulfonylharnstoff-, Sulfonylthioharnstoff-, Sulfonamid-Verbindung, Sulfonyloxy-C2-C6-Alkylamid-Verbindung, Sulfonyloxy-C2-C6-Alkylharnstoff-Verbindung oder Sulfonyloxy-C2-C6-Alkylthioharnstoff-Verbindung, wobei R und R' unabhängig voneinander für eine lineare oder verzweigte C1-C22-Alkylgruppe, eine lineare oder verzweigte C1-C22-Alkylengruppe stehen, oder R und R' gemeinsam eine C4-C7-Cycloalkylengruppe bilden, um eine Verbindung der Formel (II), wie diese hierin oben bzw. in Anspruch 2 mit der Bedeutung für den Rest Y unter (i) angegeben und definiert ist, wobei der Rest Y jedoch nicht -OH ist, zu gewinnen;
- eine weitere Umsetzung von, unabhängig voneinander, einer, zwei, drei oder vier der nach dem vorstehenden erfindungsgemäßen Verfahren gewonnenen, resultierenden Verbindungen, jeweils an der endständigen Carbonsäure-Gruppe (-C(=O)OH) mit einer Vorstufe einer Linker-Gruppe L, wie diese Linker-Gruppe L hierin oben definiert ist, um eine Verbindung der Formel (II), wie diese hierin oben bzw. in Anspruch 2 angegeben und definiert ist, zu gewinnen, wobei der Rest Y in der Verbindung der Formel (II) für eine Gruppe der Formel (III) steht, wie diese unter (ii) hierin oben bzw. in Anspruch 2 angegeben und definiert ist.

Ein erfindungsgemäßes Beispiel einer Verbindung der Formel (I) oder (II) ist ferner beispielsweise eine Verbindung der nachfolgenden Formel (XVII):

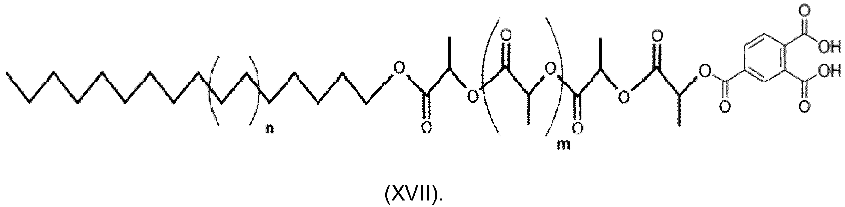

Die Verbindung der Formel (XVII) ("PLA-TMA") enthält im links dargestellten Teil eines Polylactids bzw. Polymilchsäure einen Fettalkohol-Rest, worin n eine ganze Zahl von 0 bis 6 sein kann, also z.B. dann eine C16-C22-Alkylgruppe des Fettalkohol-Restes darstellt, und worin m eine ganze Zahl von 0 bis 7, vorzugsweise von 0 bis 3, sein kann, und wobei die Verbindung der Formel (XVII) ("PLA-TMA") enthält im rechts dargestellten Teil eines Polylactids bzw. Polymilchsäure einen Trimellitsäure-Rest enthält.

Die nachfolgenden Beispiele und Vergleichsbeispiele werden die Erfindung weiter verdeutlichen:

### Beispiel 1

Zur Herstellung einer repräsentativen erfindungsgemäßen Verbindung der Formel (I) bzw. (II) als Farbentwickler wurde Lactid (Puralact B3, kommerziell erhältlich von Corbion Purac B.V., Niederlande) in Gegenwart von Harnstoff in einer dem Fachmann an sich bekannten Weise einer katalytischen Ringöffnungsreaktion und Polymerisierung zum Polymilchsäure der Formel (XIV) unterworfen und sodann mit p-Toluolsulfonylisocyanat (CAS® RN 4083-64-1) als Elektronenakzeptorgruppe E zur Reaktion gebracht. Es wurde ein Gemisch einer Verbindung der Formel (II), worin E für die aus dem p-Toluolsulfonylisocyanat stammende Elektronenakzeptorgruppe E (p-Toluolsulfonylamidocarbonyl-Rest) und Y für eine Hydroxygruppe (-OH) steht erhalten. Es wurde ein Gemisch einer Verbindung der Formel (Xllla) als Farbentwickler, zusammen im Gemisch mit nicht umgesetzter Polymilchsäure der Formel (XIV) erhalten. Auf eine Aufreinigung und Isolierung des erhaltenen Gemisches bzw. der einer Verbindung oder Verbindungen der Formel (Xllla) wurde verzichtet, da aus dem Stand der Technik (bspw. EP 2574645 A1 und EP 2784133 A1) bekannt war, dass Polymilchsäuren bei Anwendungstechnischen Versuchen zu Thermopapieren nicht stören sollten.

Das erhaltene Reaktionsgemisch wurde jedoch analysiert, um die Zusammensetzung und insbesondere die erfindungsgemäßen Verbindungen der Formel (Xllla) als Farbentwickler, insbesondere durch NMR-Spektroskopie (¹H-NMR und ¹³C-NMR) und Massenspektroskopie (FD-MS), zu identifizieren. IR-Spektroskopie, MS und Elementaranalysen wurden ebenfalls durchgeführt.

Zur Ringöffnungsreaktion wurden Lactid (Puralact B3) und Harnstoff unter Inertgas in ein Reaktionsgefäß gegeben und auf etwa 150 °C erhitzt. Es wurde ein Zinn-Katalysator in ppm-Menge hinzugegeben und über einen Zeitraum von etwa 6 Stunden bei Temperaturen bis zu 180 °C reagiert, wobei Harnstoff als Ringöffner dient und die Polymerisation zum Polylactid bzw. zur Polymilchsäure befördert.

Danach wurde das Reaktionsgemisch auf Raumtemperatur bis leicht erhöhte Temperaturen (20 °C bis 60 °C) abgekühlt. Für die Umsetzung mit p-Toluolsulfonylisocyanat wurde zunächst Methylethylketon als Lösungsmittel und dann das p-Toluolsulfonylisocyanat zugesetzt und unter Rühren reagierte das p-Toluolsulfonylisocyanat über etwa 1 Stunde ab. Das Lösungsmittel Methylethylketon wurde im Vakuum abgezogen.

Das erhaltene Reaktionsgemisch wurde wie oben angegeben analysiert und für die Anwendungstechnischen Versuche zu Thermopapieren eingesetzt.

In der Analyse wurde Polymilchsäure der Formel (XIV) und die Verbindung der Formel (Xllla) nachgewiesen. Es wurden noch geringe Mengen der Edukte Lactid und p-Toluolsulfonylisocyanat gefunden. Harnstoff konnte nicht mehr nachgewiesen werden.

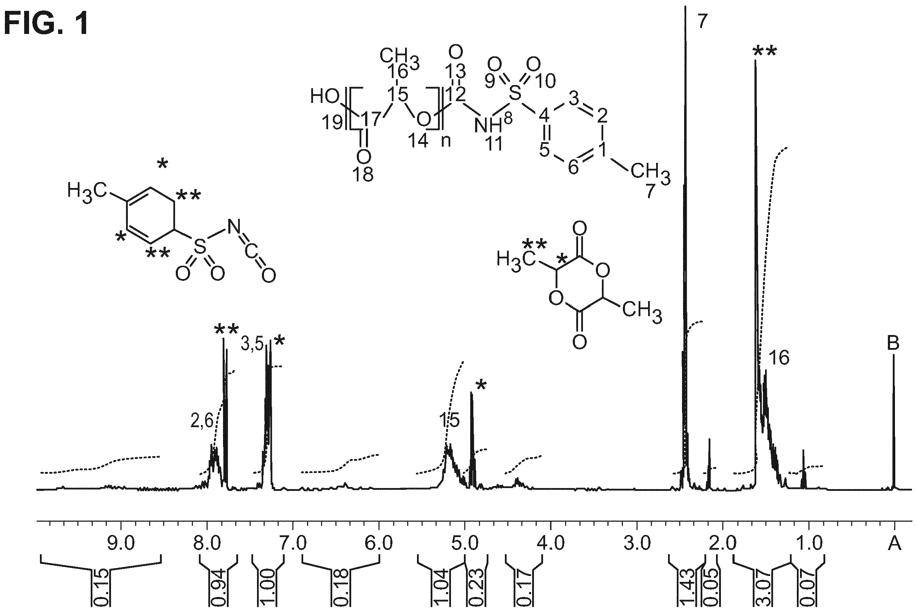

**Fig. 1** zeigt das ¹H-NMR-Spektrum (Bruker) der erhaltenen Verbindung der Formel (Xllla) als Farbentwickler, aufgenommen in deuteriertem Chloroform, mit geringen Mengen der Edukte Lactid und p-Toluolsulfonylisocyanat. [A] bedeutet "ppm" und [B] bedeutet "TMS", Tetramethylsilan. Im gleichfalls gemessenen ¹³C-NMR (Bruker, hier nicht gezeigt) wurden die in Fig. 1 gezeigten Kohlenstoffatome der gezeigten erfindungsgemäßen Verbindung ebenfalls wie folgt nachgewiesen, Kohlestoffatome angegeben als Ziffern: C-Atome "1" bis "6" (Aryl) im Bereich von etwa 125 bis 145 ppm; C-Atom "7" (Methyl) im Bereich von etwa 20 bis 25 ppm und C-Atom "16" (Methyl) im Bereich von etwa 15 bis 20 ppm; C-Atome "12" und "17" (C=OI) im Bereich bei etwa 170 ppm; C-Atom "15" ("Milchsäure-C") im Bereich bei etwa 70 ppm;

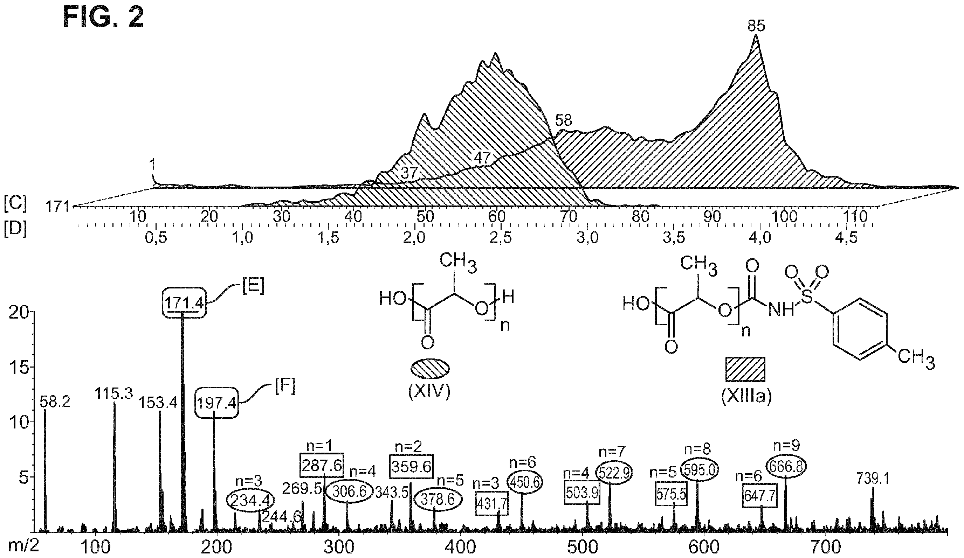

**Fig. 2** zeigt das FD-MS des Reaktionsgemisches mit der Verbindung der Formel (Xllla) als Farbentwickler und der verbliebenen Polymilchsäure (XIV). Messungen an Lösung in Aceton. [C] bedeutet "Scan" und [D] bedeutet "Min. (Minuten)". [E] bedeutet p-TolSO2NH2 (p-Toluolsulfonamid; CAS® Nummer 70-55-3) und [F] bedeutet p-TolSO2NCO (p-Toluolsulfonylisocyanat).

### Beispiel 2

Die als Farbentwickler erhaltene Verbindung der Formel (Xllla) kann gewünschtenfalls in einer dem Fachmann an sich bekannten Weise über die freie Carbonsäuregruppe (-COOH) und geeigneten Vorstufen einer Linkergruppe, wie diese in der Beschreibung angeben sind, verknüpft werden. Für die nachfolgenden anwendungstechnischen Versuche mit der erfindungsgemäß als Farbentwickler erhaltenen Verbindung der Formel (Xllla) wurde jedoch davon abgesehen, um zunächst die Wirkung einer einzigen in das Polylactid bzw. die Polymilchsäure eingebrachten Elektronenakzeptorgruppe zunächst repräsentativ untersuchen zu können.

### Anwendungstechnische Beispiele mit Vergleichsbeispielen

### Beispiel 3: Schwärzungstest und Acetontest

### Beispiel 3a: Schwärzungstest

Durchführung: 0,25 g Entwickler und 0,25 g OBD2 in 100ml-Kolben einwiegen. Mit Aceton auf 100 ml auffüllen. Löslichkeit und Farbe beurteilen, mit Fotos dokumentieren. Entfernen das Acetons im Rotationsverdampfer. Beurteilen der Farbe, ggf. mit auch Fotos dokumentieren. Eingesetzte Entwickler (Vergleich): Nr. 1 = Pergafast; Nr. 2 = UU; Nr. 3 = NKK. Eingesetzte Entwickler (erfindungsgemäßes "PLA"): Nr. 4 = PLA-TMA; Nr. 5 = PLA-Urea; Nr. 6 = PLA-Urea (MEK); in manchen Fällen bevorzugt Nr. 7 = PLA-Gemisch. "ODB2" steht hierin für 3-N-n-Dibutylamin-6-methyl-7-anilinofluoran. "MEK" steht hierin für Methylethylketon. "UU" steht hierin für eine Harnstoff-Urethan-Verbindung, die als Handelsprodukt UU® (Urea-Urethane der Firma Asahi Kasei K:K:, Osaka, Japan) kommerziell erhältlich ist und die nachfolgende Formel (XVIII) besitzt,

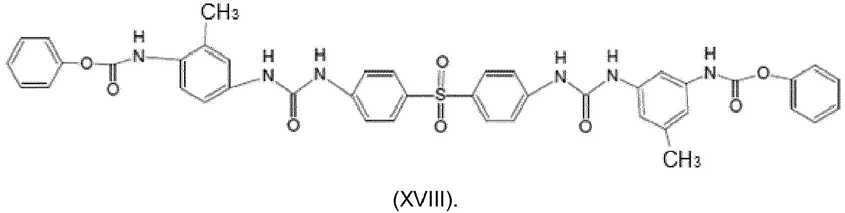

Die Ergebnisse sind in der Tabelle 1 dargestellt.

**Tabelle 1: Ergebnisse Schwärzungstest**

| Entwickler | m Entwickler | m ODB2 | c Entwickler | Löslichkeit | Farbe | 80 °C |
|---|---|---|---|---|---|---|
| | [g] | [g] | [g/l] | visuell | Visuell | Lösung |
| 1. | 0,25 | 0,25 | 2,50 | gelöst | Hellrot | schwarz |
| 2. | 0,25 | 0,25 | 2,50 | ungelöst | Grau | schwarz |
| 3. | 0,25 | 0,25 | 2,50 | gelöst | Hellrot | schwarz |
| 4. | 0,25 | 0,25 | 2,49 | gelöst | schwarz | schwarz |
| 5. | 0,26 | 0,25 | 2,56 | ungelöst | hellgrau/durchsichtig | schwarz |
| 6. | 0,25 | 0,25 | 2,50 | gelöst | hellgrau/durchsichtig | schwarz |
| 7. | 0,25 | 0,25 | 2,50 | gelöst | schwarz | schwarz |

| | | | | | | |
|---|---|---|---|---|---|---|
| m = Menge; c = Konzentration | | | | | | |

### Beispiel 3b: Acetontest

Es wurden folgende Ergebnisse erzielt. Erfindungsgemäßes "PLA" bildet einen homogenen Komplex. Gelegentlich können sich wenige helle Stellen bilden, die möglicherweise konzentrationsbedingt auf eine Auskristallisation hinweisen könnten. Erfindungsgemäßes "PLA" ist damit in seinen Eigenschaften im Acetontest vergleichbar mit den als Vergleich eingesetzten Farbentwicklern: NKK und Pergafast bilden einen homogenen Komplex; bei UU findet ebenfalls eine leichte Trennung statt.

Mit dem Aceton Test lässt sich die bessere Komplexbildung vom erfindungsgemäßen "PLA" mit ODB2 nach der Sulfonierung erkennen (PLA-Gemisch). Eine verbesserte Reaktion bzw. Verträglichkeit vom Entwickler/ODB2 ist beobachtet.

Beim erfindungsgemäßen "PLA" bildet sich ein homogener Komplex, sowie bei den Vergleichen NKK und Pergafast. Pergafast und NKK besitzen Harnstoff und Sulfonamide Gruppen. Bei UU findet eine leichte Trennung statt. UU besitzt keine Sulfonamide Gruppe, nur Harnstoff und Urethan. UU funktioniert nicht so wie die anderen Entwickler. Es wird eine große Menge benötigt und DPS als Sensibilisator (Sensitizer), wenn UU als einziger Entwickler genutzt wird, damit sich ein stabiler Farbkomplex bildet.

### Beispiel 4: Materialzerkleinerung, Herstellung von Streichfarbe, Streichen von Papier

Nach den Tests im Beispiel 3 wurden erste Versuche gestartet, um das Farbentwickler-Material zu zerkleinern, eine Streichfarbe damit herzustellen und diese Streichfarbe dann auf Papier zu aufzustreichen.

Es wurden zwei Varianten gestrichen. Die erste Variante wurde geturraxt auf eine Partikelgröße von 8 µm und die zweite Variante wurde mit einer Rührwerkskugelmühle (beispielsweise durchführbar mit einer Rührwerkskugelmühle LabStar des Herstellers Netzsch) auf 1,6 µm zerkleinert. Das Material wurde zuerst nur geturraxt (beispielsweise durchführbar mit einem Hochleistungs-Dispergiergerät ULTRA-TURRAX® des Geräteherstellers IKA®-Werke GmbH & CO. KG, alternativ durchführbar mit einem Stativ-Dispergierer POLYTRON® PT 6100 D, Kinematica GmbH Dispersing and Mixing technology). Das Zerkleinern mit einem ULTRA-TURRAX® oder einem POLYTRON® PT 6100 D basiert auf dem Rotor-Stator-Prinzip. Der sich drehende Rotor erzeugt einen Unterdruck, welcher die zu dispergierende Probe ansaugt und durch die Statorschlitze zur Außenseite befördert. Zwischen dem Rotor / Stator (Scherspalt) unterliegt die Probe hohen Abbrems- und Beschleunigungskräften, in dem die einzelnen Partikel auseinander gerissen und durch weitere Schneid- und Pralleffekte auf wenige Mikrometer zerkleinert werden. Hierbei entsteht eine hohe Scherwirkung, welche zur Zerkleinerung von Feststoffen in der Probe führt. Beide Varianten wurden mit der gleichen Rezeptur der Streichfarbe hergestellt und auf Papier gestrichen. Die Rezepturen der Streichfarben wurden in Vorversuchen mit anderen PLA-Mustern ermittelt. Die Muster der erfindungsgemäßen Rezepturen der Streichfarben wurden mit zwei kommerziell erhältlichen Standard Sorten verglichen (BPA und Pergafast® 201); die Strichgewichte waren folgende wie in Tabelle 2 angegeben. Die Rezepturen sind in Tabelle 3 angegeben.

**Tabelle 2: Strichgewichte hergestellter Rezepturen von Streichfarben**

| | | **Nr. 3 PLA-Gemisch (1,6 µm)** | **Nr. 8 Vergleichsprobe BPA** | **Nr. 7 Vergleichsprobe Pergafast® 201** |
|---|---|---|---|---|
| **Papiertechnische Grund-werte** | | | | |
| Weiße R457. | m. UV (%) | 86 - 92,5 | 88,95 | 90,60 |
| Weiße R457. | o. UV (%) | 79,5 - 86 | 81,54 | 84,69 |
| Glätte (Bekk)_{OS} | (s) | 250 - 450 | 335 | 513 |
| **Strichgewicht** | **(g/m²)** | **5,2 - 5,9** | **2,00** | **2,20** |

| | | | | |
|---|---|---|---|---|
| "OS" steht in dieser Schrift im Zusammenhang mit Messungen der Glätte nach Bekk für die Oberseite der Papierprobe und damit für die gestrichene Seite der jeweiligen Papierprobe. "R457" bedeutet, dass bei der Weiße-Messung / Weißegrad-Messung ein Filter verwendet wird, der bei licht einer Wellenlänge von 457 nm durchlässig ist. | | | | |

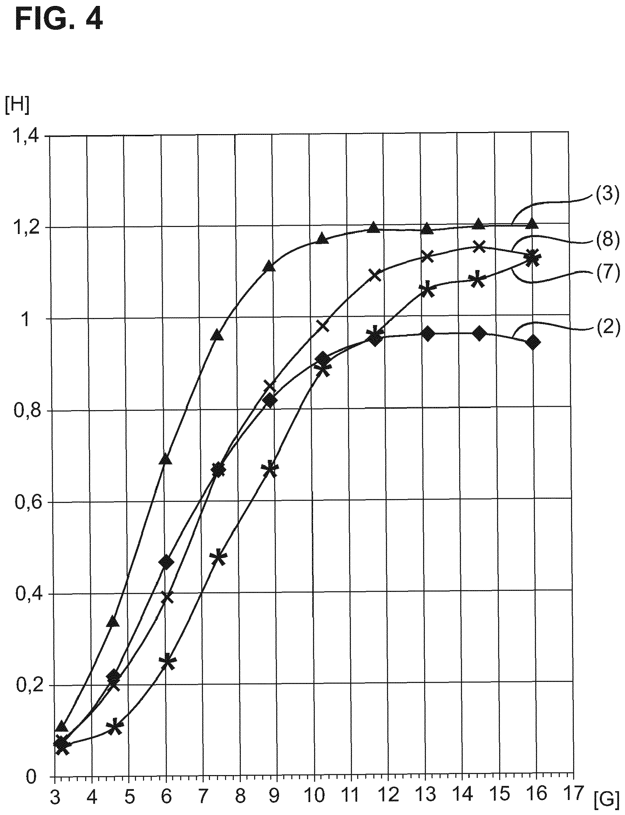

**Tabelle 3: (Rezepturen zu Figur 4)**

| Angaben in Massenanteilen w(x) % (atro), bezogen auf die Gesamtmasse der wärmeempfindlichen Aufzeichnungsschicht | | |
|---|---|---|
| Komponente | Bestandteil | Massenanteile w(x) % (atro) |
| Harzansatz | | |
| Wasser | | |
| Dispergiermittel | L-3266 | 6,5-8,5 |
| Entschäumer | Surfinol 104E | 0,025-0,035 |
| | PLA-Gemisch | 28-30 |
| | | |
| Pigmentansatz | | |
| Wasser | Wasser | |
| Dispergiermittel | Dispex AA4040 | 0,1-0,13 |
| Pigment | Kaolin (Handelsname: ASP 179) | 11-12 |
| | | |
| Sensibilisator | EGPE, CAS®RN 104-66-5 | 28-30 |
| Bindemittel | Mowiol 28-99; CAS®RN 9002-89-5 Polyvinylalkohol | 8,5-9,5 |
| Additiv | Zinkstearat (Handelsname: Hidorin Z-7-30) | 2,5-3,5 |
| Farbstoffvorläufer | ODB-2-Dispersion; 3-dibutylamino-6-methyl-7-Anilinofluoran | 9-11 |
| Verdicker, Additiv | Sterocoll BL | 0,1-0,2 |

In der Papierherstellung werden drei Grade für den Trockengehalt von Papier und Zell-stoff unterschieden "atro" (absolut trocken), "lutro" (lufttrocken) und "otro" (ofentrocken). Die Angabe erfolgt jeweils in "% atro", "% lutro" und "% otro". Wobei "atro" für ein Papier oder Zellstoff mit 0 % Wassergehalt steht. Für "lutro" wird hierbei ein "normaler" (für das Papier grundsätzlich notwendiger) Feuchtigkeitsgehalt als Basis der Berechnung einge-setzt. Bei Zellstoff und Holzschliff bezieht sich die Rechnungsmasse in der Regel auf 90:100, das heißt 90 Teile Stoff, 10 Teile Wasser. Der Zustand von Papier oder Zellstoff nach der Trocknung unter festgelegten, definierten Bedingungen wird als "otro" bezeich-net.

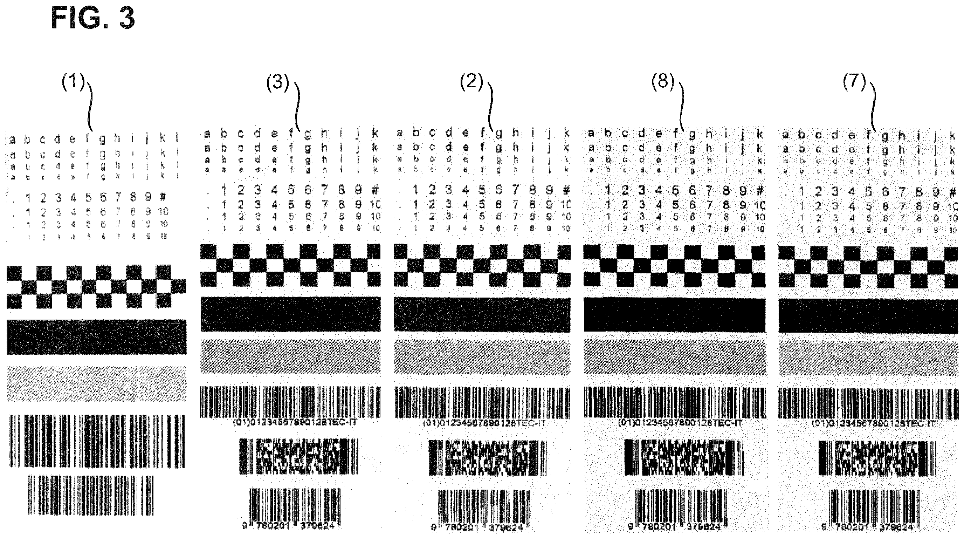

Die Rezepturen der Tabelle 3 wurden auf Papier aufgestrichen, die Papiere in üblicher Weise getrocknet und kalandriert und mit den erhaltenen Papieren wurden dann folgende Tests durchgeführt:
- Thermisches Bedrucken des Wärmeempfindlichen Aufzeichnungsmaterials mit einem Epson Drucker:
   Das thermische Aufzeichnungsmaterial welches oben beschrieben ist, wurde mit dem Epson Drucker (TM-T88V) thermisch bedruckt. Hierbei kann der Einfluss der unterschiedlichen Partikelgrößen deutlich erkannt werden, ebenso wird der Unterschied zum Ausdruck einer ersten Entwicklungsstufe eines PLA Musters (1) deutlich. **Fig. 3** zeigt die erhaltenen Ausdrucke, wobei (1) das erste PLA-Muster "PLA-Urea", (2) PLA-Gemisch - 8 µm, (3) PLA-Gemisch - 1,6 µm Modifikation 1, (7) Pergafast® 201 und (8) BPA bedeuten.
- Messen der dynamischen Druckdichte:

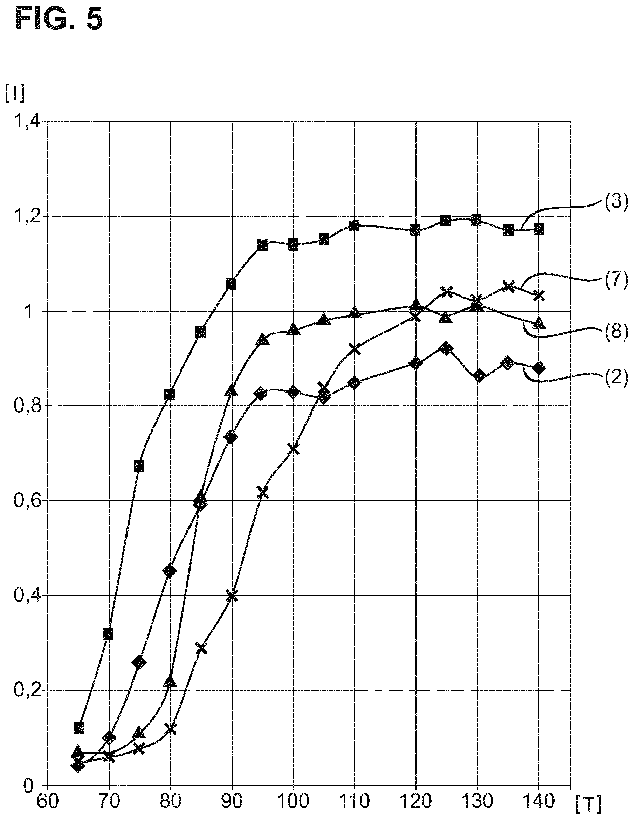

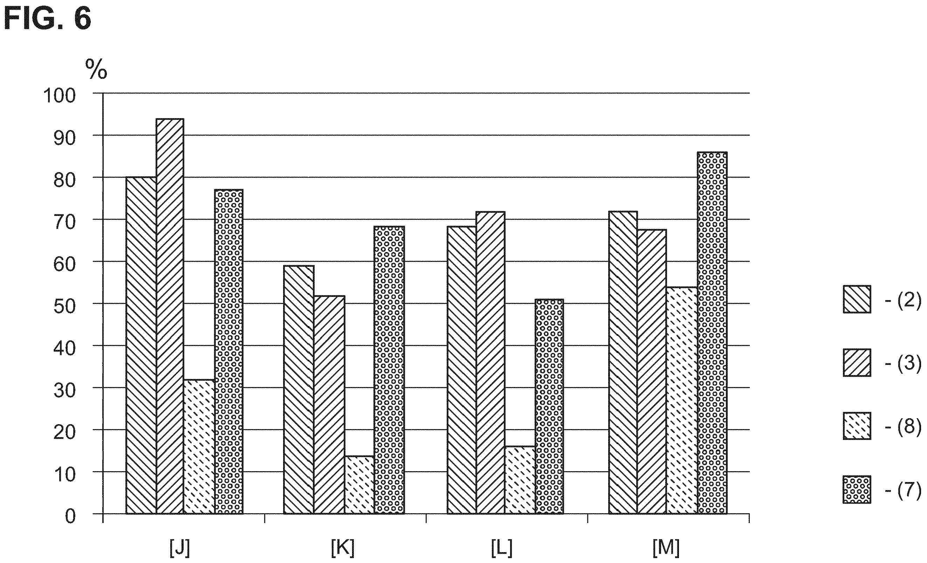

   Die dynamische Druckdichte wird wie folgt bestimmt: Das thermische Aufzeichnungsmaterial welches oben beschrieben ist wurde mit dem Atlantek 400 (ATLANTEK Model 400 Thermal Response Test System der Firma Global Media Instru-ments, LLC (USA)) Drucker thermisch mit unterschiedlichen Energiestufen bedruckt. Die dadurch erhaltenen thermisch bedruckten Bereiche wurden unter Zuhilfenahme eines Spektraldensitometers (SpectroDens des Herstellers Techkon) gemessen. Das Ergebnis der dynamischen Druckdichte ist in **Fig.** 4 dargestellt. Der Einfluss der unterschiedlichen Partikelgrößen ist deutlich zu erkennen, ebenso wie eine vergleichbare, teilweise bessere, dynamische Druckdichte. [G] bedeutet die "Energie (mj/mm²)" und [H] bedeutet die "Dynamische Druckdichte"; in Fig. 4 bedeuten: (2) PLA-Gemisch - 8 µm, (3) PLA-Gemisch - 1,6 µm Modifikation 1, (7) Pergafast® 201 und (8) BPA.
- Messen der statischen Druckdichte:
   Die statische Druckdichte wird wie folgt bestimmt: Das thermische Aufzeichnungsmaterial, welches zuvor beschrieben ist wurde mit dem Heat gradient tester No. 884 (Toyoseiki) bei unterschiedlichen Temperaturen, bei definiertem Druck über eine definierte Zeit, bedruckt. Die dadurch erhaltenen thermisch bedruckten Bereiche wurden unter Zuhilfenahme eines Spektraldensitometers (SpectroDens des Herstellers Techkon) gemessen. **Fig. 5** zeigt die gemessenen statischen Druckdichten._[T] bedeutet die "Temperatur (°C)" und [I] bedeutet die "Statische Druckdichte"; ferner bedeuten in Fig. 5: (2) PLA-Gemisch - 8 µm, (3) PLA-Gemisch - 1,6 µm Modifikation 1, (7) Pergafast® 201 und (8) BPA.
- Testen der Umweltbeständigkeiten:
   Zur Prüfmethode:
   Zur messtechnischen Erfassung der Umweltbeständigkeiten eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert gestaltete Thermoprobeausdrucke mit einem Gerät des Typs Atlantek 400 erstellt, wobei ein Thermokopf mit einer Auflösung von 300 dpi und einer Energie pro Flächeneinheit von 16 mJ/mm² zum Einsatz kam Nach der Erstellung des schwarz/weiß-karierten Thermoprobeausdruckes wurde nach einer Ruhezeit von mehr als 5 Minuten an jeweils drei Stellen der schwarz gefärbten Flächen des Thermoprobeausdruckes eine Bestimmung der Druckdichte mit einem Densitometer SpectroDens der Firma Techkon durchgeführt. Aus den jeweiligen Messwerten der schwarz gefärbten Flächen wurde jeweils der Mittelwert gebildet.
   ∘ Die Thermoprobeausdrucke mit Lanolin bestreichen.
   ∘ 5 Minuten einwirken lassen und anschließend vorsichtig abwischen.
   ∘ Die Proben 4 Stunden bei 23 °C, 50 % im klimatisierten Messraum aufhängen. An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes bereits gemessen wurden. Aus den jeweiligen Messwerten der schwarz gefärbten Flächen wurde jeweils der Mittelwert gebildet.
   ∘ Die Thermoprobeausdrucke in ein Ethanolbad (25%) legen.
   ∘ 20 Minuten einwirken lassen und anschließend vorsichtig abtupfen ∘ Die Proben 24 Stunden bei 23 °C, 50 % im klimatisierten Messraum aufhängen.
   ∘ An jeweils den drei Stellen der schwarz gefärbten Flächen des Thermoprobeausdruckes eine Bestimmung der Druckdichte mit einem Densitometer SpectroDens der Firma Techkon durchführen, welche vor der Behandlung des Thermoprobeausdruckes gemessen wurden. Aus den jeweiligen Messwerten der schwarz gefärbten Flächen wurde jeweils der Mittelwert gebildet
   ∘ Die Thermoprobeausrucke mit Tesa-Grafik-Film bekleben (Weichmacher) und sofort messen.
   ∘ Die Proben 24 Stunden bei 23 °C, 50 % im klimatisierten Messraum aufhängen.
   ∘ An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes bereits gemessen wurden. Aus den jeweiligen Messwerten der schwarz gefärbten Flächen wurde jeweils der Mittelwert gebildet.
   ∘ Die Thermoprobeausdrucke in ein Wasserbad legen.
   ∘ 20 Minuten einwirken lassen und anschließend vorsichtig abtupfen (Löschpapier).
   ∘ Die Proben 24 Stunden bei 23 °C, 50 % im klimatisierten Messraum aufhängen.
   ∘ An jeweils den drei Stellen der schwarz gefärbten Flächen des Thermoprobeausdruckes wurde eine Bestimmung der Druckdichte mit einem Densitometer SpectroDens der Firma Techkon durchgeführt, welche vor der Behandlung des Thermoprobeausdruckes gemessen wurden. Aus den jeweiligen Messwerten der schwarz gefärbten Flächen wurde jeweils der Mittelwert gebildet
- Die Beständigkeit des Druckbildes in % entspricht dem Quotienten aus dem gebildeten Mittelwert der Druckdichte der gefärbten Flächen vor und nach dem Test multipliziert mit 100.
   Die Ergebnisse der Test zur Umweltbeständigkeit sind in **Fig. 6** (Lanolin, Ethanol, Weichmacher, Wasser) wiedergegeben. Hierin bedeuten [J] Lanolin, 5 Min., [K] Ethanol (25 Vol.-%), 20 Min., [L] Weichmacher, [M] Wasser, 20 Min.; ferner bedeuten in Fig. 6: (2) PLA-Gemisch - 8 µm, (3) PLA-Gemisch - 1,6 µm Modifikation 1, (7) Pergafast® 201 und (8) BPA.

### Bestimmung der Hitzebeständigkeit von wärmeempfindlichen Aufzeichnungsmaterialien (bei 60 °C. für 24 Stunden);

Zur messtechnischen Erfassung der Hitzebeständigkeit eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert gestaltete Thermoprobeausdrucke mit einem Gerät des Typs Atlantek 400 erstellt, wobei ein Thermokopf mit einer Auflösung von 300 dpi und einer Energie pro Flächeneinheit von 16 mJ/mm² zum Einsatz kam.

Nach der Erstellung des schwarz/weiß-karierten Thermoprobeausdruckes wurde nach einer Ruhezeit von mehr als 5 Minuten an jeweils drei Stellen der schwarz gefärbten Flächen und der ungefärbten Flächen des Thermoprobeausdruckes eine Bestimmung der Druckdichte mit einem Densitometer SpectroDens der Firma Techkon durchgeführt. Aus den jeweiligen Messwerten der schwarz gefärbten Flächen und der ungefärbten Flächen wurde jeweils der Mittelwert gebildet.

Ein Thermoprobeausdruck wurde bei 60 °C in einen Trockenschrank gehängt. Nach 24 Stunden wurde der Thermopapierausdruck entnommen, auf Raumtemperatur abgekühlt und es wurde erneut an je drei Stellen der schwarz gefärbten Flächen und der ungefärbten Flächen des Thermoprobeausdrucks eine Bestimmung der Druckdichte mit einem Densitometer SpectroDens der Firma Techkon durchgeführt. Aus den jeweiligen Messwerten schwarz gefärbten Flächen und der ungefärbten Flächen wurde jeweils der Mittelwert gebildet.

Die Beständigkeit des Druckbildes in % entspricht dem Quotienten aus dem gebildeten Mittelwert der Druckdichte der gefärbten Flächen vor und nach der Lagerung im Trockenschrank multipliziert mit 100.

### Bestimmung der Hitzebeständigkeit von wärmeempfindlichen Aufzeichnungsmaterialien (bei 90 °C. für 1 Stunde);

Zur messtechnischen Erfassung der Hitzebeständigkeit eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert gestaltete -im Schachbrettmuster- Thermoprobeausdrucke mit einem Gerät des Typs Atlantek 400 erstellt, wobei ein Thermokopf mit einer Auflösung von 300 dpi und einer Energie pro Flächeneinheit von 16 mJ/mm² zum Einsatz kam.

Nach der Erstellung des schwarz/weiß-karierten Thermoprobeausdruckes wurde nach einer Ruhezeit von mehr als 5 Minuten an jeweils drei Stellen der schwarz gefärbten Flächen und der ungefärbten Flächen des Thermoprobeausdruckes eine Bestimmung der Druckdichte mit einem Densitometer SpectroDens der Firma Techkon durchgeführt. Aus den jeweiligen Messwerten der schwarz gefärbten Flächen und der ungefärbten Flächen wurde jeweils der Mittelwert gebildet.

Ein Thermoprobeausdruck wurde bei 90 °C in einen Trockenschrank gehängt. Nach 1 Stunde wurde der Thermopapierausdruck entnommen, auf Raumtemperatur abgekühlt und es wurde erneut an je drei Stellen der schwarz gefärbten Flächen und der ungefärbten Flächen des Thermoprobeausdrucks eine Bestimmung der Druckdichte mit einem Densitometer SpectroDens der Firma Techkon durchgeführt. Aus den jeweiligen Messwerten schwarz gefärbten Flächen und der ungefärbten Flächen wurde jeweils der Mittelwert gebildet.

Die Beständigkeit des Druckbildes in % entspricht dem Quotienten aus dem gebildeten Mittelwert der Druckdichte der gefärbten Flächen vor und nach der Lagerung im Trockenschrank multipliziert mit 100.

### Bestimmung der Klimabeständiqkeit von wärmeempfindlichen Aufzeichnungsmaterialien (bei 40 °C und 90 % r.F (relative Luftfeuchtigkeit) für 24 Stunden);

Zur messtechnischen Erfassung der Hitzebeständigkeit eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert -im Schachbrettmuster- gestaltete Thermoprobeausdrucke mit einem Gerät des Typs Atlantek 400 erstellt, wobei ein Thermokopf mit einer Auflösung von 300 dpi und einer Energie pro Flächeneinheit von 16 mJ/mm² zum Einsatz kam.

Nach der Erstellung des schwarz/weiß-karierten Thermoprobeausdruckes wurde nach einer Ruhezeit von mehr als 5 Minuten an jeweils drei Stellen der schwarz gefärbten Flächen und der ungefärbten Flächen des Thermoprobeausdruckes eine Bestimmung der Druckdichte mit einem Densitometer SpectroDens der Firma Techkon durchgeführt. Aus den jeweiligen Messwerten der schwarz gefärbten Flächen und der ungefärbten Flächen wurde jeweils der Mittelwert gebildet.

Ein Thermoprobeausdruck wurde bei 40 °C und 90 % r.F (relative Feuchte) in einen Klimaschrank gehängt. Nach 24 Stunden wurde der Thermopapierausdruck entnommen, auf Raumtemperatur abgekühlt und es wurde erneut an je drei Stellen der schwarz gefärbten Flächen und der ungefärbten Flächen des Thermoprobeausdrucks eine Bestimmung der Druckdichte mit einem Densitometer SpectroDens der Firma Techkon durchgeführt. Aus den jeweiligen Messwerten schwarz gefärbten Flächen und der ungefärbten Flächen wurde jeweils der Mittelwert gebildet.

Die Beständigkeit des Druckbildes in % entspricht dem Quotienten aus dem gebildeten Mittelwert der Druckdichte der gefärbten Flächen vor und nach der Lagerung im Klimaschrank multipliziert mit 100.

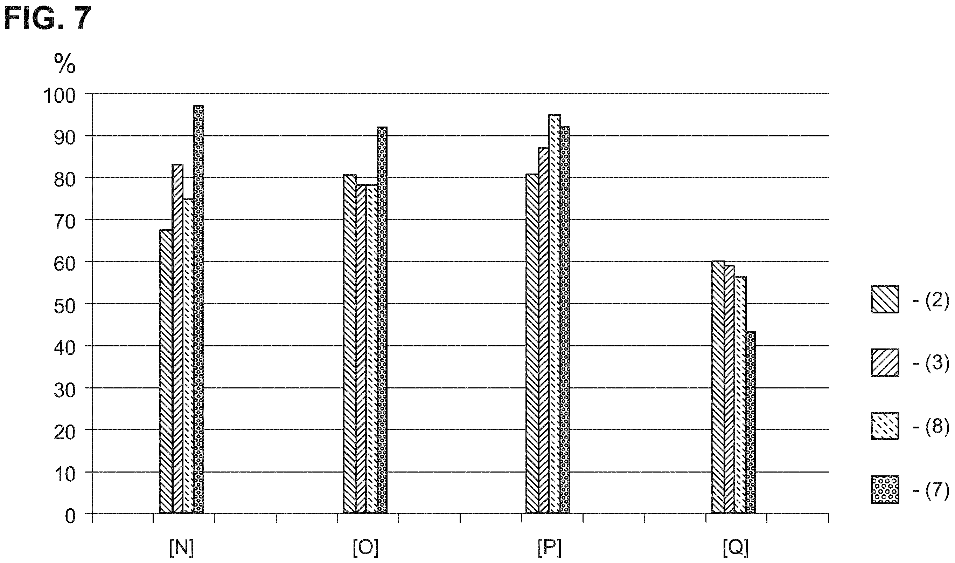

In **Fig. 7** sind die Ergebnisse bezüglich der Einflüsse von Hitze, Feuchte und Licht wiedergegeben. Hierin bedeuten [N] Hitze (60 °C, 24 h), Bild; [O] Hitze (90 °C, 24 h), Bild; [P] Feuchte (40 °C, 90%, 24 h), Bild; [Q] = Licht (21600 KJ/m²). Ferner bedeuten in Fig. 7: (2) PLA-Gemisch - 8 µm, (3) PLA-Gemisch - 1,6 µm Modifikation 1, (7) Pergafast® 201 und (8) BPA.

### Beispiel 5: Weitere Rezeptur-Modifikationen von Streichfarbe, Streichen von Papier

Da die Empfindlichkeit erfindungsgemäßer Farbentwickler sehr gut und das Strichgewicht in den vorherigen Versuchen hoch war wurde die Rezeptur durch Reduzierung des Sensibilisators (Sensitizers) verändert und das Strichgewicht verringert. Zusätzlich wurde eine Kombination mit PVP K-15 getestet um eine eventuelle grünliche Verfärbung zu reduzieren, da (ohne an eine Theorie gebunden sein zu wollen) Die hergestellten Rezeptur-Modifikationen ("Mod. 1" bis "Mod. 4") der erfindungsgemäßen Rezepturen sind in den nachfolgenden Tabellen 4 bis 6 wiedergegeben.

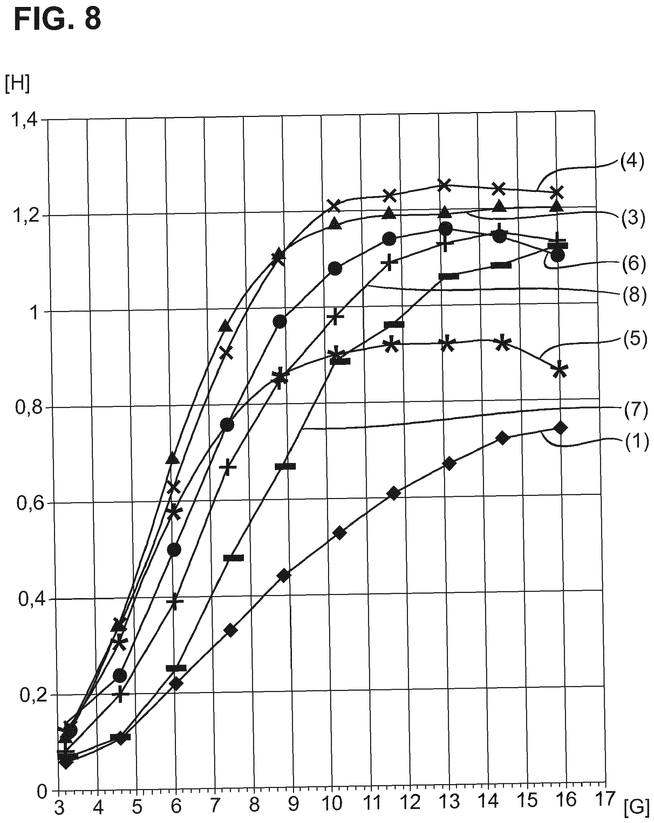

**Tabelle 4: Rezeptur (siehe auf Fig. 8)**

| Angaben in Massenanteilen w(x) % (atro), bezogen auf die Gesamtmasse der wärmeempfindlichen Aufzeichnungsschicht | | |
|---|---|---|
| Komponente | Bestandteil | Massenanteile w(x) % (atro) |
| Harzansatz | | |
| Wasser | | |
| Dispergiermittel | L-3266 | 6,5-8,5 |
| Entschäumer | Surfinol 104E | 0,025-0,035 |
| | PLA-Gemisch | 28-30 |
| | | |
| Pigmentansatz | | |
| Wasser | Wasser | |
| Dispergiermittel | Dispex AA4040 | 0,1-0,13 |
| Pigment | Kaolin (Handelsname: ASP 179) | 11-12 |
| | | |
| Sensibilisator | EGPE, CAS®RN 104-66-5 | 28-30 |
| Bindemittel | Mowiol 28-99; CAS®RN 9002-89-5 Polyvinylalkohol | 8,5-9,5 |
| Additiv | Zinkstearat (Handelsname: Hidorin Z-7-30) | 2,5-3,5 |
| Farbstoffvorläufer | ODB-2-Dispersion; 3-dibutylamino-6-methyl-7-Anilinofluoran | 9-11 |
| Verdicker, Additiv | Sterocoll BL | 0,1-0,2 |

**Tabelle 5: Rezepturen der Modifikationen 2 ("Mod. 2") und 3 ("Mod. 3"). Die Rezepturen von Modifikation 3 ("Mod. 3") und Modifikation 2 ("Mod. 2") sind gleich, unterscheiden sich aber dadurch, dass Modifikation 3 ("Mod. 3") gegenüber Modifikation 2 ("Mod. 2") ein geringeres Strichgewicht aufweist.**

| Angaben in Massenanteilen w(x) % (atro), bezogen auf die Gesamtmasse der wärmeempfindlichen Aufzeichnungsschicht | | |
|---|---|---|
| Komponente | Bestandteil | Massenanteile w(x) % (atro) |
| Harzansatz | | |
| Wasser | | |
| Dispergiermittel | L-3266 | 7,5-9,5 |
| Entschäumer | Surfinol 104E | 0,025-0,035 |
| | PLA-Gemisch | 33,5-35,5 |
| | | |
| Pigmentansatz | | |
| Wasser | Wasser | |
| Dispergiermittel | Dispex AA4040 | 0,125-0,145 |
| Pigment | Kaolin (Handelsname: ASP 179) | 13,5-14,5 |
| | | |
| Sensibilisator | EGPE, CAS®RN 104-66-5 | 16-18 |
| Bindemittel | Mowiol 28-99; CAS®RN 9002-89-5 Polyvinylalkohol | 9,8-10,8 |
| Additiv | Zinkstearat (Handelsname: Hidorin Z-7-30) | 3,4-4,4 |
| Farbstoffvorläufer | ODB-2-Dispersion; 3-dibutylamino-6-methyl-7-Anilinofluoran | 11-13 |
| Verdicker, Additiv | Sterocoll BL | 0,1-0,2 |

**Tabelle 6: Rezeptur Modifikation 4 ("Mod. 4")**

| Angaben in Massenanteilen w(x) % (atro), bezogen auf die Gesamtmasse der wärmeempfindlichen Aufzeichnungsschicht | | |
|---|---|---|
| Komponente | Bestandteil | Massenanteile w(x) % (atro) |
| Harzansatz | | |
| Wasser | | |
| Dispergiermittel | L-3266 | 7,5-9,5 |
| Entschäumer | Surfinol 104E | 0,025-0,035 |
| | PLA-Gemisch | 33,5-35,5 |
| | | |
| Pigmentansatz | | |
| Wasser | Wasser | |
| Dispergiermittel | Dispex AA4040 | 0,125-0,145 |
| Pigment | Kaolin (Handelsname: ASP 179) | 13,5-14,5 |
| | | |
| Sensibilisator | EGPE, CAS®RN 104-66-5 | 16-18 |
| Bindemittel | Mowiol 28-99; CAS®RN 9002-89-5 Polyvinylalkohol | 9,7-10,7 |
| Additiv | Zinkstearat (Handelsname: Hidorin Z-7-30) | 3,2-4,2 |
| Additiv | PVP-K-15; Polyvinylpyrrolidone, 9003-39-8 | 0,5-1,5 |
| Farbstoffvorläufer | ODB-2-Dispersion; 3-dibutylamino-6-methyl-7-Anilinofluoran | 11-13 |
| Verdicker, Additiv | Sterocoll BL | 0,1-0,2 |

Die hergestellten Muster der erfindungsgemäßen Rezepturen der Streichfarben wurden mit zwei kommerziell erhältlichen Standard Sorten verglichen (BPA und Pergafast); die Strichgewichte waren folgende wie in Tabelle 7 angegeben.

**Tabelle 7: Strichgewichte hergestellter Rezepturen von Streichfarben**

| **Papiertechnische Grundwerte** | **Mod. 1 Nr. 3** | **Mod. 2 Nr. 4** | **Mod. 3 Nr. 5** | **Mod. 4 Nr. 6** | **Nr. 8 Vergleichsmuster BPA** | **Nr. 7 Vergleichsmuster Pergafast** |
|---|---|---|---|---|---|---|
| Weiße R457 m. UV (%) | 86,38 | 81,05 | 89,57 | 86,18 | 88,95 | 90,60 |
| Weiße R457. o. UV (%) | 79,95 | 74,88 | 81,66 | 78,46 | 81,54 | 84,69 |
| Optische Aufheller (%) | 6,43 | 6,17 | 7,91 | 7,72 | 7,41 | 5,91 |
| Glätte (Bekk)os (s) | 446 | 481 | 391 | 450 | 335 | 513 |
| **Strichgewicht (g/m²)** | **5,25** | **5,07** | **2,68** | **4,87** | **2,02** | **2,20** |

| | | | | | | |
|---|---|---|---|---|---|---|
| "OS" steht in dieser Schrift im Zusammenhang mit Messungen der Glätte nach Bekk für die Oberseite der Papierprobe und damit für die gestrichene Seite der jeweiligen Papierprobe. | | | | | | |

### Weiße-Messung / Weißegrad-Messung:

Die Weißegrad-Messung wird mit einem Spektralphotometer Gretagmacbeth ERX30 des Geräteherstellers X-Rite durchgeführt, welches nach DIN 5033 und DIN 6174 und DIN 6175 misst. Spektralphotometer zerlegen das Spektrum des sichtbaren Lichts in eine Anzahl schmaler Bänder oder Messkanäle und liefern für jeden Kanal einen digitalisierten Lichtstärkewert. Gemessen wird somit der Reflexionsgrad der Probe nach Kalibrierung auf Weiß- und Schwarzstandards unabhängig von der im Spektralphotometer benutzten Beleuchtungsquelle. Aus diesen Werten wird für die gemessene Farbe eine Remissionskurve aufgebaut. Zur Messung wird polychromatisches Licht durch ein Prisma oder durch schmalbandigen Filter in monochromatisches Licht zerlegt. Ein Photoelement ermittelt die vom Standard und der Probe reflektierten Lichtmengen und wertet ihr Verhältnis aus. R 457 besagt, dass bei der Weiße-Messung / Weißegrad-Messung ein Filter im Einsatz ist, der bei der Wellenlänge 457 nm durchlässig ist.

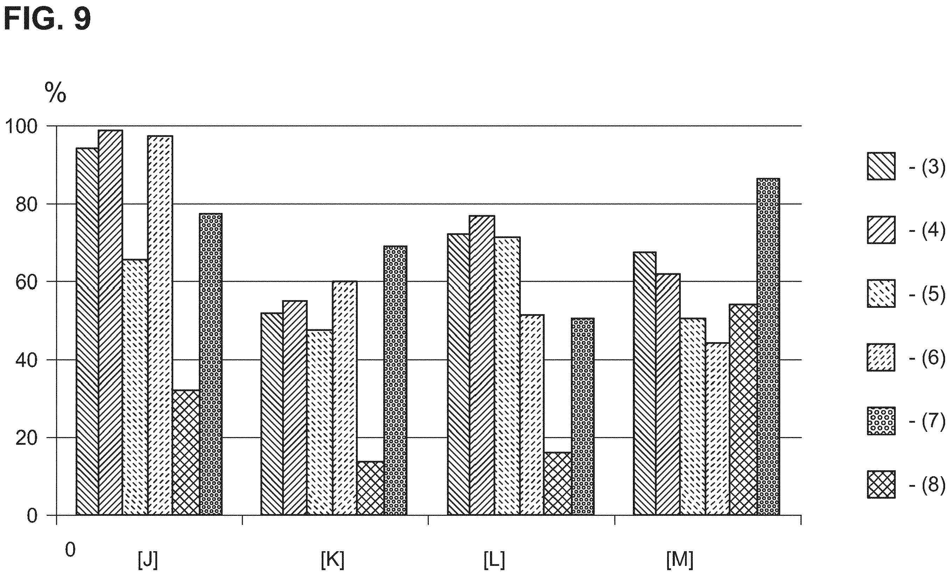

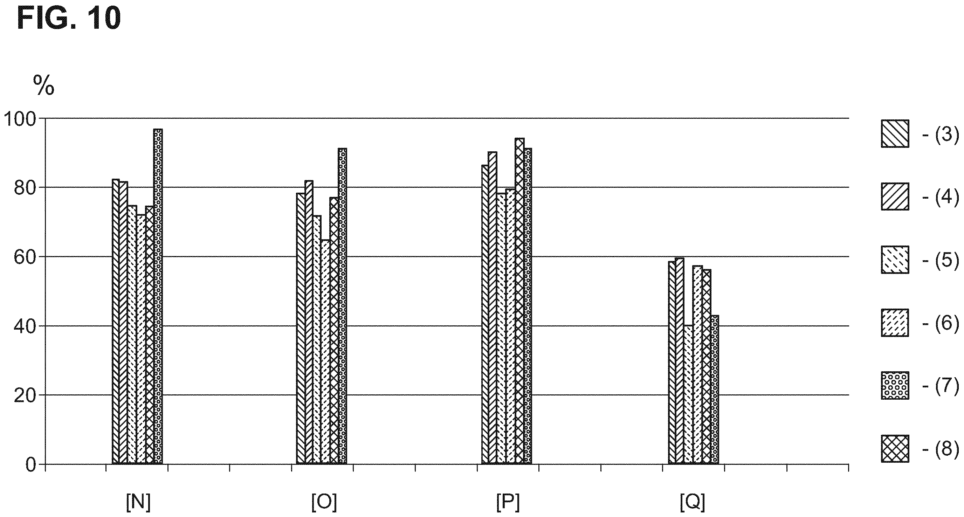

Die Rezepturen wurden auf Papier aufgestrichen, die Papiere in üblicher Weise getrocknet und mit den erhaltenen Papieren wurden dann folgende Tests durchgeführt:
- Messen der dynamischen Druckdichte:
   **Fig. 8** zeigt die gemessenen dynamischen Druckdichten, wobei [G] die "Energie (mj/mm²)" und [H] die "Dynamische Druckdichte" bedeutet. Ferner bedeuten in Fig. 8 bedeuten: (1) PLA-Urea, (3) PLA-Gemisch - 1,6 µm Modifikation 1, (4) PLA-Gemisch - 1,6 µm Modifikation 2, (5) PLA-Gemisch - 1,6 µm Modifikation 3, (6) PLA-Gemisch - 1,6 µm Modifikation 4, (7) Pergafast® 201 und (8) BPA.
- Testen der Umweltbeständigkeiten:
   Zur Prüfmethode und den Messkriterien siehe oben.
   Die Ergebnisse der Test zur Umweltbeständigkeit sind in **Fig. 9** (Lanolin, Ethanol, Weichmacher/, Wasser) wiedergegeben. Hierin bedeuten [J] Lanolin, 5 Min., [K] Ethanol (25 Vol.-%), 20 Min., [L] Weichmacher, [M] Wasser, 20 Min.. Ferner bedeuten in Fig. 9: (3) PLA-Gemisch - 1,6 µm Modifikation 1, (4) PLA-Gemisch - 1,6 µm Modifikation 2, (5) PLA-Gemisch - 1,6 µm Modifikation 3, (6) PLA-Gemisch - 1,6 µm Modifikation 4, (7) Pergafast® 201 und (8) BPA.
   Weiterhin sind in **Fig. 10** die Ergebnisse bezüglich der Einflüsse von Hitze, Feuchte und Licht wiedergegeben. Hierin bedeuten [N] Hitze (60 °C, 24 h), Bild; [O] Hitze (90 °C, 24 h), Bild; [P] Feuchte (40 °C, 90%, 24 h), Bild; [Q] Licht (21600 KJ/m²). Ferner bedeuten in Fig. 10: (3) PLA-Gemisch - 1,6 µm Modifikation 1, (4) PLA-Gemisch - 1,6 µm Modifikation 2, (5) PLA-Gemisch - 1,6 µm Modifikation 3, (6) PLA-Gemisch - 1,6 µm Modifikation 4, (7) Pergafast® 201 und (8) BPA.

### Beispiel 6: Verhältnis PLA : Farbgeber

In diesem Beispiel wird angegeben, wie das optimale Verhältnis von erfindungsgemäßem PLA-Gemisch zum Farbgeber bestimmet werden kann. Die nachfolgende Tabelle 8 gibt erfindungsgemäße Rezepturen ("Mod. 1" bis "Mod. 4") und verschiedene Verhältnisse von PLA zu ODB2 an. Alle Rezeptur-Modifikationen wurden mit in etwa dem gleichen Farbauszug (FAZ) gestrichen, d.h. es liegen gleiche Mengen an ODB2 (3 Teile), aber unterschiedliche Mengen an PLA vor. Je höher die PLA-Menge bzw. das PLA: Farbgeber-Verhältnis ist, umso höher ist der ermittelte D-Max;

**Tabelle 8: Rezepturen von Streichfarben und Verhältnis PLA : Farbgeber**

| | PLA (Teile) | ODB2 (Teile) |
|---|---|---|
| Nr. 4 Modifikation 1 | 10 | 3 |
| Nr. 9 Modifikation 5 | 6 | 3 |
| Nr. 10 Modifikation 6 | 12 | 3 |
| Nr. 11 Modifikation 7 | 24 | 3 |

| | | |
|---|---|---|
| * (4:1 Standard BPA zu ODB2) | | |

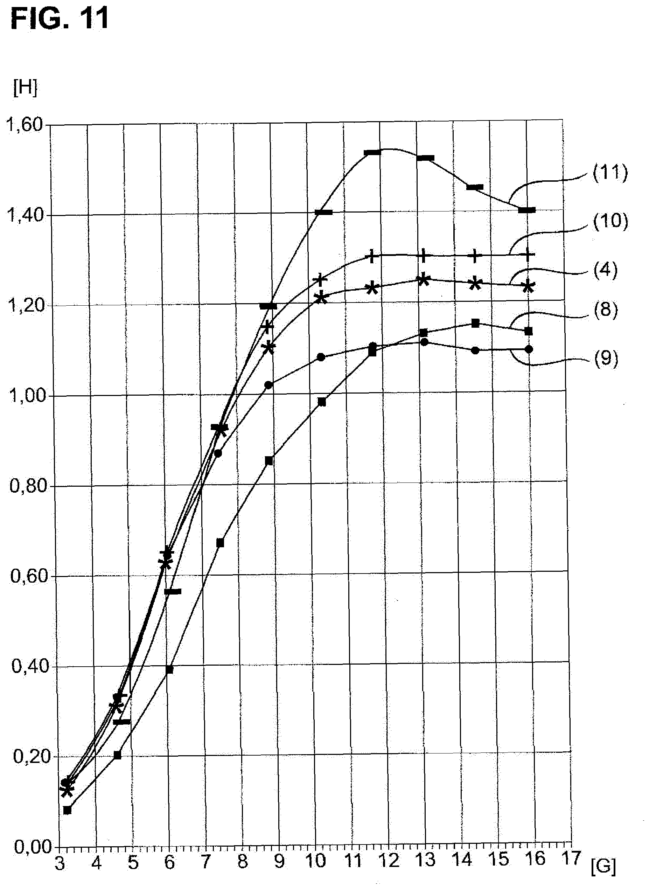

Es wurde die dynamische Druckdichte und der D-Max bestimmt. In **Fig. 11** ist die dynamische Druckdichte angegeben. [G] bedeutet die "Energie (mj/mm²)" und [H] bedeutet die "Dynamische Druckdichte". Ferner bedeuten in Fig. 11: (4) PLA-Gemisch - 1,6 µm Modifikation 2; (9) PLA-Gemisch - 1,6 µm Modifikation 5 ; (10) PLA-Gemisch - 1,6 µm Modifikation 6; (11) PLA-Gemisch - 1,6 µm Modifikation 7 n; (8) BPA.

Es wurden folgende D-Max-Werte für die Rezepturen und Verhältnis PLA: Farbgeber ermittelt: Mod. 1 (PLA : ODB2 = 10 : 3): D-Max = 1,25; Mod. 2 (PLA : ODB2 = 6 : 3): D-Max = 1,11; Mod. 3 (PLA : ODB2 = 12 : 3): D-Max = 1,30; Mod. 4 (PLA : ODB2 = 24 : 3): D-Max = 1,53.

### Beispiel 7: Testmethode

### Bestimmung der Klimabeständigkeit von wärmeempfindlichen Aufzeichnungsmaterialien (bei 40 °C und 90 % r.F. für 24 Stunden);

Zur messtechnischen Erfassung der Klimabeständigkeit eines Thermoausdrucks auf den wärmeempfindlichen Aufzeichnungsmaterialien der erfindungsgemäßen Beispiele und der Vergleichsbeispiele wurden jeweils auf den zu testenden wärmeempfindlichen Aufzeichnungsmaterialien schwarz/weiß-kariert -im Schachbrettmuster- gestaltete Thermoprobeausdrucke mit einem Gerät des Typs Atlantek 400 der Firma Printrex (USA) erstellt, wobei ein Thermokopf mit einer Auflösung von 300 dpi und einer Energie pro Flächeneinheit von 16 mJ/mm² zum Einsatz kam.

Nach der Erstellung des schwarz/weiß-karierten Thermoprobeausdruckes wurde nach einer Ruhezeit von mehr als 5 Minuten an jeweils drei Stellen der schwarz gefärbten Flächen und der ungefärbten Flächen des Thermoprobeausdruckes eine Bestimmung der Druckdichte mit einem Densitometer Gretag Macbeth Model RD - 1152 "B" durchgeführt. Aus den jeweiligen Messwerten der schwarz gefärbten Flächen und der ungefärbten Flächen wurde jeweils der Mittelwert gebildet.

Ein Thermoprobeausdruck wurde bei 40 °C und einer relativen Feuchtigkeit von 90 % in einen Klimaschrank gehängt. Nach wurde 24 Stunden wurde der Thermopapierausdruck entnommen, auf Raumtemperatur abgekühlt und es wurde erneut an je drei Stellen der schwarz gefärbten Flächen und der ungefärbten Flächen des Thermoprobeausdrucks eine Bestimmung der Druckdichte mit einem Densitometer Gretag Macbeth Model RD - 1152 "B" durchgeführt. Aus den jeweiligen Messwerten schwarz gefärbten Flächen und der ungefärbten Flächen wurde jeweils der Mittelwert gebildet.

Die Beständigkeit des Druckbildes in % entspricht dem Quotienten aus dem gebildeten Mittelwert der Druckdichte der gefärbten Flächen vor und nach der Lagerung im Klimaschrank multipliziert mit 100.

### Beispiel 8: Testmethode Bekk-Glätte

Die Glätte (bzw. Rauigkeit) ist eine wesentliche Oberflächeneigenschaft von Papieren. Sie repräsentiert die Güte der Oberflächenstruktur. Die Glätte nach Bekk beruht auf dem Prinzip der Luftstrommessung. Dazu wird eine Probe auf eine spezifizierte Glasplatte gelegt und über eine Gummiplatte mit definiertem Druck angepresst. Anschließend wird ein bestimmtes Luftvolumen von außen durch die Kontaktfläche über ein aufgebautes Vakuum gesaugt. Die Messung der Glätte nach Bekk erfolgt in Anlehnung an die DIN 53107:2016-05 "Prüfung von Papier und Pappe - Bestimmung der Glätte nach Bekk".

Die Glätte nach Bekk ist die Zeit in Sekunden, welche benötigt wird, um ein bestimmtes Luftvolumen aus der Umgebungsluft bei definierter Druckdifferenz zwischen einer Papieroberfläche und einer ringförmigen, nahezu vollkommen ebenen Fläche radial nach innen unter festgelegten Kontaktbedingungen hindurch zu saugen.

An den Proben wurden je zehn Messungen an der Oberseite (OS) durchgeführt. Für jede Messung wurde eine neue Probe verwendet. Die Probe wurde mit der zu prüfenden Seite auf die Glasplatte gelegt, sodass diese völlig bedeckt ist. Anschließend wurden Gummiplatte und Druckteller auf die Probe gesetzt, die Flächenpressung von 100 kPa aufgebracht und im Vakuumbehälter der Vordruck Pv erzeugt. Anschließend wird der Vakuumbehälter mit der Bohrung in der Glasplatte verbunden. Gemessen wird nun die Zeit des Druckabfalles zwischen p₁ (Messdruck am Messbeginn, in Kilopascal) und p₂ (Messdruck am Messende, in Kilopascal). Die Messungen wurden mit einem Bekk Glätte Prüfgerät des Geräteherstellers Messmer Büchel durchgeführt. Dieses Prüfgerät kann nach DIN 53107 / ISO 5627 uneingeschränkt zur Prüfung eingesetzt werden.

"OS" steht in dieser Schrift im Zusammenhang mit Messungen der Glätte nach Bekk für die Oberseite der Papierprobe und damit für die gestrichene Seite der jeweiligen Papierprobe.

### Beispiel 9

Zur Herstellung einer repräsentativen erfindungsgemäßen Verbindung der Formel (I) bzw. (II) als Farbentwickler wurden die in der nachfolgenden Tabelle 9.1 angegebenen Verbindungen eingesetzt:

**Tabelle 9.1**

| **Verbindung / Struktur** | **CAS** | **Eigenschaften** |
|---|---|---|
| 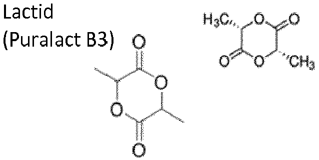 | 4511-42-6 | M= 144,13 g/mol |
| | (S,S-Lactid) | Tₘ = 95-97°C (S,S), 53°C (meso) |
| | | T_{b} = 285,5°C (meso) |
| | 95-96-5 (unspezifiziert) | Aggregat: fest |
| Harnstoff | 57-13-6 | M= 60,06 g/mol |
| 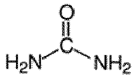 | | Tₘ = 133°C |
| | | Zersetzung ab >132°C (zu: Notrose Gase, Ammoniak, Isocyansäure |
| | | Aggregat: fest |
| | | pH= 9 |
| Zinnoctanoat | 301-10-0 | M= 405 g/mol |
| | | Tₘ = 9°C |
| Tin(II) 2-ethylhexanoate | | δ = 1,25 g/mL (bei 20 °C) |
| 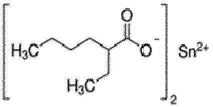 | | Aggregat: flüssig |
| p-Toluolsulfonylisocyanat | 4083-64-1 | M= 197,21 g/mol |
| 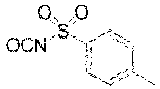 | | Tₘ = -2°C |
| | | T_{b} = 275 - 278°C |
| | | δ = 1,295 g/mL (bei 20 °C) |
| | | Aggregat: flüssig |
| Methylethylketon (MEK) | 78-93-3 | M= 72,11 g/mol |
| 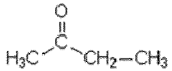 | | Tₘ = -86°C |
| | | T_{b} = 80°C |
| | | δ = 0,805 g/mL (bei 20 °C) |
| | | Aggregat: flüssig |
| Dibutylzinndilaurat (DBTL) | 77-58-7 | M = 631,56 g/mol |
| 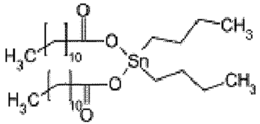 | | Aggregat: flüssig |
| | | δ = 1,006 g·cm⁻³ (25 °C) |
| | | Tₘ = 25-27 °C |
| | | T_{b} > 250°C |

Die eingesetzten Verbindungen hatten in der nachfolgend im Detail beschriebenen Synthese unterschiedliche Funktionen, wie sie sich aus der nachfolgenden Tabelle 9.2 ergeben:

**Tabelle 9.2**

| Verbindung | Funktion |
|---|---|
| Lactid | Reaktant |
| Harnstoff | Reaktant |
| Zinnoctanoat | Katalysator |
| p-Toluolsulfonylisocyanat | Reaktant |
| Methylethylketon (MEK) extra trocken | Lösungsmittel |
| Dibutylzinndilaurat (DBTL) | Katalysator |

Eine Standardrezeptur (mit einem molaren Mischungsverhältnis Harnstoff:Lactid = 1:2) zur Herstellung des Lactid-basierten Polyols ergibt sich aus der nachfolgenden Tabelle 9.3, in der die eingesetzte Masse von Harnstoff und Lactid auf insgesamt 100 g normiert ist:

**Tabelle 9.3**

| | Mengen | | |
|---|---|---|---|
| Verbindungen | Masse (g) | Mol | Massenanteil (%) |
| Harnstoff | 17,26 | 0,2874 | 17,26 |
| Lactid | 82,74 | 0,5741 | 82,74 |
| Gesamtmasse/- stoffmenge/-massenanteil | 100,00 | 0,8614 | 100,00 |

### Synthese:

Es wurde eine Synthese durchgeführt, bei der in einem Verfahrensschritt a) ein Harnstoff-Lactid-Polyol gebildet wurde (unter Ringöffnung des eingesetzten Lactids in Gegenwart eines Katalysators) und in der in einem Verfahrensschritt b) das erhaltene Harnstoff-Lactid-Polyol mit p-Toluolsulfonylisocyanat in trockenem Methylethylketon weiter umgesetzt wurde (Umsetzung der im ersten Verfahrensschritt erhaltenen Verbindung zum erfindungsgemäßen Reaktionsprodukt, das zur Verwendung als Farbentwickler geeignet ist).

### a) Synthese des Harnstoff-Lactid-Polyols:

Die eingesetzte Rezeptur ergibt sich im Wesentlichen aus der vorstehenden Tabelle 9.3. Die Synthese wurde im 800-Gramm-Maßstab (theoretische Ausbeute) durchgeführt.

Vorbereitung und Durchführung der Synthese; Beobachtungen; allgemeine Durchführungsvorschrift:
▪ Verwende eine Standard-Rückflussapparatur mit Rückflusskühler.
▪ Füge 661,9 g PURALACT B3 (Lactid) hinzu und spüle dreimal mit Stickstoff/Vakuum, um Sauerstoff zu entfernen.
▪ Erhitze auf ungefähr 100 °C unter kontinuierlichem N₂-Strom. Beginne sobald wie möglich zu rühren (100 - 150 rpm).
▪ Sobald das gesamte PURALACT B3 (Lactid) geschmolzen ist, erhitze auf ungefähr 120 °C.
▪ Füge 138,1 g Harnstoff hinzu, erhitze auf 160 °C (das Gemisch färbt sich hierbei leicht gelblich).
▪ Füge 100 - 175 ppm Zinnoctanoat hinzu (die Farbe des Gemisches ändert sich dabei zu gelblich)
▪ Halte das Reaktionsgemisch für ungefähr 1,5 - 1,75 Stunden bei 160 °C (Anmerkung: Die Gesamtreaktionszeit bei 160 °C hängt vom molaren Verhältnis Lactid:Harnstoff ab; je größer dieses Verhältnis ist, desto länger dauert es, bis die Reaktion abgeschlossen ist. Für ein Verhältnis Lactid:Harnstoff = 2:1, vgl. Tabelle 9.3, beträgt die Reaktionszeit ungefähr 1,5 Stunden).
▪ Kühle auf 110-120 °C ab und lege für ungefähr 30-60 Minuten ein Vakuum (< 10 mbar) an, um verbleibende Mengen an Lactid zu entfernen.
▪ Gieße die Reaktionsmischung mit gebildetem Harnstoff-Lactid-Polyol in ein Behältnis.

### b) Umsetzung des Harnstoff-Lactid-Polyols mit p-Toluolsulfonylisocyanat in trockenem Methylethylketon:

▪ Füge die gewünschte Menge an Polyol (185 g) in einen Dreihalskolben, der mit einem Rührer, einem Tropftrichter, einem Kondensator und einem Temperaturfühler ausgestattet ist. Der Stickstoffeinlass wird auf dem Tropftrichter angeordnet.
▪ 200,2 g p-Toluolsulfonylisocyanat werden in den Tropftrichter gegeben.
▪ Gebe ungefähr mit einem Massenanteil von 10 bis 20 % trockenes Methylethylketon in den Tropftrichter, bezogen auf die eingewogene Masse an Polyol.
▪ Erhitze auf ungefähr 60 - 80 °C.
▪ Gebe wie folgt die erforderliche Menge an Isocyanat langsam und tropfenweise unter kontinuierlichem Rühren dem Polyol hinzu.
▪ Nach Zugabe von 15 - 20 % Isocyanat, gebe 150 - 300 ppm Dibutylzinndilaurat (DBTL) zu der Reaktionsmischung hinzu.
▪ Die Viskosität wird allmählich zunehmen und es kann in gewissem Umfang zum Schäumen kommen.
▪ Nach Zugabe des gesamten Isocyanats, rühre für eine Stunde und erhöhe die Temperatur auf 80 - 100 °C.
▪ Spüle die Reaktionsmischung mit einem heftigen Stickstoffstrom, um Methylethylketon zu entfernen.
▪ Gebe das resultierende Produkt in eine Silikonform und stelle diese dann für 3-5 Stunden in einen Ofen bei 60 °C unter Vakuum, um verbleibendes Methylethylketon zu entfernen.
▪ Nach dem Abkühlen wird eine feste Substanz erhalten, die in ein Behältnis gegeben wird. Sie enthält die erfindungsgemäße Verbindung.

### Beispiel 10

Zur Herstellung einer repräsentativen erfindungsgemäßen Verbindung der Formel (I) bzw. (II) als Farbentwickler wurden erneut die in der vorstehenden Tabelle 9.1 angegebenen Verbindungen eingesetzt.

Die eingesetzten Verbindungen hatten in der nachfolgend im Detail beschriebenen Synthese unterschiedliche Funktionen, wie sie sich aus der vorstehenden Tabelle 9.2 ergeben.

Eine Standardrezeptur (mit einem molaren Mischungsverhältnis Harnstoff:Lactid = 1:2) zur Herstellung des Lactid-basierten Polyols ergibt sich aus der nachfolgenden Tabelle 10.1, in der die eingesetzte Masse von Harnstoff und Lactid auf insgesamt 100 g normiert ist:

**Tabelle 10.1**

| | Mengen | | |
|---|---|---|---|
| Verbindungen | Masse (g) | Mol | Massenanteil (%) |
| Harnstoff | 17,24 | 0,2871 | 17,24 |
| Lactid | 82,76 | 0,5742 | 82,76 |
| Gesamtmasse/- stoffmenge/-massenanteil | 100,00 | 0,8613 | 100,00 |

### Synthese:

Es wurde eine Synthese durchgeführt, bei der in einem Verfahrensschritt a) ein Harnstoff-Lactid-Polyol gebildet wurde (unter Ringöffnung des eingesetzten Lactids in Gegenwart eines Katalysators) und in der in einem Verfahrensschritt b) das erhaltene Harnstoff-Lactid-Polyol mit p-Toluolsulfonylisocyanat in trockenem Methylethylketon weiter umgesetzt wurde (Umsetzung der im ersten Verfahrensschritt erhaltenen Verbindung zum erfindungsgemäßen Reaktionsprodukt, das zur Verwendung als Farbentwickler geeignet ist).

### a) Synthese des Harnstoff-Lactid-Polyols:

Die eingesetzte Rezeptur ergibt sich im Wesentlichen aus der vorstehenden Tabelle 10.1. Die Synthese wurde im 302,09-Gramm-Maßstab (theoretische Ausbeute) durchgeführt. Nachfolgend angegeben sind Soll-Einwaagen.

Vorbereitung und Durchführung der Synthese; Beobachtungen; allgemeine Durchführungsvorschrift:
▪ Verwende eine Standard-Rückflussapparatur mit Rückflusskühler.
▪ Füge 250 g PURALACT B3 (Lactid) hinzu und spüle dreimal mit Stickstoff/Vakuum, um Sauerstoff zu entfernen.
▪ Erhitze auf 100 -120 °C unter kontinuierlichem N₂-Strom. Beginne sobald wie möglich zu rühren (100 - 150 rpm), um die Bildung einer homogenen Schmelze zu gewährleisten.
▪ Füge 52,09 g Harnstoff hinzu und erhitze unter N₂-Atmosphäre auf 160 °C (das Gemisch färbt sich hierbei leicht gelblich).
▪ Füge 100 - 175 ppm Zinnoctanoat hinzu (die Farbe des Gemisches ändert sich dabei zu gelblich)
▪ Halte das Reaktionsgemisch für ungefähr 1,5 - 2 Stunden bei 160 °C (Anmerkung: Die Gesamtreaktionszeit bei 160 °C hängt vom molaren Verhältnis Lactid:Harnstoff ab; je größer dieses Verhältnis ist, desto länger dauert es, bis die Reaktion abgeschlossen ist. Für ein molares Verhältnis Lactid:Harnstoff = 2:1, vgl. Tabelle 10.1, beträgt die Reaktionszeit ungefähr 1,5 Stunden).
▪ Kühle auf 110-120 °C ab und lege für ungefähr 60-90 Minuten ein Vakuum (< 10 mbar) an, um verbleibende Mengen an Lactid zu entfernen.

### b) Umsetzung des Harnstoff-Lactid-Polyols mit p-Toluolsulfonylisocyanat in trockenem Methylethylketon:

▪ Füge die gewünschte Menge an Polyol (100 g) in einen Dreihalskolben, der mit einem Rührer, einem Tropftrichter, einem Kondensator und einem Temperaturfühler ausgestattet ist. Der Stickstoff/Vakuum-Anschluss erfolgt über den Kondensator. Evakuiere anschließend drei Mal und belüfte jeweils zwischen den einzelnen Evakuiervorgängen sowie am Ende mit N₂, um Sauerstoff zu entfernen.
▪ 107,74 g (83,2 mL) p-Toluolsulfonylisocyanat werden in den Tropftrichter gegeben.
▪ Gebe ungefähr mit einem Massenanteil von 10 bis 50 % trockenes Methylethylketon in den Tropftrichter, bezogen auf die eingewogene Masse an Polyol.
▪ Erhitze auf ungefähr 60 - 80 °C.
▪ Gebe wie folgt die erforderliche Menge an Isocyanat langsam und tropfenweise unter kontinuierlichem Rühren dem Polyol hinzu.
▪ Nach Zugabe von 15 - 20 % Isocyanat, gebe 150 - 300 ppm Dibutylzinndilaurat (DBTL) zu der Reaktionsmischung hinzu.
▪ Die Viskosität wird allmählich zunehmen und es kann in gewissem Umfang zum Schäumen kommen.
▪ Nach Zugabe des gesamten Isocyanats, rühre für eine Stunde und erhöhe die Temperatur auf 80 - 100 °C.
▪ Spüle die Reaktionsmischung mit einem heftigen Stickstoffstrom, um Methylethylketon zu entfernen.
▪ Entferne verbleibendes Methylethylketon bei 60 - 90 °C unter Vakuum.
▪ Nach dem Abkühlen wird eine feste und daher gut handhabbare Substanz erhalten, die in ein Behältnis gegeben wird. Sie enthält die erfindungsgemäße Verbindung.

### Beispiel 11

Beispiel 11 stellt eine spezifische praktische Ausgestaltung des erfindungsgemäßen Verfahrens dar, die insbesondere an das vorstehende Beispiel 10 (allgemeine Verfahrensvorschrift) angelehnt ist (einzelne Abweichungen sind zu beachten, z.B. betreffend die Umsetzungstemperatur in Schritt b) und die zusätzliche Zugabe von Methylethylketon). Die im vorstehenden Beispiel 10 genannten Angaben hinsichtlich der eingesetzten Verbindungen und des molaren Mischungsverhältnisses Harnstoff:Lactid sowie die allgemeinen Ausführungen zur Synthesevorschrift gelten für Beispiel 11 entsprechend.

### a) Synthese des Harnstoff-Lactid-Polyols:

Im Verfahrensschritt a) des Beispiels 11 wurden die in der nachfolgenden Tabelle 11.1 angegebenen Verbindungen eingesetzt:

**Tabelle 11.1**

| **Chemikalie** | **M [g/mol]** | **δ [g/mL]** | **Konsistenz, Farbe** | **SOLL** | **IST** |
|---|---|---|---|---|---|
| Lactid (Puralact B3) | 144,13 | | Weiß | 250,00 g | 249,99 g |
| | | | Etwas gröber als der Harnstoff | | |
| Harnstoff | 60,06 | | Weiß | 52,09 g | 52,12 g |
| | | | Fein, wie handelsübliches Salz (NaCl) | | |
| Zinnoctanoat (Sn(Oct)₂) | 405 | 1,25 | Farblos klar | 35 µL | ca. 35 µL |

Syntheseapparatur: 500 mL Dreihalskolben, Rückflusskühler, Stickstoff als Schutzgas (Anschluss über Schlenk von oben an Kühler), Übergangsstück auf Schliff, Glasstopfen, Schliffklammern, Magnetrührfisch (große Hantel), Ölbad (> 200 °C) in Glasschale/Topf, Magnetrührer mit Heizplatte und Temperaturfühler, separate Kühlfalle mit Stickstoff-Dewar, L-Rohr NS 32, NS 32 Schlenk.

Die Schlenktechnik, in diesem Dokument kurz mit "Schlenk" bezeichnet, ist ein chemisches Arbeitsverfahren, mit dem luft- oder feuchtigkeitsempfindliche Substanzen unter Ausschluss von Luftsauerstoff und Luftfeuchtigkeit verarbeitet werden können.

249,99 g PURALACT B3 (Lactid) wurden in einen 500 mL Dreihalskolben eingewogen und ein Rührfisch zugegeben. Anschließend wurde eine Standard-Rückflussapparatur mit Rückflusskühler aufgebaut. Parallel wurden 52,12 g Harnstoff in einen 250 mL Dreihalskolben eingewogen. Sowohl auf die Standard-Rückflussapparatur als auch auf den 250 mL Dreihalskolben wurde jeweils drei Mal Vakuum gezogen und im Anschluss jeweils mit N₂ belüftet.

Im Anschluss wurde der 500 mL Dreihalskolben mit dem darin befindlichen Lactid unter kontinuierlichem N₂-Strom von 20 °C in einem Zeitraum von 170 min bis auf 120 °C erhitzt, sodass das Lactid als farblose klare Flüssigkeit vorlag. Danach wurde dem flüssigen Lactid der vorher abgewogene Harnstoff über einen Feststofftrichter im Stickstoffgegenstrom zugegeben.

Das entstandene Gemisch wurde im Stickstoffausgleich binnen 35 min auf 160 °C erhitzt, wobei sich der zugegebene Harnstoff vollständig auflöste und sich die Mischung leicht gelblich färbte.

Anschließend wurden dem resultierenden Gemisch ca. 35 µL Zinnoctanoat im Stickstoffgegenstrom hinzugefügt und die Mischung für 110 min bei 160 °C gerührt.

Nach dem Ende der Rührzeit hatte sich eine orange/Ahornsirup-farbige Lösung gebildet. Diese wurde zunächst binnen 15 min auf 120 °C abgekühlt und anschließend für 85 min einem Vakuum von 6,4 mbar ausgesetzt, durch welches verbliebene (nicht reagierte) Mengen an Lactid entfernt wurden. Das resultierende Harnstoff-Lactid-Polyol (261,41 g) war gelb, klar und bei Raumtemperatur hochviskos.

### b) Umsetzung des Harnstoff-Lactid-Polyols mit p-Toluolsulfonylisocyanat in trockenem Methylethylketon:

Im Verfahrensschritt b) des Beispiels 11 wurden die in der nachfolgenden Tabelle 11.2 angegebenen Verbindungen eingesetzt:

**Tabelle 11.2**

| **Chemikalie** | **M [g/mol]** | **δ [g/mL]** | **Konsistenz, Farbe** | **m [g]** | **V [mL]** |
|---|---|---|---|---|---|
| Lactid | 144,13 | | Weiß | 100,00 g | |
| (Puralact B3) | | | Etwas gröber als der Harnstoff | | |
| Methylethylketon (MEK) | 72,11 | 0,805 | Klar, farblos | | 24 mL + 20 mL |
| p-Toluolsulfonylisocyanat | 197,21 | 1,295 | Klar, farblos | | 82 mL |
| | | | Reagiert mit Wasser/Feuchtigkeit | | |
| Dibutylzinndilaurat (DBTL) | 631,56 | 1,066 | klar, farblos | | 60 µL |

Syntheseapparatur: 500 mL Dreihalskolben, Rückflusskühler, Thermometer, Stickstoff als Schutzgas (Anschluss über Schlenk), Glasstopfen, Schliffklammern, Magnetrührfisch (große Hantel), Übergangsstück auf Schliff, Ölbad (> 200 °C) in Glasschale/Topf, Magnetrührer mit Heizplatte und Temperaturfühler, 100 mL Tropftrichter mit Septum, Spritze und Kanüle (für das Isocyanat), 1 L Einhalskolben, 100 µL Eppendorfpipette, Schlenklinie mit Kühlfalle und Drehschieberpumpe.

100 g des in Verfahrensschritt a) hergestellten Harnstoff-Lactid-Polyols wurden in einen 500 mL Dreihalskolben eingewogen und anschließend die Syntheseapparatur mit Tropftrichter aufgebaut. Nach dreimaligen Evakuieren und Belüften der Apparatur mit N₂ wurde der Tropftrichter mit 106,19 g (82 mL) p-Toluolsulfonylisocyanat und 19,32 g (24 mL) Methylethylketon befüllt. Während der gesamten Reaktionsdauer herrschte ein leichter Stickstoffüberdruck in der Reaktionsapparatur. Der Stickstoff/Vakuum-Anschluss erfolgte über den Kühler. Die Zugabe von Chemikalien erfolgte generell über ein Septum oder im Stickstoffgegenstrom.

Der mit Harnstoff-Lactid-Polyol befüllte und mit N₂ gespülte Dreihalskolben wurde binnen 55 min auf 80 °C erhitzt, was für eine Rührbarkeit des darin befindlichen Harnstoff-Lactid-Polyols sorgte. Danach wurde mit dem Zutropfen der im Tropftrichter befindlichen Mischung aus p-Toluolsulfonylisocyanat und Methyletyhlketon begonnen, mit einer Tropfrate von etwa 30 Tropfen/min (etwa 10 mL/15min), bei einer Temperatur von 70 °C bis 82 °C.

Nach der Zugabe von etwa 20 mL des Gemisches aus p-Toluolsulfonylisocyanat und Methylethylketon wurde das Zutropfen gestoppt und 60 µL Dibutylzinndilaurat (DBTL) in den Dreihalskolben gegeben. Die Zugabe des Dibutylzinndilaurats hatte einen leichten Anstieg der Viskosität sowie eine vermehrte Blasenbildung im Reaktionsgemisch zur Folge.

Die Zugabe des Gemisches aus p-Toluolsulfonylisocyanat und Methylethylketon wurde fortgesetzt.

Eine zusätzliche Menge von 20 mL Methylethylketon wurde in das Reaktionsgemisch gegeben, um die Rührbarkeit des Reaktionsgemisches zu erhöhen.

Nach der Zugabe der zusätzlichen Menge des Methylethylketons wurde dem Reaktionsgemisch die restliche Menge (ca. 40 mL) der Mischung aus p-Toluolsulfonylisocyanat und Methylethylketon binnen 37 min zugetropft (Tropfrate ansteigend von 12 auf 60 Tropfen/min). Anschließend wurde die Temperatur auf 100 °C erhöht und das Reaktionsgemisch bei dieser Temperatur für eine Stunde gerührt. Danach wurde das Reaktionsgemisch unter Zuhilfenahme eines heftigen Stickstoffstroms gespült, was zur Entfernung von Methylethylketon aus dem Reaktionsgemisch führte.

Nach Beendigung des Spülvorganges wurde die Temperatur auf 60 °C gesenkt und zur weiteren Entfernung von Methylethylketon ein Vakuum (6-8 mbar) angelegt. Im zähen Rohprodukt bilden sich stabile Blasen bei der Methylethylketon-Entfernung. Die Temperatur wurde dann erhöht auf 90 °C; die Viskosität des Rohprodukts war nun geringer, so dass sich das Methylethylketon besser entfernen ließ.

Anschließend wurde das erhaltene Produkt unter Zuhilfenahme eines Heißluftföns aus dem Dreihalskolben in eine Braunglas-Weithals-Flasche überführt. Das Produkt, welches die erfindungsgemäße Verbindung enthielt, war bei Raumtemperatur klar, gelb und spröde.

### Bezuqszeichenliste

- [A] =: TMS (Tetramethylsilan)
- [B] =: ppm ("parts per million", zu Deutsch "Teile von einer Million", Millionstel)
- [C] =: Scan
- [D] =: Min. (Minuten)
- [E] =: p-TolSO2NH2 (p-Toluolsulfonamid; CAS® Nummer 70-55-3)
- [F] =: p-TolSO2NCO (p-Toluolsulfonylisocyanat)
- [G] =: Energie (mj/mm²)
- [H] =: Dynamische Druckdichte
- [I] =: Statische Druckdichte
- [J] =: Lanolin, 5 Min.
- [K] =: Ethanol (25 Vol.-%), 20 Min.
- [L] =: Weichmacher
- [M] =: Wasser, 20 Min.
- [N] =: Hitze (60 °C, 24 h), Bild
- [O] =: Hitze (90 °C, 24 h), Bild
- [P] =: Feuchte (40 °C, 90 %, 24 h), Bild
- [Q] =: Licht (21600 KJ/m²)
- [T] =: Temperatur (°C)

- (1) =: PLA-Urea
- (2) =: PLA-Gemisch - 8 µm
- (3) =: PLA-Gemisch - 1,6 µm Modifikation 1
- (4) =: PLA-Gemisch - 1,6 µm Modifikation 2
- (5) =: PLA-Gemisch - 1,6 µm Modifikation 3
- (6) =: PLA-Gemisch - 1,6 µm Modifikation 4
- (7) =: Pergafast® 201 (*N*-(4-Methylphenylsulfonyl)-*N'*-(3-(4-methylphenylsulfonyl-oxy)phenyl)harnstoff)
- (8) =: BPA (2,2 bis (4-hydroxyphenyl)-Propan; CAS® RN 80-05-7)
- (9) =: PLA-Gemisch - 1,6 µm Modifikation 5
- (10) =: PLA-Gemisch - 1,6 µm Modifikation 6
- (11) =: PLA-Gemisch - 1,6 µm Modifikation 7

## Patentansprüche

1. Beschichtungszusammensetzung zur Herstellung eines wärmeempfindlichen Aufzeichnungsmaterials oder wärmeempfindliche Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, die im Farbentwickler
a) mindestens eine strukturelle Einheit der Formel (I) 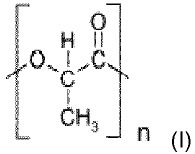 enthält, wobei n eine ganze Zahl von 1 bis 20, vorzugsweise von 1 bis 10, weiter bevorzugt von 1 bis 6, ist;
und
b) unabhängig voneinander, eine, zwei oder mehr endständige Elektronenakzeptorgruppen enthält, wobei mindestens eine der Elektronenakzeptorgruppen keine Carboxylgruppe (-COOH) ist, die aus Milchsäure und/oder einer Polymilchsäure mit der strukturellen Einheit der Formel (I) stammt;
mit der Maßgabe, dass der eine oder der zumindest eine der mehreren Farbentwickler keine Verbindung der Formel (A) ist, 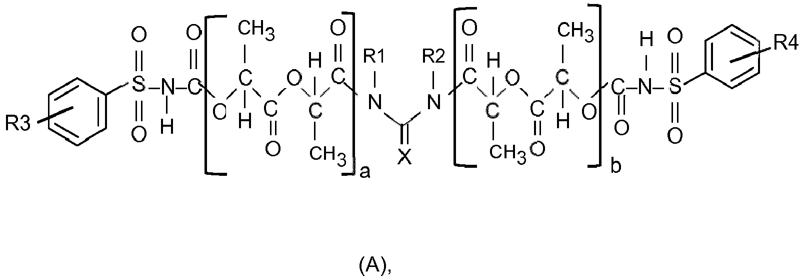 wobei X für O, S oder NH steht; R1 und R2 unabhängig voneinander für ein Wasserstoffatom, eine C1-C6-Alkylgruppe, eine C3-C6-Cycloalkylgruppe oder eine C2-C6-Alkenylgruppe stehen; R3 und R4 unabhängig voneinander für ein Wasserstoffatom, eine C1-C6-Alkylgruppe, eine C1-C6-Alkoxygruppe oder eine Halogengruppe stehen; und a und b jeweils für eine ganze Zahl stehen und die Bedingungen a ≥ 0, b ≥ 0 und (a+b) ≥ 1 erfüllen.

2. Beschichtungszusammensetzung zur Herstellung eines wärmeempfindlichen Aufzeichnungsmaterials oder wärmeempfindliche Aufzeichnungsschicht nach Anspruch 1, wobei der eine oder der zumindest eine der mehreren Farbentwickler eine Verbindung der Formel (II) ist, 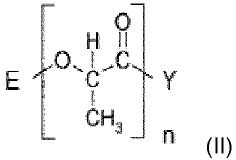
wobei n eine ganze Zahl von 1 bis 20, vorzugsweise von 1 bis 10, weiter bevorzugt von 1 bis 6, ist;
wobei der Rest E eine Elektronenakzeptorgruppe darstellt; und
wobei der Rest Y
(i) für -OH, -OR, -NH₂, -NHR, -NRR',-SH, -SR, einen jeweils substituierten oder unsubstituierten Iminoharnstoff-, Harnstoff-, Thioarnstoff-, Sulfonylharnstoff-, Sulfonylthioharnstoff-, Sulfonamid-Rest, Sulfonyloxy-C2-C6-Alkylamid-Rest, Sulfonyloxy-C2-C6-Alkylharnstoff-Rest oder Sulfonyloxy-C2-C6-Alkylthioharnstoff-Rest steht, wobei R und R' unabhängig voneinander für eine lineare oder verzweigte C1-C22-Alkylgruppe, eine lineare oder verzweigte C1-C22-Alkylengruppe stehen, oder R und R' gemeinsam eine C4-C7-Cycloalkylengruppe bilden,
oder wobei der Rest Y
(ii) für eine Gruppe der Formel (III) steht, 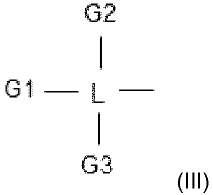 wobei L eine ein-, zwei- oder drei-wertige Linker-Gruppe darstellt und die Gruppen G1, G2 und G3 unabhängig voneinander anwesend oder abwesend sein können, wobei die Gruppen G1, G2 und G3 unabhängig voneinander für eine Gruppe der der Formel (IV) (IV-G1, IV-G2, IV-G3) stehen, 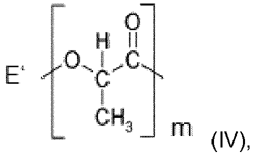
wobei m eine ganze Zahl von 1 bis 20, vorzugsweise von 1 bis 10, weiter bevorzugt von 1 bis 6, ist; und
wobei E' jeweils unabhängig voneinander in G1, G2 und G3 anwesend oder abwesend sein kann und jeweils unabhängig eine Elektronenakzeptorgruppe (IV-E', E'-G2, E'-G3) darstellt;
wobei vorzugsweise in der Beschichtungszusammensetzung zur Herstellung eines wärmeempfindlichen Aufzeichnungsmaterials oder wärmeempfindliche Aufzeichnungsschicht E und E' jeweils unabhängig voneinander für eine Elektronenakzeptorgruppe ausgewählt aus der Gruppe bestehend aus einem jeweils substituierten oder unsubstituierten Sulfonat-, Sulfonamidcarbonyl- oder Arylcarbonyl-Rest, stehen.

3. Beschichtungszusammensetzung zur Herstellung eines wärmeempfindlichen Aufzeichnungsmaterials oder wärmeempfindliche Aufzeichnungsschicht nach Anspruch 1 oder 2, wobei die Linkergruppe L eine strukturelle Einheit mit einer der Formeln (V), (VI), VII) oder (VIII) ist:
- eine Di-, Tri-, Tetra-Amin-Linkergruppe der Formel (V) oder eine Di-, Tri-, Tetra-Alkohol-Linkergruppe der Formel (VI):
(-NH-)₂₋₄R15 (V),
(-O-)₂₋₄R15 (VI),
wobei R15 jeweils unabhängig für eine lineare oder verzweigte C2-C12-Alkylgruppe, eine lineare oder verzweigte C2-C12-Alkylengruppe, eine C5-C7-Cycloalkylgruppe, eine Arylengruppe, eine Biarylengruppe, oder eine Sulfonyldiphenylgruppe (-Ph-SO₂-Ph-) steht;
- eine (gemischte) Amino-Alkohol- Linkergruppe der Formel (VII)
-(NH-)ₛR16(-O-)ₜ (VII),
wobei R16 jeweils unabhängig für eine lineare oder verzweigte C2-C12-Alkylgruppe, eine lineare oder verzweigte C2-C12-Alkylengruppe, eine C5-C7-Cycloalkylgruppe, eine Arylengruppe, eine Biarylengruppe, oder eine Sulfonyldiphenylgruppe (-Ph-SO₂-Ph-) steht, und wobei s und t jeweils unabhängig voneinander für eine ganze Zahl von 1 - 4 stehen und die Bedingung 2 ≥ (s+t) ≤ 4 erfüllt;
- eine Iminoharnstoff-, Harnstoff-, Thioarnstoff-Linkergruppe (VIII) der Formel ist: 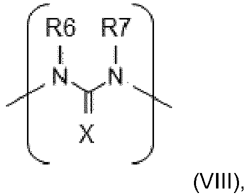 wobei R6 und R7 unabhängig voneinander für ein Wasserstoffatom oder eine Methylgruppe, vorzugsweise für ein Wasserstoffatom, stehen.
- eine Zuckeralkoholgruppe mit der Formel (IX) ist,
(-O-)₂₋₄R17 (IX),
wobei R17 von einem, gegebenenfalls substituierten, Zuckeralkohol der Formel (X) abgeleitet ist, 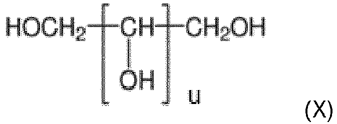
wobei u für eine für eine ganze Zahl von 1 - 4 steht,
wobei der Zuckeralkohol vorzugsweise Sorbitol ist.

4. Beschichtungszusammensetzung zur Herstellung eines wärmeempfindlichen Aufzeichnungsmaterials oder wärmeempfindliche Aufzeichnungsschicht nach Anspruch 1 oder 2, wobei der eine oder der zumindest eine der mehreren Farbentwickler eine Verbindung ist, die ferner
c) eine oder mehrere strukturelle Einheiten der Formel (VIII) enthält, 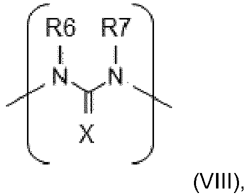
wobei X für O, S oder NH steht und R6 und R7 unabhängig voneinander für ein Wasserstoffatom, eine Methylgruppe, vorzugsweise für ein Wasserstoffatom, stehen; und
wobei eine strukturelle Einheit der Formel (VIII) gegebenenfalls auch endständig sein kann und in diesem Fall der endständige Stickstoff (N) ferner mit einem Rest R5 substituiert ist, und wobei R5 unabhängig für ein Wasserstoffatom, eine C1-C6-Alkylgruppe, eine C5-C7-Cycloalkylgruppe, eine C2-C6-Alkylengruppe, einen substituierten oder unsubstituierten Alkylaryl- oder Aryl-Rest steht; und/oder
eine Beschichtungszusammensetzung oder wärmeempfindliche Aufzeichnungsschicht nach Anspruch 1 oder 2, umfassend als Farbentwickler a) mindestens eine strukturelle Einheit der Formel (I) oder der Formel (II), wie jeweils in Anspruch 1 oder 2 definiert, und b) eine oder zwei endständige strukturelle Einheiten der Formel (XIa), 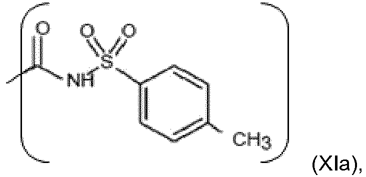 enthält und keine strukturellen Einheiten der Formel (VIII) im Farbentwickler vorliegen.

5. Beschichtungszusammensetzung oder wärmeempfindliche Aufzeichnungsschicht nach einem der Ansprüche 1 bis 4, umfassend mindestens einen Farbentwickler, der eine Verbindung ist, wobei
- in a) die mindestens eine strukturelle Einheit der Formel (I) die Formel (Xlla) 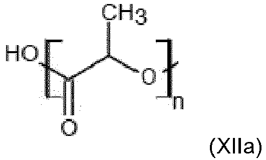 aufweist, wobei n eine ganze Zahl von 1 bis 20, vorzugsweise von 1 bis 10, weiter bevorzugt von 1 bis 6, ist;
und/oder
- in b) die eine oder zwei endständigen strukturellen Einheiten die Formel (XIa) 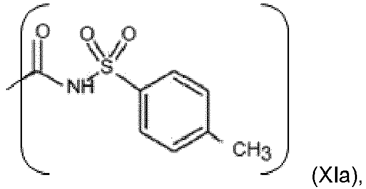 aufweisen;
vorzugsweise wobei die Beschichtungszusammensetzung oder wärmeempfindliche Aufzeichnungsschicht eine solche ist, die mindestens einen Farbentwickler umfasst, der eine Verbindung ist, die in a) als die mindestens eine strukturelle Einheit der Formel (I) (Milchsäure-Einheit) die strukturelle Einheit der Formel (Xlla) aufweist, und in b) eine endständige strukturelle Einheit der Formel (XIa) vorliegt, so dass der mindestens eine Farbentwickler die Formel (XIIIa). 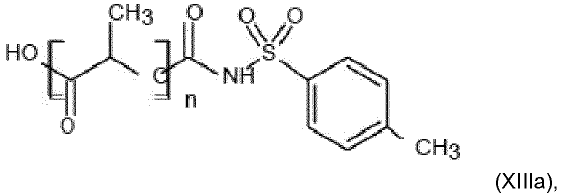 aufweist, wobei n eine ganze Zahl von 1 bis 20, vorzugsweise von 1 bis 10, weiter bevorzugt von 1 bis 6, ist.

6. Beschichtungszusammensetzung oder wärmeempfindliche Aufzeichnungsschicht nach einem der Ansprüche 1 bis 5, die ferner mindestens eine weitere Verbindung der Formel (XIV) 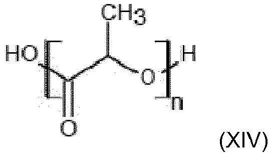 enthält, wobei n eine ganze Zahl von 3 bis 15, vorzugsweise von 5 bis 9, ist.

7. Beschichtungszusammensetzung oder wärmeempfindliche Aufzeichnungsschicht nach einem der Ansprüche 1 bis 6,
i. die ferner mindestens einen weiteren Farbentwickler der Formel (XV) 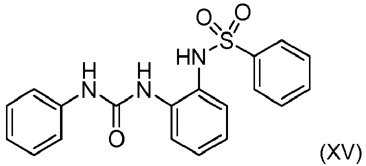 enthält;
und/oder
ii. die ferner mindestens einen weiteren Farbentwickler der Formel (XVI) 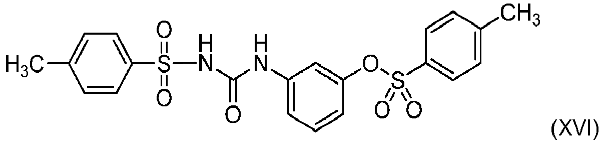 enthält;
und/oder
wobei die Beschichtungszusammensetzung oder wärmeempfindliche Aufzeichnungsschicht nach einem der vorherigen Ansprüche, zudem umfasst, ein oder mehrere Bestandteile aus der Gruppe bestehend aus
- Sensibilisatoren,
- Pigmente,
- Dispergiermittel,
- Antioxidationsmittel,
- Trennmittel,
- Entschäumer,
- Lichtstabilisatoren,
und
- Aufheller;
und/oder
wobei die Beschichtungszusammensetzung oder wärmeempfindliche Aufzeichnungsschicht, einen Sensibilisator ausgewählt aus der Gruppebestehend aus Benzylnaphthylether (BNE), Diphenylsulfon (DPS), Ethylenglycol-m-toluylether (EGTE), Ethylenglycolphenoxyethan (EGPE), 1,2-Di(m-methylphenoxy)ethan (DMPE), 1,2-Diphenoxyethan (DPE), Stearamid und N-Hydroxymethyl)stearamid oder eine Kombination davon umfasst.

8. Beschichtungszusammensetzung oder wärmeempfindliche Aufzeichnungsschicht nach einem der vorherigen Ansprüche, wobei die flächenbezogene Masse der Beschichtungszusammensetzung oder wärmeempfindlichen Aufzeichnungsschicht im Bereich von 1,5 bis 8 g/m² liegt, vorzugsweise im Bereich von 1,5 bis 6 g/m², weiter bevorzugt im Bereich von 2 bis 6 g/m², besonders bevorzugt im Bereich von 2,0 bis 5,5 g/m².

9. Streichfarbe zur Herstellung einer Beschichtungszusammensetzung oder einer wärmeempfindlichen Aufzeichnungsschicht, umfassend
- einen oder mehrere Farbstoffvorläufer; und
- einen oder mehrere Farbentwickler, wobei der eine oder zumindest einer der mehreren Farbentwickler eine Verbindung ist, wie in einem der Ansprüche 1 bis 8 definiert.

10. Wärmeempfindliches Aufzeichnungsmaterial, umfassend
- ein Trägersubstrat,
und
- eine wärmeempfindliche Aufzeichnungsschicht, wie in einem der Ansprüche 1 bis 8 definiert;
vorzugsweise wobei das wärmeempfindliche Aufzeichnungsmaterial zusätzlich eine zwischen dem Trägersubstrat und der wärmeempfindlichen Aufzeichnungsschicht gelegene Zwischenschicht enthält, wobei die Zwischenschicht vorzugsweise Pigmente enthält;
weiter bevorzugt wobei es sich bei den Pigmenten um
a) organische Pigmente, vorzugsweise um organische Hohlkörperpigmente handelt und/oder
b) anorganischen Pigmente handelt, vorzugsweise ausgewählt aus der Liste bestehend aus kalziniertem Kaolin, Siliziumoxid, Bentonit, Kalziumkarbonat, Aluminiumoxid und Böhmit;
und/oder
wobei ein Wärmeempfindliches Aufzeichnungsmaterial vorliegt, wobei die wärmeempfindliche Aufzeichnungsschicht vollständig oder teilweise mit einer Schutzschicht bedeckt ist.

11. Produkte, vorzugsweise Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten, umfassend ein erfindungsgemäßes wärmeempfindliches Aufzeichnungsmaterial nach Anspruch 10.

12. Verwendung eines wärmeempfindlichen Aufzeichnungsmaterials nach Anspruch 10 als Lottoscheine, TITO-Tickets (Ticket-in, Ticket-out), Fahrscheine, Eintrittskarten, Flug-, Bahn-, Schiff- oder Busticket, Glücksspielbeleg, Parkticket, Etikett, Kassenbon, Bankauszüge, Selbstklebeetikett, medizinisches und/oder technisches Diagrammpapier, Faxpapier, Sicherheitspapier oder Barcode-Etiketten.

13. Verfahren zur Herstellung eines wärmeempfindlichen Aufzeichnungsmaterials nach Anspruch 10 oder einer wärmeempfindlichen Aufzeichnungsschicht nach einem der Ansprüche 1 bis 8, umfassend die folgenden Verfahrensschritte:
i. Bereitstellen oder Herstellen eines Trägersubstrates; sowie Bereitstellen oder Herstellen einer Beschichtungszusammensetzung nach einem der Ansprüche 1 bis 8 oder einer Streichfarbe nach Anspruch 9;
ii. Aufbringen der Beschichtungszusammensetzung auf das Trägersubstrat oder auf eine darauf angeordnete Zwischenschicht;
iii. Trocknen der aufgebrachten Beschichtungszusammensetzung, so dass eine wärmeempfindliche Aufzeichnungsschicht resultiert, die gemeinsam mit dem Trägersubstrat in einem wärmeempfindlichen Aufzeichnungsmaterial vorliegt;
iv. vorzugsweise ein vorstehendes Verfahren umfassend die Schritte i. bis iii. zur Herstellung eines wärmeempfindlichen Aufzeichnungsmaterials oder einer wärmeempfindlichen Aufzeichnungsschicht, ferner umfassend den Verfahrensschritt des Aufbringens einer die wärmeempfindliche Aufzeichnungsschicht vollständig oder teilweise bedeckenden Schutzschicht und Trocknen der Schutzschicht, so dass eine wärmeempfindliche Aufzeichnungsschicht resultiert, die gemeinsam mit dem Trägersubstrat in einem wärmeempfindlichen Aufzeichnungsmaterial vorliegt und vollständig oder teilweise mit der Schutzschicht bedeckt ist.

14. Verbindung, vorzugsweise zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei
(1) die Verbindung umfasst:
a) mindestens eine strukturelle Einheit der Formel (I) wie in Anspruch 1 angegeben und definiert,
und
b) unabhängig voneinander, eine oder zwei endständige Elektronenakzeptorgruppen für den Farbentwickler enthält, wobei mindestens eine der Elektronenakzeptorgruppen keine Carboxylgruppe (-COOH) ist, die aus Milchsäure und/oder einer Polymilchsäure mit der strukturellen Einheit der Formel (I) stammt;
mit der Maßgabe, dass die Verbindung keine Verbindung der Formel (A) ist, wie diese in Anspruch 1 angegeben und definiert ist,
und Mischungen davon;
oder
(2) die Verbindung eine Verbindung der Formel (II) ist, wie in Anspruch 2 angegeben und definiert,
oder
(3) die Verbindung eine Verbindung der Formel (II) ist, wie in Anspruch 2 angegeben und definiert, wobei E und E' jeweils unabhängig voneinander für eine Elektronenakzeptorgruppe ausgewählt aus der Gruppe bestehend aus einem jeweils substituierten oder unsubstituierten Sulfonat-, Sulfonamidcarbonyl- oder Arylcarbonyl-Rest, stehen;
oder
(4) die Verbindung eine Verbindung der Formel (II) ist, wie in Anspruch 2 angegeben und definiert, wobei die Linkergruppe L eine strukturelle Einheit mit einer der Formeln (V), (VI), VII) oder (VIII) ist, wie diese jeweils in Anspruch 3 angegeben und definiert sind;
und/oder
vorzugsweise eine Verbindung, die Verbindung eine Verbindung, wie in Anspruch 1 oder 2 angegeben und definiert, ist, die ferner
c) eine oder mehrere strukturelle Einheiten der Formel (VIII) enthält, wie diese jeweils in Anspruch 4 angegeben und definiert ist.

15. Verbindung nach Anspruch 14, wobei die Verbindung a) mindestens eine strukturelle Einheit der Formel (I), wie diese in Anspruch 1 angegeben und definiert ist, oder eine Verbindung der Formel (II), wie diese in Anspruch 2 angegeben und definiert ist, und b) unabhängig voneinander eine oder zwei endständige Elektronenakzeptorgruppen mit der strukturellen Einheit der Formel (XIa), wie diese in Anspruch 4 angegeben und definiert ist, umfasst; und wobei in der Verbindung keine strukturellen Einheiten der Formel (VIII), wie diese in Anspruch 4 angegeben und definiert ist, vorliegen; und Mischungen davon;
vorzugsweise wobei die Verbindung eine Verbindung ist, die als mindestens eine strukturelle Einheit der Formel (I) (Milchsäure-Einheit) eine strukturelle Einheit der Formel (Xlla) 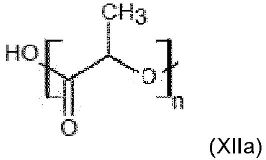 aufweist, wobei n eine ganze Zahl von 1 bis 20, vorzugsweise von 1 bis 10, weiter bevorzugt von 1 bis 6, ist; und Mischungen davon;
und/oder
weiter bevorzugt wobei die Verbindung eine Verbindung ist, die eine oder zwei endständige strukturelle Einheiten der Formel (XIa), 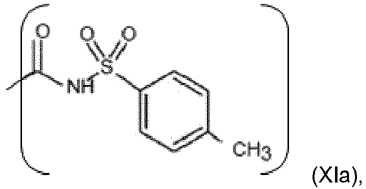 aufweist; und Mischungen davon;
und/oder
besonders bevorzugt wobei die Verbindung eine Verbindung der Formel (XIIIa) ist, 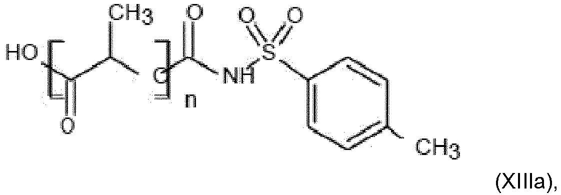 wobei n eine ganze Zahl von 1 bis 20, vorzugsweise von 1 bis 10, weiter bevorzugt von 1 bis 6, ist; und Mischungen davon.

16. Verfahren zur Herstellung einer Verbindung nach einem der Ansprüche 14 bis 15, vorzugsweise einer Verbindung zur Verwendung als Farbentwickler in einer Beschichtungszusammensetzung zur Herstellung eines wärmeempfindlichen Aufzeichnungsmaterials oder als Farbentwickler in einer wärmeempfindlichen Aufzeichnungsschicht oder als Farbentwickler in einer Streichfarbe zur Herstellung einer Beschichtungszusammensetzung oder einer wärmeempfindlichen Aufzeichnungsschicht, wobei man ein Lactid der Formel (XV) und wenigstens eine Vorläuferverbindung einer Elektronenakzeptorgruppe, wobei mindestens eine Vorläuferverbindung einer Elektronenakzeptorgruppe keine Carboxylgruppe (-COOH) bildet, die aus Milchsäure und/oder einer Polymilchsäure mit der strukturellen Einheit der Formel (I) stammt, vorzugsweise mindestens eine Vorläuferverbindung einer Elektronenakzeptorgruppe wie diese in Anspruch 2 definiert ist, weiter bevorzugt mindestens ein p-Toluolsulfonylisocyanat der Formel (XVI) als Vorläuferverbindung einer Elektronenakzeptorgruppe, 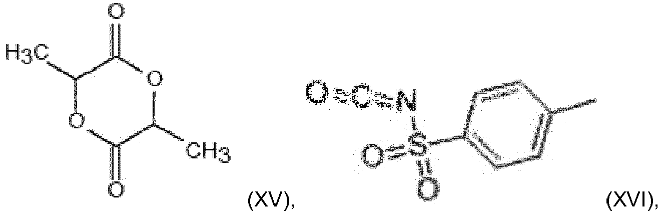 in einem Verfahren umfassend folgende Verfahrensschritte einsetzt:
- Ringöffnung des Lactids der Formel (XV), gegebenenfalls in Gegenwart eines Katalysators;
- Polymerisation der durch Ringöffnung des Lactids der Formel (XV) erhaltenen Zwischenverbindung zu einer Verbindung umfassend mindestens eine strukturelle Einheit der Formel (I), vorzugsweise umfassend eine strukturelle Einheit der Formel (Xlla), in denen das endständige Sauerstoffatom (O) jeweils ein Wasserstoffatom trägt und die endständige Carbonylgruppe (C=O) in Formel (I) eine OH-Gruppe trägt, 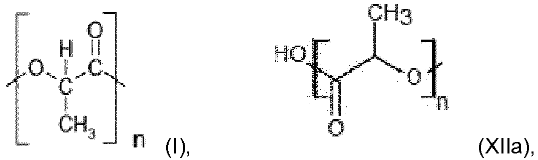 wobei n jeweils eine ganze Zahl von 1 bis 20, vorzugsweise von 1 bis 10, weiter bevorzugt von 1 bis 6, ist;
- Umsetzung der durch Polymerisation erhaltenen Verbindung, umfassend eine strukturelle Einheit der Formel (I), vorzugsweise eine strukturelle Einheit der Formel (Xlla), mit wenigstens einer Vorläuferverbindung einer Elektronenakzeptorgruppe, wobei mindestens eine Vorläuferverbindung einer Elektronenakzeptorgruppe keine Carboxylgruppe (-COOH) bildet, die aus Milchsäure und/oder einer Polymilchsäure mit der strukturellen Einheit der Formel (I) stammt, vorzugsweise mindestens eine Vorläuferverbindung einer Elektronenakzeptorgruppe wie diese in Anspruch 2 definiert ist, weiter bevorzugt mit einem p-Toluolsulfonylisocyanat der Formel (XVI) als Vorläuferverbindung einer Elektronenakzeptorgruppe, an zumindest einer endständigen OH-Gruppe der durch Polymerisation erhaltenen Verbindung;
- Gewinnen einer resultierenden Verbindung wie unter (1) oder (2) in einem der Ansprüche 14 bis 15 definiert, wobei in der Verbindung unter (1) die endständige Carbonylgruppe (C=O) eine OH-Gruppe trägt und diese zusammen eine endständige Carbonsäure-Gruppe (-C(=O)OH) bilden, und wobei in der Verbindung unter (2), die in Anspruch 2 als eine Verbindung der Formel (II) definiert ist, wobei der in der Verbindung der Formel (II) an die endständige Carbonylgruppe (C=O) gebundene Rest Y für -OH steht und diese zusammen eine endständige Carbonsäure-Gruppe (-C(=O)OH) bilden;
wobei die Maßgabe gilt, dass keine Verbindung der Formel (A), wie diese im Anspruch 1 angegeben und definiert ist, hergestellt wird.

17. Verfahren nach Anspruch 16 zur Herstellung einer Verbindung nach einem der Ansprüche 14 bis 15, umfassend
- eine weitere Umsetzung von wenigstens einer, der nach dem Verfahren nach Anspruch 16 gewonnenen, resultierenden Verbindung, an der endständigen Carbonsäure-Gruppe (-C(=O)OH) mit einer Verbindung ausgewählt aus der Gruppe bestehend aus HOR, NH₃ oder einem Ammoniumsalz, NH₂R, HNRR', HSR, HSR mit nachfolgender Verseifung zu -SH, einer jeweils substituierten oder unsubstituierten Iminoharnstoff-, Harnstoff-, Thioarnstoff-, Sulfonylharnstoff-, Sulfonylthioharnstoff-, Sulfonamid-Verbindung, Sulfonyloxy-C2-C6-Alkylamid-Verbindung, Sulfonyloxy-C2-C6-Alkylharnstoff-Verbindung oder Sulfonyloxy-C2-C6-Alkylthioharnstoff-Verbindung, wobei R und R' unabhängig voneinander für eine lineare oder verzweigte C1-C22-Alkylgruppe, eine lineare oder verzweigte C1-C22-Alkylengruppe stehen, oder R und R' gemeinsam eine C4-C7-Cycloalkylengruppe bilden, um eine Verbindung der Formel (II), wie diese in Anspruch 2 mit der Bedeutung für den Rest Y unter (i) angegeben und definiert ist, wobei der Rest Y jedoch nicht -OH ist, zu gewinnen;
- eine weitere Umsetzung von, unabhängig voneinander, einer, zwei, drei oder vier der nach dem Verfahren nach Anspruch 16 gewonnenen, resultierenden Verbindungen, jeweils an der endständigen Carbonsäure-Gruppe (-C(=O)OH) mit einer Vorstufe einer Linker-Gruppe L, wie diese Linker-Gruppe L in Anspruch 2 oder 3 definiert ist, um eine Verbindung der Formel (II), wie diese in Anspruch 2 angegeben und definiert ist, zu gewinnen, wobei der Rest Y in der Verbindung der Formel (II) für eine Gruppe der Formel (III) steht, wie diese unter (ii) in Anspruch 2 angegeben und definiert ist.
